(19) Europäisches Patentamt / European Patent Office / Office européen des brevets

(11) **EP 4 383 912 A1**

(12) **EUROPEAN PATENT APPLICATION**
published in accordance with Art. 153(4) EPC

(43) Date of publication:
**12.06.2024 Bulletin 2024/24**

(21) Application number: **22862683.4**

(22) Date of filing: **29.04.2022**

(51) International Patent Classification (IPC):
**H04W 72/12** (2023.01)   **H04L 5/00** (2006.01)
**H04L 1/00** (2006.01)

(52) Cooperative Patent Classification (CPC):
**H04L 1/00; H04L 5/00; H04W 72/12**

(86) International application number:
**PCT/CN2022/090460**

(87) International publication number:
**WO 2023/029540 (09.03.2023 Gazette 2023/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **31.08.2021  CN 202111010280**

(71) Applicant: **Huawei Technologies Co., Ltd.
Shenzhen, Guangdong 518129 (CN)**

(72) Inventors:
• **LI, Xinxian
  Shenzhen, Guangdong 518129 (CN)**
• **PENG, Jinlin
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **METHOD AND DEVICE FOR MULTI-CARRIER SCHEDULING**

(57)   Embodiments of this application provide a multi-carrier scheduling method. A network device configures first DCI for scheduling a plurality of carriers, to reduce PDCCH resource overheads. In addition, when the network device configures the first DCI and other DCI (for example, second DCI), monitoring bit lengths of the two pieces of DCI are aligned, to obtain a monitoring bit length for blind detection. This can reduce blind detection complexity of blind detection performed by a terminal device on DCI, and improve system transmission performance.

FIG. 12

EP 4 383 912 A1

## Description

This application claims priority to Chinese Patent Application No. 202111010280.0, filed with the China National Intellectual Property Administration on August 31, 2021 and entitled "MULTI-CARRIER SCHEDULING METHOD AND APPARATUS", which is incorporated herein by reference in its entirety.

## TECHNICAL FIELD

This application relates to the communication field, and more specifically, to a multi-carrier scheduling method and apparatus.

## BACKGROUND

In a data transmission process, downlink control information (downlink control information, DCI) is carried on a physical downlink control channel (physical downlink control channel, PDCCH), and DCI is for scheduling a carrier through data channel scheduling. In a current technology, one piece of DCI needs to be sent each time a carrier is scheduled. If a plurality of carriers need to be scheduled, a plurality of pieces of DCI need to be sent. One piece of DCI is for scheduling one carrier, and one piece of DCI is transmitted on one PDCCH. Consequently, PDCCH overheads are high, and blind detection complexity is increased due to a large amount of DCI.

## SUMMARY

Embodiments of this application provide a multi-carrier scheduling method, so that PDCCH resource overheads and blind detection complexity can be reduced, to improve system transmission performance.

According to a first aspect, a multi-carrier scheduling method is provided, and includes:

A terminal device receives first configuration information, where the first configuration information is for configuring first downlink control information DCI and second DCI, the first DCI is for scheduling M carriers, the second DCI is for scheduling one carrier, M is an integer greater than 1, and a first monitoring bit length of the first DCI is different from a first monitoring bit length of the second DCI; and

the terminal device monitors the first DCI and the second DCI based on a second monitoring bit length, where the second monitoring bit length is determined based on the first monitoring bit length of the first DCI and the first monitoring bit length of the second DCI.

According to the multi-carrier scheduling method provided in this embodiment of this application, a network device configures, by using the first configuration information, the first DCI for scheduling a plurality of carriers and the second DCI for scheduling a single carrier, and the terminal device may obtain, based on different first monitoring bit lengths of the two pieces of DCI, the second monitoring bit length for blind detection, thereby reducing complexity of blind detection performed by the terminal device on DCI, and improving system transmission performance. In addition, scheduling a plurality of carriers using the first DCI reduces PDCCH resource overheads.

Optionally, the first configuration information is further for configuring third DCI, the third DCI is for scheduling N carriers, N is an integer greater than 1, a first monitoring bit length of the third DCI is different from a third monitoring bit length of the first DCI, and the first monitoring bit length of the first DCI is determined based on the third monitoring bit length of the first DCI and the first monitoring bit length of the third DCI.

That the terminal device monitors the first DCI and the second DCI based on a second monitoring bit length includes:

The terminal device monitors the first DCI, the second DCI, and the third DCI based on the second monitoring bit length.

In some embodiments, the terminal device determines the first monitoring bit length of the first DCI based on the first monitoring bit length of the third DCI and the third monitoring bit length of the first DCI.

The terminal device determines the second monitoring bit length based on the first monitoring bit length of the first DCI and the first monitoring bit length of the second DCI.

According to the multi-carrier scheduling method provided in this embodiment of this application, the network device further configures, by using the first configuration information, the third DCI for scheduling the plurality of carriers, and the terminal device unifies monitoring bit lengths of the first DCI, the second DCI, and the third DCI as the second monitoring bit length that is finally for blind detection. This reduces complexity of blind detection performed by the terminal device on DCI, and improves system transmission performance. In addition, because both the first DCI and the third DCI are DCI for multi-carrier scheduling, a difference between the third monitoring bit length of the first DCI and the first monitoring bit length of the third DCI is not large. Therefore, after the first monitoring bit length of the first DCI is obtained based on the third monitoring bit length of the first DCI and the first monitoring bit length of the third DCI, the second monitoring bit length is obtained based on the first monitoring bit length of the first DCI and the first monitoring bit length of the second DCI. In a process of aligning the third monitoring bit length of the first DCI with the first monitoring bit length of the third DCI, when either of the third monitoring bit length of the first DCI and the first monitoring bit length of the third DCI needs to be used as a reference to perform a zero padding operation on the monitoring bit length of the other DCI, a small quantity of bits are increased. This can avoid a problem that a large quantity of overheads may be increased in a DCI size alignment process.

Optionally, the first configuration information is further for configuring fourth DCI and fifth DCI, and each of the fourth DCI and the fifth DCI is for scheduling one carrier.

That the terminal device monitors the first DCI and the second DCI based on a second monitoring bit length includes:

The terminal device monitors the first DCI, the second DCI, the fourth DCI, and the fifth DCI based on the second monitoring bit length, a fourth monitoring bit length, and a fifth monitoring bit length, where the second monitoring bit length, the fourth monitoring bit length, and the fifth monitoring bit length are different, the fourth monitoring bit length is a monitoring bit length of the fourth DCI, and the fifth monitoring bit length is a monitoring bit length of the fifth DCI.

According to the multi-carrier scheduling method provided in this embodiment of this application, the network device configures, by using the first configuration information, the first DCI for scheduling a plurality of carriers, and the second DCI, the fourth DCI, and the fifth DCI that each are for scheduling a single carrier, and the terminal device unifies monitoring bit lengths of the four pieces of DCI as three monitoring bit lengths finally for blind detection, namely, the second monitoring bit length, the fourth monitoring bit length, and the fifth monitoring bit length, to meet a DCI size budget requirement, to be specific, there are no more than three different DCI sizes. This can reduce complexity of blind detection performed by the terminal device on DCI, and improve system transmission performance.

Optionally, the first configuration information is further for configuring the third DCI, sixth DCI, seventh DCI, eighth DCI, ninth DCI, and tenth DCI, the third DCI is for scheduling the N carriers, N is an integer greater than 1, the sixth DCI, the seventh DCI, the eighth DCI, the ninth DCI, and the tenth DCI each are for scheduling one carrier, the first monitoring bit length of the third DCI is different from the third monitoring bit length of the first DCI, and the first monitoring bit length of the first DCI is determined based on the third monitoring bit length of the first DCI and the first monitoring bit length of the third DCI.

That the terminal device monitors the first DCI, the second DCI, the fourth DCI, and the fifth DCI based on the second monitoring bit length, a fourth monitoring bit length, and a fifth monitoring bit length includes:

The terminal device monitors the first DCI, the second DCI, the third DCI, the fourth DCI, the fifth DCI, the sixth DCI, the seventh DCI, the eighth DCI, the ninth DCI, and the tenth DCI based on the second monitoring bit length, the fourth monitoring bit length, and the fifth monitoring bit length.

In some embodiments, the first monitoring bit length of the second DCI is determined based on a sixth monitoring bit length of the second DCI and a first monitoring bit length of the sixth DCI, the fourth monitoring bit length is determined based on a first monitoring bit length of the fourth DCI and a first monitoring bit length of the seventh DCI, and the fifth monitoring bit length is determined based on a first monitoring bit length of the fifth DCI, a first monitoring bit length of the eighth DCI, a first monitoring bit length of the ninth DCI, and a first monitoring bit length of the tenth DCI.

For example, the terminal device determines the first monitoring bit length of the first DCI based on the first monitoring bit length of the third DCI and the third monitoring bit length of the first DCI;

the terminal device determines the sixth monitoring bit length based on the first monitoring bit length of the second DCI and the first monitoring bit length of the sixth DCI;
the terminal device determines the first monitoring bit length of the second DCI based on the sixth monitoring bit length of the second DCI and the first monitoring bit length of the sixth DCI;
the terminal device determines the second monitoring bit length based on the first monitoring bit length of the second DCI and the first monitoring bit length of the first DCI;
the terminal device determines the fourth monitoring bit length based on the first monitoring bit length of the fourth DCI and the first monitoring bit length of the seventh DCI; and
the terminal device determines the fifth monitoring bit length based on the first monitoring bit length of the fifth DCI, the first monitoring bit length of the eighth DCI, the first monitoring bit length of the ninth DCI, and the first monitoring bit length of the tenth DCI.

In some other embodiments, the first monitoring bit length of the second DCI is determined based on a seventh monitoring bit length of the second DCI, a first monitoring bit length of the eighth DCI, a first monitoring bit length of the ninth DCI, and a first monitoring bit length of the tenth DCI, the fourth monitoring bit length is determined based on a first monitoring bit length of the fourth DCI and a first monitoring bit length of the seventh DCI, and the fifth monitoring bit length is determined based on a first monitoring bit length of the fifth DCI and a first monitoring bit length of the sixth DCI.

For example, the terminal device determines the first monitoring bit length of the first DCI based on the first monitoring bit length of the third DCI and the third monitoring bit length of the first DCI;

the terminal device determines the first monitoring bit length of the second DCI based on the seventh monitoring bit length of the second DCI, the first monitoring bit length of the eighth DCI, the first monitoring bit length of the ninth DCI, and the first monitoring bit length of the tenth DCI;

the terminal device determines the second monitoring bit length based on the first monitoring bit length of the second DCI and the first monitoring bit length of the first DCI;

the terminal device determines the fourth monitoring bit length based on the first monitoring bit length of the fourth DCI and the first monitoring bit length of the seventh DCI; and

the terminal device determines the fifth monitoring bit length based on the first monitoring bit length of the fifth DCI and the first monitoring bit length of the sixth DCI.

According to the multi-carrier scheduling method provided in this embodiment of this application, the network device configures, by using the first configuration information, the first DCI and the third DCI that each are for scheduling a plurality of carriers, and configures, by using the first configuration information, the second DCI, the fourth DCI, the fifth DCI, the sixth DCI, the seventh DCI, the eighth DCI, the ninth DCI, and the tenth DCI that each are for scheduling a single carrier, and

the terminal device unifies monitoring bit lengths of the 10 pieces of DCI as three monitoring bit lengths finally for blind detection, namely, the second monitoring bit length, the fourth monitoring bit length, and the fifth monitoring bit length, to meet a DCI size budget requirement, to be specific, there are no more than three different DCI sizes. This reduces complexity of blind detection performed by the terminal device on DCI, and improves system transmission performance.

Optionally, the second DCI is in any one of the following formats: a DCI format 0_0 in a common search space CSS, a DCI format 1_0 in the CSS, a DCI format 0_0 in a user-specific search space USS, a DCI format 1_0 in the USS, a DCI format 0_1 in the USS, a DCI format 1_1 in the USS, a DCI format 0_2 in the USS, and a DCI format 1_2 in the USS.

Optionally, the first DCI includes at least one of a first-type field and a second-type field, the first-type field includes at least one common field, the second-type field includes at least one independent field, information carried in the common field is common information of data channels transmitted on the M carriers, the independent field includes M sub-fields, the M sub-fields are in a one-to-one correspondence with the M carriers, and information carried in each sub-field is related to a data channel transmitted on a corresponding carrier.

According to the multi-carrier scheduling method provided in this embodiment of this application, the second-type field including at least one independent field and/or the first-type field including at least one common field are configured in the first DCI that is for scheduling a plurality of carriers, to implement a format design of the first DCI.

Optionally, the terminal device receives second configuration information, where the second configuration information includes M pieces of carrier configuration information, the M pieces of carrier configuration information are in a one-to-one correspondence with the M carriers, a bit length of each sub-field of the independent field is determined based on corresponding carrier configuration information, and a bit length of the common field is determined in a predefined manner.

According to the multi-carrier scheduling method provided in this embodiment of this application, the bit lengths of the common field and the independent field are determined by using the M pieces of carrier configuration information corresponding to the M carriers, to determine bit lengths of all fields in the first DCI (that is, original bit lengths of the first DCI). In this way, a monitoring bit length of the first DCI that is for blind detection is determined, thereby implementing a blind detection process of the terminal device.

Optionally, the M carriers include a first carrier, and the second DCI is for scheduling the first carrier.

According to a second aspect, a multi-carrier scheduling method is provided, and includes:

A terminal device receives first configuration information, where the first configuration information is for configuring first downlink control information DCI, the first DCI is for scheduling M carriers, a first carrier in the M carriers corresponds to a first secondary cell, and M is an integer greater than 1; and

the terminal device monitors the first DCI based on a monitoring bit length of the first DCI, where monitoring bit lengths corresponding to the first secondary cell include the monitoring bit length of the first DCI, and a quantity of the monitoring bit lengths corresponding to the first secondary cell is less than or equal to a preset quantity.

According to the multi-carrier scheduling method provided in this embodiment of this application, the monitoring bit length of the first DCI for multi-carrier scheduling is grouped into the monitoring bit lengths corresponding to the first secondary cell, that is, the monitoring bit lengths corresponding to the first secondary cell include the monitoring bit length of the first DCI. In this way, when a network device configures a plurality of pieces of DCI for single-carrier scheduling and a plurality of pieces of DCI for multi-carrier scheduling, monitoring bit lengths of all DCI meet a requirement that the quantity of the monitoring bit lengths corresponding to the first secondary cell is less than or equal to the preset quantity (for example, 3), with no need to align a monitoring bit length of the DCI for multi-carrier scheduling with a monitoring bit length of the DCI for single-carrier scheduling. This reduces complexity of a process of determining a monitoring bit length of DCI, and facilitates implementation.

Optionally, a carrier for carrying the first DCI is any carrier in the M carriers, or a carrier for carrying the first DCI is different from the M carriers.

According to a third aspect, a multi-carrier scheduling method is provided, and includes:

A terminal device receives first configuration information, where the first configuration information is for configuring first downlink control information DCI, the first DCI is for scheduling M carriers, M is an integer greater than 1, the first DCI includes at least one of a first-type field and a second-type field, the first-type field includes at least one common field, the second-type field includes at least one independent field, information carried in the common field is common information of data channels transmitted on the M carriers, the independent field includes M sub-fields, the M sub-fields are in a one-to-one correspondence with the M carriers, and information carried in each sub-field is related to a data channel transmitted on a corresponding carrier; and
the terminal device monitors the first DCI.

According to the multi-carrier scheduling method provided in this embodiment of this application, the second-type field including at least one independent field and/or the first-type field including at least one common field are configured in the first DCI that is for scheduling a plurality of carriers, to implement a format design of the first DCI.

Optionally, the method further includes:
The terminal device receives second configuration information, where the second configuration information includes M pieces of carrier configuration information, the M pieces of carrier configuration information are in a one-to-one correspondence with the M carriers, a bit length of each sub-field of the independent field is determined based on corresponding carrier configuration information, and a bit length of the common field is determined in a predefined manner.

According to the multi-carrier scheduling method provided in this embodiment of this application, the bit lengths of the common field and the independent field are determined by using the M pieces of carrier configuration information corresponding to the M carriers, to determine bit lengths of all fields in the first DCI (that is, original bit lengths of the first DCI). In this way, a monitoring bit length of the first DCI that is for blind detection is determined, thereby implementing a blind detection process of the terminal device.

According to a fourth aspect, a multi-carrier scheduling method is provided, and includes:

A network device sends first configuration information, where the first configuration information is for configuring first downlink control information DCI and second DCI, the first DCI is for scheduling M carriers, the second DCI is for scheduling one carrier, M is an integer greater than 1, and a first monitoring bit length of the first DCI is different from a first monitoring bit length of the second DCI; and
the network device sends at least one piece of the first DCI and the second DCI based on a second monitoring bit length, where the second monitoring bit length is determined based on the first monitoring bit length of the first DCI and a second monitoring bit length of the second DCI.

Optionally, the first configuration information is further for configuring third DCI, the third DCI is for scheduling N carriers, N is an integer greater than 1, a first monitoring bit length of the third DCI is different from a third monitoring bit length of the first DCI, and the first monitoring bit length of the first DCI is determined based on the third monitoring bit length of the first DCI and the first monitoring bit length of the third DCI.

That the network device sends at least one piece of the first DCI and the second DCI based on a second monitoring bit length includes:
The network device sends at least one piece of the first DCI, the second DCI, and the third DCI based on the second monitoring bit length.

In some embodiments, the network device determines the first monitoring bit length of the first DCI based on the first monitoring bit length of the third DCI and the third monitoring bit length of the first DCI.

The network device determines the second monitoring bit length based on the first monitoring bit length of the first DCI and the first monitoring bit length of the second DCI.

Optionally, the first configuration information is further for configuring fourth DCI and fifth DCI, and each of the fourth DCI and the fifth DCI is for scheduling one carrier.

That the network device sends at least one piece of the first DCI and the second DCI based on a second monitoring bit length includes:
The network device sends at least one piece of the first DCI, the second DCI, the fourth DCI, and the fifth DCI based on at least one of the second monitoring bit length, a fourth monitoring bit length, and a fifth monitoring bit length, where the second monitoring bit length, the fourth monitoring bit length, and the fifth monitoring bit length are different, the fourth monitoring bit length is a monitoring bit length of the fourth DCI, and the fifth monitoring bit length is a monitoring bit length of the fifth DCI.

Optionally, the first configuration information is further for configuring the third DCI, sixth DCI, seventh DCI, eighth DCI, ninth DCI, and tenth DCI, the third DCI is for scheduling the N carriers, N is an integer greater than 1, the sixth DCI, the seventh DCI, the eighth DCI, the ninth DCI, and the tenth DCI each are for scheduling one carrier, the first monitoring bit length of the third DCI is different from the first monitoring bit length of the first DCI, and the first monitoring bit length of the first DCI is determined based on the third monitoring bit length of the first DCI and the first monitoring bit length of the third DCI.

That the network device sends at least one piece of the first DCI, the second DCI, the fourth DCI, and the fifth DCI based on at least one of the second monitoring bit length, a fourth monitoring bit length, and a fifth monitoring bit length includes:

The network device sends at least one piece of the first DCI, the second DCI, the third DCI, the fourth DCI, the fifth DCI, the sixth DCI, the seventh DCI, the eighth DCI, the ninth DCI, and the tenth DCI based on at least one of the second monitoring bit length, the fourth monitoring bit length, and the fifth monitoring bit length.

In some embodiments, the first monitoring bit length of the second DCI is determined based on a sixth monitoring bit length of the second DCI and a first monitoring bit length of the sixth DCI, the fourth monitoring bit length is determined based on a first monitoring bit length of the fourth DCI and a first monitoring bit length of the seventh DCI, and the fifth monitoring bit length is determined based on a first monitoring bit length of the fifth DCI, a first monitoring bit length of the eighth DCI, a first monitoring bit length of the ninth DCI, and a first monitoring bit length of the tenth DCI.

For example, the network device determines the first monitoring bit length of the first DCI based on the first monitoring bit length of the third DCI and the third monitoring bit length of the first DCI;

the network device determines the sixth monitoring bit length based on the first monitoring bit length of the second DCI and the first monitoring bit length of the sixth DCI;
the network device determines the first monitoring bit length of the second DCI based on the sixth monitoring bit length of the second DCI and the first monitoring bit length of the sixth DCI;
the network device determines the second monitoring bit length based on the first monitoring bit length of the second DCI and the first monitoring bit length of the first DCI;
the network device determines the fourth monitoring bit length based on the first monitoring bit length of the fourth DCI and the first monitoring bit length of the seventh DCI; and
the network device determines the fifth monitoring bit length based on the first monitoring bit length of the fifth DCI, the first monitoring bit length of the eighth DCI, the first monitoring bit length of the ninth DCI, and the first monitoring bit length of the tenth DCI.

In some other embodiments, the first monitoring bit length of the second DCI is determined based on a seventh monitoring bit length of the second DCI, a first monitoring bit length of the eighth DCI, a first monitoring bit length of the ninth DCI, and a first monitoring bit length of the tenth DCI, the fourth monitoring bit length is determined based on a first monitoring bit length of the fourth DCI and a first monitoring bit length of the seventh DCI, and the fifth monitoring bit length is determined based on a first monitoring bit length of the fifth DCI and a first monitoring bit length of the sixth DCI.

For example, the network device determines the first monitoring bit length of the first DCI based on the first monitoring bit length of the third DCI and the third monitoring bit length of the first DCI;

the network device determines the first monitoring bit length of the second DCI based on the seventh monitoring bit length of the second DCI, the first monitoring bit length of the eighth DCI, the first monitoring bit length of the ninth DCI, and the first monitoring bit length of the tenth DCI;
the network device determines the second monitoring bit length based on the first monitoring bit length of the second DCI and the first monitoring bit length of the first DCI;
the network device determines the fourth monitoring bit length based on the first monitoring bit length of the fourth DCI and the first monitoring bit length of the seventh DCI; and
the network device determines the fifth monitoring bit length based on the first monitoring bit length of the fifth DCI and the first monitoring bit length of the sixth DCI.

Optionally, the second DCI is in any one of the following formats: a DCI format 0_0 in a common search space CSS, a DCI format 1_0 in the CSS, a DCI format 0_0 in a user-specific search space USS, a DCI format 1_0 in the USS, a DCI format 0_1 in the USS, a DCI format 1_1 in the USS, a DCI format 0_2 in the USS, and a DCI format 1_2 in the USS.

Optionally, the first DCI includes at least one of a first-type field and a second-type field, the first-type field includes at least one common field, the second-type field includes at least one independent field, information carried in the common field is common information of data channels transmitted on the M carriers, the independent field includes M sub-fields, the M sub-fields are in a one-to-one correspondence with the M carriers, and information carried in each sub-field is related to a data channel transmitted on a corresponding carrier.

Optionally, the method further includes:
sending, by the network device, second configuration information, where the second configuration information includes M pieces of carrier configuration information, the M pieces of carrier configuration information are in a one-to-one correspondence with the M carriers, a bit length of each sub-field of the independent field is determined based on corresponding carrier configuration information, and a bit length of the common field is determined according to a predefined rule.

Optionally, the M carriers include a first carrier, and the second DCI is for scheduling the first carrier.

According to a fifth aspect, a multi-carrier scheduling method is provided, and includes:

A network device sends first configuration information, where the first configuration information is for configuring first downlink control information DCI, the first DCI is for scheduling M carriers, a first carrier in the M carriers corresponds to a first secondary cell, and M is an integer greater than 1; and
the network device sends the first DCI based on a monitoring bit length of the first DCI, where monitoring bit lengths corresponding to the first secondary cell include the monitoring bit length of the first DCI, and a quantity of the monitoring bit lengths corresponding to the first secondary cell is less than or equal to a preset quantity.

Optionally, a carrier for carrying the first DCI is any carrier in the M carriers, or a carrier for carrying the first DCI is different from the M carriers.

According to a sixth aspect, a multi-carrier scheduling method is provided, and includes:

A network device sends first configuration information, where the first configuration information is for configuring first downlink control information DCI, the first DCI is for scheduling M carriers, M is an integer greater than 1, the first DCI includes at least one of a first-type field and a second-type field, the first-type field includes at least one common field, the second-type field includes at least one independent field, information carried in the common field is common information of data channels transmitted on the M carriers, the independent field includes M sub-fields, the M sub-fields are in a one-to-one correspondence with the M carriers, and information carried in each sub-field is related to a data channel transmitted on a corresponding carrier; and
the network device sends the first DCI.

Optionally, the method further includes:
The network device sends second configuration information, where the second configuration information includes M pieces of carrier configuration information, the M pieces of carrier configuration information are in a one-to-one correspondence with the M carriers, a bit length of each sub-field of the independent field is determined based on corresponding carrier configuration information, and a bit length of the common field is determined in a predefined manner.

According to a seventh aspect, a multi-carrier scheduling apparatus is provided. The apparatus is configured to perform the method according to any one of the first aspect, the second aspect, or the third aspect. Specifically, the apparatus may include a module configured to perform any one of the possible implementations of the first aspect, the second aspect, or the third aspect.

According to an eighth aspect, a multi-carrier scheduling apparatus is provided, and includes a processor. The processor is coupled to a memory, and may be configured to execute instructions in the memory, to implement the method according to any one of the possible implementations of the first aspect, the second aspect, or the third aspect. Optionally, the apparatus further includes the memory. Optionally, the apparatus further includes a communication interface, and the processor is coupled to the communication interface.

According to a ninth aspect, a computer-readable storage medium is provided. The computer-readable storage medium stores a computer program. When the computer program is executed by an apparatus, the apparatus is enabled to implement the method according to any one of the possible implementations of the first aspect, the second aspect, or the third aspect.

According to a tenth aspect, a computer program product including instructions is provided. When the instructions are executed by a computer, an apparatus is enabled to implement the method according to any one of the possible implementations of the first aspect, the second aspect, or the third aspect.

According to an eleventh aspect, a chip is provided, and includes an input interface, an output interface, a processor, and a memory. The input interface, the output interface, the processor, and the memory are connected by using an internal connection path, the processor is configured to execute code in the memory; and when the code is executed, the processor is configured to perform the method according to any one of the possible implementations of the first aspect, the second aspect, or the third aspect.

**BRIEF DESCRIPTION OF DRAWINGS**

FIG. 1 is a schematic diagram of a structure of a communication system according to an embodiment of this application;

FIG. 2 is a schematic scenario diagram of carrier aggregation according to an embodiment of this application;

FIG. 3 and FIG. 4 are schematic scenario diagrams of multi-carrier scheduling according to an embodiment of this application;

FIG. 5 is a schematic diagram of aligning a DCI size of a DCI format 0_0 with a DCI size of a DCI format 1_0 in a CSS according to an embodiment of this application;

FIG. 6 is a schematic diagram of aligning a DCI size of a DCI format 0_0 with a DCI size of a DCI format 1_0 in a USS according to an embodiment of this application;

FIG. 7 is a schematic diagram of aligning a DCI size of a DCI format 0_1 or a DCI format 1_1 of a terminal device in a USS with a DCI size of a DCI format 0_0 or a DCI format 1_0 of another terminal device in the USS according to an embodiment of this application;

FIG. 8 is a schematic diagram of aligning a DCI size of a DCI format 0_3 with a DCI size of a DCI format 1_3 in a USS according to an embodiment of this application;

FIG. 9 is a schematic diagram of aligning a DCI size of a DCI format 0_1 with a DCI size of a DCI format 1_1 in a USS according to an embodiment of this application;

FIG. 10 is a schematic diagram of aligning a DCI size of a DCI format 0_2 with a DCI size of a DCI format 1_2 in a USS according to an embodiment of this application;

FIG. 11 is a schematic diagram of scheduling a plurality of carriers by using mDCI according to an embodiment of this application;

FIG. 12 is a schematic diagram of a structure of a multi-carrier scheduling method 100 according to an embodiment of this application;

FIG. 13 is a schematic diagram of a structure of a multi-carrier scheduling method 200 according to an embodiment of this application;

FIG. 14 is a schematic diagram of a structure of a multi-carrier scheduling method 300 according to an embodiment of this application;

FIG. 15 is a schematic block diagram of a multi-carrier scheduling apparatus 400 according to an embodiment of this application; and

FIG. 16 is a schematic diagram of a structure of a multi-carrier scheduling apparatus 500 according to an embodiment of this application.

**DESCRIPTION OF EMBODIMENTS**

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system, a new radio (new radio, NR) system, or a future 6th generation (6th generation, 6G) system.

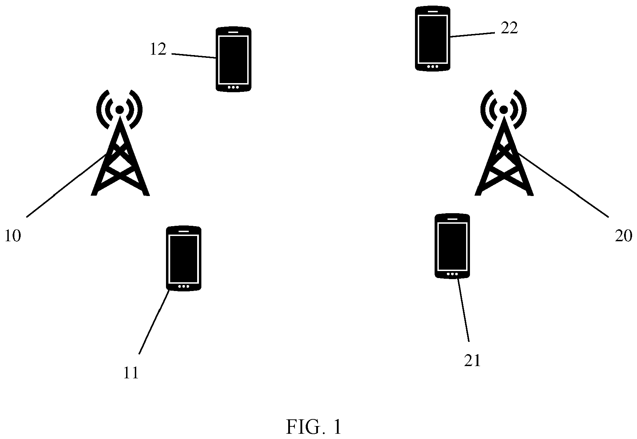

FIG. 1 is a schematic diagram of a structure of a communication system according to an embodiment of this application. The communication system includes one or more network devices (for ease of description, a network device 10 and a network device 20 are shown in the figure), and one or more terminal devices that communicate with the one or more network devices. In FIG. 1, a terminal device 11 and a terminal device 12 communicate with the network device 10, and a terminal device 21 and a terminal device 22 communicate with the network device 20.

In embodiments of this application, the terminal device is a device having a wireless transceiver function, and may be deployed on land, including an indoor device or an outdoor device, a handheld device, a wearable device, or a vehicle-mounted device, may be deployed on water (for example, on a ship), or may be deployed in the air (for example, on an airplane, a balloon, or a satellite). The terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. An application scenario is not limited in embodiments of this application. The terminal device sometimes may also be referred to as a terminal, user equipment (user equipment, UE), an access terminal device, a vehicle-mounted terminal, an industrial control terminal, a UE unit, a UE station, a mobile station, a remote station, a remote terminal device, a mobile device, a UE terminal device, a terminal device, a wireless communication device, a UE agent, a UE apparatus, or the like. The terminal device may also be fixed or mobile.

The network device in embodiments of this application may be a device configured to communicate with the terminal device, and may be any device having a wireless transceiver function. The network device includes but is not limited to: an evolved NodeB (NodeB or eNB or e-NodeB, evolved NodeB) in LTE, a gNodeB (gNodeB or gNB) or a transmission reception point (transmission receiving point/transmission reception point, TRP) in NR, an access node in a Wi-Fi system, a wireless relay node, a wireless backhaul node, and the like. The base station may be a macro base station, a micro base station, a picocell base station, a small cell, a relay station, a balloon station, or the like. A plurality of base stations may support the foregoing networks using a same technology, or may support the foregoing networks using different technologies. The base station may include one or more co-site or non-co-site TRPs. The network device may alternatively be a radio controller, a CU, and/or a DU in a cloud radio access network (cloud radio access network, CRAN) scenario. The network device may alternatively be a server, a wearable device, a vehicle-mounted device, or the like. That the network device is a base station is used as an example for description below. The plurality of network devices may be base stations of a same type, or may be base stations of different types. The base station may communicate with a terminal device, or may communicate with a terminal device via a relay station. The terminal device may communicate with a plurality of base stations using different technologies. For example, the terminal device may communicate with a base station supporting an LTE network, or may communicate with a base station supporting a 5G network, or may support dual connectivity to a base station supporting an LTE network and a base station supporting a 5G network.

For ease of understanding, the following first describes related terms in embodiments of this application.

1. PDCCH

A physical downlink control channel (physical downlink control channel, PDCCH) carries downlink control information (downlink control information, DCI) sent by a network device to a terminal device. The DCI includes the following content: control information related to uplink data transmission, such as resource assignment information for data transmission, format information of an uplink/downlink resource in a slot, and power control information of an uplink data channel and a signal; information about a dynamic slot configuration; and resource preemption information. After receiving the DCI, the terminal device sends and receives data based on the DCI, or performs a corresponding operation.

2. Control channel element

A control channel element (control channel element, CCE) is a basic unit of a PDCCH, and occupies six resource blocks (resource block, RB) in frequency domain.

A given PDCCH may be composed of 1, 2, 4, 8, and 16 CCEs, and a specific value is determined by a DCI size (DCI size) and a required coding rate. A quantity of CCEs composing a PDCCH is referred to as an aggregation level (aggregation level, AL). A network device may adjust an aggregation level of a PDCCH based on a radio channel status in actual transmission, to implement adaptive link transmission. For example, compared with a better radio channel status, in a poorer radio channel status, a quantity of CCEs composing a PDCCH is larger, in other words, a PDCCH aggregation level is higher.

(3) Search space (search space)

A search space is a set of PDCCH candidates (PDCCH candidate) at an aggregation level, and a PDCCH to be blindly detected is referred to as a PDCCH candidate. Because an aggregation level of a PDCCH actually sent by a network device varies with time, and no related signaling is notified to the terminal device, the terminal device needs to blindly detect the PDCCH at different aggregation levels.

To reduce complexity of blind detection performed by the terminal device, a set of CCEs for blind detection needs to be limited. A start CCE sequence number of a PDCCH candidate needs to be exactly divided by a quantity of CCEs of the PDCCH candidate. For example, a PDCCH candidate at an aggregation level 2 can start only from a CCE sequence number that can be exactly divided by 2, and a same rule is applicable to a search space at another aggregation level. In addition, a CCE set of a search space may be further determined based on a higher-layer parameter in search space set configuration information and according to a predefined rule.

A protocol divides the search space into a common search space (common search space, CSS) and a UE-specific search space (UE specific search space, USS), and blindly detects different information in different search spaces.

4. Blind detection

DCI for scheduling different data transmission may be scrambled by using different radio network temporary identifiers (radio network temporary identifier, RNTI). For example, the RNTI may include a cell RNTI (cell-RNTI, C-RNTI), an random access RNTI (random access-RNTI, RA-RNTI), a paging RNTI (paging-RNTI, P-RNTI), and the like. The C-RNTI may be for scrambling DCI that is for scheduling user data, the RA-RNTI may be for scrambling DCI that schedules a random access response message sent by a network device to a terminal device, and the P-RNTI may be for scrambling a paging message.

The C-RNTI is used as an example. PDCCHs of different users may be distinguished by using C-RNTIs corresponding to the PDCCHs. That is, cyclic redundancy check (cyclic redundancy check, CRC) of DCI is masked by using the C-RNTI. Usually, a user does not know a specific format of currently sent DCI, or does not know a PDCCH candidate on which DCI required by the user is located. However, the user knows what information the user expects currently. For different expected information, the user performs CRC check by using a corresponding RNTI and configuration information on a PDCCH candidate configured by the network device. If the CRC check succeeds, the user knows that the DCI is required by the user, and also knows a corresponding DCI format, to further parse content of the DCI.

In a blind detection process, the terminal device blindly detects all PDCCH candidates in a search space, and the terminal device blindly detects different information in different search spaces. For example, information such as paging, SI, and a RACH response needs to be monitored by all terminal devices. For such information, the terminal device performs blind detection in a CSS. For example, information such as an uplink or downlink scheduling instruction is related to a specific terminal device, and needs to be monitored by only the specific terminal device. For such information, the terminal device performs blind detection in a USS. In addition, in a blind detection process, the terminal device may determine a DCI size based on configuration information, and perform blind detection based on the DCI size. In this way, blind detection complexity can be reduced.

5. DCI format (DCI format)

For data transmission, currently, NR mainly supports three series of DCI formats: a DCI format x_0, a DCI format x_1, and a DCI format x_2. Values of x in different series of DCI formats are different. For example, in the DCI format x_0 series, a value of x may be 0 or 1, and correspondingly, included DCI formats are a DCI format 0_0 and a DCI format 1_0; in the DCI format x_1 series, a value of x may be 0 or 1, and correspondingly, included DCI formats are a DCI format 0_1 and a DCI format 1_1; and in the DCI format x_2 series, a value of x may be 0 or 1, and correspondingly, included DCI formats are a DCI format 0_2 and a DCI format 1_2. It should be understood that the foregoing three series of DCI formats are merely examples for description, and each series of DCI formats may have more DCI formats. For example, the DCI format x_2 series may further include formats such as a DCI format 2_2, a DCI format 3_2, and a DCI format 4_2.

In conclusion, currently, the NR mainly supports the following six DCI formats: the DCI format 0_0, the DCI format 1_0, the DCI format 0_1, the DCI format 1_1, the DCI format 0_2, and the DCI format 1_2. The DCI format 0_0 is for scheduling a physical uplink shared channel (physical uplink shared channel, PUSCH) in a cell. The DCI format 0_1 is for scheduling one or more PUSCHs in a serving cell, or indicates configured grant downlink feedback information (configured grant downlink feedback information, CG-DFI) to UE. The DCI format 0_2 is for scheduling a PUSCH in a serving cell. The DCI format 1_0 is for scheduling a physical downlink shared channel (physical downlink shared channel, PDSCH) in a downlink cell. The DCI format 1_1 is for scheduling a PDSCH in a cell. The DCI format 1_2 is for scheduling a PDSCH in a cell. DCI in different formats includes fields with different content.

According to an uplink and a downlink, the DCI in the foregoing six formats may be classified into two types: DCI for scheduling a physical uplink shared channel (physical uplink shared channel, PUSCH) and DCI for scheduling a physical downlink shared channel (physical downlink shared channel, PDSCH). The DCI format 0_0, the DCI format 0_1, and the DCI format 0_2 are DCI for scheduling the PUSCH, and the DCI format 1_0, the DCI format 1_1, and the DCI format 1_2 are DCI for scheduling the PDSCH.

Alternatively, based on functions, the DCI in the foregoing six formats may be classified into two types: fallback DCI (fallback DCI) and non-fallback DCI (non-fallback DCI). The DCI format 0_0 and the DCI format 1_0 are fallback DCI, and the DCI format 0_1, the DCI format 1_1, the DCI format 0_2, and the DCI format 1_2 are non-fallback DCI.

In some embodiments, at least some fields included in the foregoing six DCI formats may be separately shown in Table 1 to Table 6.

**Table 1 DCI format 0_0**

| Field information | Quantity of bits |
|---|---|
| Identifier for DCI formats (identifier for DCI formats) | 1 (specifically, 0, indicating scheduling uplink) |

(continued)

| Field information | Quantity of bits |
|---|---|
| Frequency domain resource assignment (frequency domain resource assignment) | $\left\lceil \log_2\left(N_{RB}^{UL,BWP}\left(N_{RB}^{UL,BWP}+1\right)/2\right)\right\rceil$ |
| Time domain resource assignment (time domain resource assignment) | 4 |
| Frequency hopping flag (frequency hopping flag) | 1 |
| Modulation and coding scheme (modulation and coding scheme) | 5 |
| New data indicator (new data indicator) | 1 |
| Redundancy version (redundancy version) | 2 |
| HARQ process number (HARQ process number) | 4 |
| TPC command for scheduled PUSCH (TPC command for scheduled PUSCH) | 2 |
| Additional field (padding bits) (optional) | x (0 or 1, if present, included in x bits) |
| Information bit size of DCI | 20+A+x |

In the foregoing DCI format 0_0, except the frequency domain resource assignment (frequency domain resource assignment, FDRA) field, lengths of other fields are fixed, and do not need to be configured through radio resource control (radio resource control, RRC) signaling. Therefore, an information bit size of the DCI format 0_0 is related only to the FDRA field, and the FDRA field of the DCI format 0_0 is related only to a value of $N_{RB}^{UL,BWP}$.

**Table 2 DCI format 1_0**

| Field information | Quantity of bits |
|---|---|
| Identifier for DCI formats (identifier for DCI formats) | 1 (specifically, 1, indicating scheduling downlink) |
| Frequency domain resource assignment (frequency domain resource assignment) | $\left\lceil \log_2\left(N_{RB}^{DL,BWP}\left(N_{RB}^{DL,BWP}+1\right)/2\right)\right\rceil$ |
| Time domain resource assignment (time domain resource assignment) | 4 |
| VRB-to-PRB mapping (VRB-to-PRB mapping) | 1 |
| Modulation and coding scheme (modulation and coding scheme) | 5 |
| New data indicator (new data indicator) | 1 |
| Redundancy version (redundancy version) | 2 |
| HARQ process number (HARQ process number) | 4 |
| Downlink assignment index (downlink assignment index) | 2 |
| TPC command for scheduled PUCCH (TPC command for scheduled PUCCH) | 2 |
| PUCCH resource indicator (PUCCH resource indicator) | 3 |
| PDSCH-to-HARQ feedback timing indicator (PDSCH-to-HARQ_feedback timing indicator) | 3 |
| Information bit size of DCI | 28+A |

The DCI format 1_0 is a DCI format when scrambling is performed by using a C-RNTI and the FDRA field is not all 1s, or a DCI format when scrambling is performed by using a CS-RNTI. In the DCI format 1_0, lengths of other fields except the FDRA field are fixed and do not need to be configured through RRC signaling. Therefore, an information bit size of the DCI format 0_1 is related only to the FDRA field, and the FDRA field of the DCI format 1_0 is related only to a value of $N_{\mathrm{RB}}^{\mathrm{DL,BWP}}$ .

In conclusion, in the fallback DCI, a bit length and content of each field except the FDRA field are not affected by an RRC configuration, and are determined. Therefore, only a length of the FDRA field affects the bit length in the fallback DCI. Specifically, a parameter that affects a length of the DCI format 0_0 is $N_{\mathrm{RB}}^{\mathrm{UL,BWP}}$ , and a parameter that affects a length of the DCI format 1_0 is $N_{\mathrm{RB}}^{\mathrm{DL,BWP}}$ . An initial uplink BWP (initial UL BWP) or an active uplink BWP (active UL BWP) may be used for $N_{\mathrm{RB}}^{\mathrm{UL,BWP}}$ . Similarly, an initial downlink BWP or an active downlink BWP may be used for $N_{\mathrm{RB}}^{\mathrm{DL,BWP}}$ , depending on a scenario corresponding to the DCI, for example, a common search space (common search space, CSS) or a user-specific search space (UE-specific search space, USS). As a result, the DCI format 0_0 and the DCI format 1_0 each have two lengths. Specifically, the DCI format 0_0 has one size in the CSS, the DCI format 0_0 has one size in the USS, and has two lengths in total. The DCI format 1_0 has one size in the CSS, and the DCI format 1_0 has one size in the USS, and has two sizes in total.

**Table 3 DCI format 0_1**

| Field information | Quantity of bits |
|---|---|
| Identifier for DCI formats (identifier for DCI formats) | 1 (specifically, 0, indicating scheduling uplink) |
| Carrier indicator (carrier indicator) | 0 or 3 |
| Uplink carrier or secondary uplink carrier indicator (UL/SUL indicator) | 0 or 1 |
| Bandwidth part indicator (bandwidth part indicator) | 0, 1, or 2 |
| Frequency domain resource assignment (frequency domain resource assignment) | RA type 0: $N_{\mathrm{RBG}}$ <br><br> RA type 1: $\left\lceil \log_2(N_{\mathrm{RB}}^{\mathrm{UL,BWP}}(N_{\mathrm{RB}}^{\mathrm{UL,BWP}}+1)/2) \right\rceil$ <br><br> RA types 0 and 1: $\max(\left\lceil \log_2(N_{\mathrm{RB}}^{\mathrm{UL,BWP}}(N_{\mathrm{RB}}^{\mathrm{UL,BWP}}+1)/2) \right\rceil , \left\lceil N_{\mathrm{RB}}^{\mathrm{UL,BWP}}/P \right\rceil)+1$ |
| Time domain resource assignment (time domain resource assignment) | 0, 1, 2, 3, or 4 |
| Modulation and coding scheme (modulation and coding scheme) | 5 |
| New data indicator (new data indicator) | 1 |
| Redundancy version (redundancy version) | 2 |
| HARQ process number (HARQ process number) | 4 |
| 1st downlink assignment index (1st downlink assignment index) | 1 or 2 |

(continued)

| Field information | Quantity of bits |
|---|---|
| 2nd downlink assignment index (2nd downlink assignment index) | 0 or 2 |
| TPC command for scheduled PUSCH (TPC command for scheduled PUSCH) | 2 |
| SRS resource indicator (SRS resource indicator) | $\left\lceil \log_2(\sum_{k=1}^{L_{\max}} \binom{N_{SRS}}{k}) \right\rceil$ or $\left\lceil \log_2(N_{SRS}) \right\rceil$ |
| Precoding information and number of layers (precoding information and number of layers) | 0, 1, 2, 3, 4, 5, or 6 |
| Antenna ports (antenna ports) | 2, 3, 4, 5, or 6 |
| SRS request (SRS request) | 2 |
| CSI request (CSI request) | 0, 1, 2, 3, 4, 5, or 6 |
| CBG transmission information (CBG transmission information) | 0, 2, 4, 6, or 8 |
| PTRS-DMRS association (PTRS-DMRS association) | 0 or 2 |
| Beta offset indicator (beta_offset indicator) | 0 or 2 |
| DMRS sequence initialization (DMRS sequence initialization) | 0 or 1 |
| Uplink shared channel indicator (UL-SCH indicator) | 1 |
| Information bit size of DCI | Depending on a quantity of bits in a plurality of fields |

**Table 4 DCI format 1_1**

| Field information | Quantity of bits |
|---|---|
| Identifier for DCI formats (identifier for DCI formats) | 1 (specifically, 1, indicating scheduling downlink) |
| Carrier indicator (carrier indicator) | 0 or 3 |
| Bandwidth part indicator (bandwidth part indicator) | 0, 1, or 2 |
| Frequency domain resource assignment (frequency domain resource assignment) | RA type 0: $N_{RBG}$<br><br>RA type 1: $\left\lceil \log_2(N_{RB}^{DL,BWP}(N_{RB}^{DL,BWP}+1)/2) \right\rceil$<br><br>RA types 0 and 1: $\max(\left\lceil \log_2(N_{RB}^{DL,BWP}(N_{RB}^{DL,BWP}+1)/2) \right\rceil, N_{RBG}) + 1$ |
| Time domain resource assignment (time domain resource assignment) | 0, 1, 2, 3, or 4 |
| VRB-to-PRB mapping (VRB-to-PRB mapping) | 0 or 1 |

(continued)

| Field information | Quantity of bits |
|---|---|
| PRB bundling size indicator (PRB bundling size indicator) | 0 or 1 |
| Rate matching indicator (rate matching indicator) | 0, 1, or 2 |
| ZP-CSI-RS trigger (ZP-CSI-RS trigger) | 0, 1, or 2 |
| Modulation and coding scheme (modulation and coding scheme) for transport block 1 | 5 |
| New data indicator (new data indicator) for transport block 1 | 1 |
| Redundancy version (redundancy version) for transport block 1 | 2 |
| Modulation and coding scheme (modulation and coding scheme) for transport block 2 | 5 |
| New data indicator (new data indicator) for transport block 2 | 1 |
| Redundancy version (redundancy version) for transport block 2 | 2 |
| HARQ process number (HARQ process number) | 4 |
| Downlink assignment index (downlink assignment index) | 0, 2, or 4 |
| PDSCH-to-HARQ _feedback timing indicator | 0, 1, 2, or 3 |
| Antenna ports (antenna ports) | 4, 5, or 6 |
| Transmission configuration indication (transmission configuration indication) | 0 or 3 |
| SRS request (SRS request) | 2 or 3 |
| CBG transmission information (CBG transmission information) | 0, 2, 4, 6, or 8 |
| CBG flushing out information (CBG flushing out information) | 0 or 1 |
| DMRS sequence initialization (DMRS sequence initialization) | 0 or 1 |
| Information bit size of DCI | Depending on a quantity of bits in a plurality of fields |

In the DCI format 0_1 and the DCI format 1_1, in addition to the FDRA field, lengths of many fields are not fixed, and need to be configured by using RRC signaling, for example, a carrier indicator, a bandwidth part indicator, and a time domain resource assignment field. Therefore, information bit sizes of the DCI format 0_1 and the DCI format 1_1 are not only related to a value of $N_{\mathrm{RB}}^{\mathrm{UL,BWP}}$, but are flexible and variable.

**Table 5 DCI format 0_2**

| Field information | Quantity of bits |
|---|---|
| Identifier for DCI formats (identifier for DCI formats) | 1 (specifically, 0, indicating scheduling uplink) |
| Carrier indicator (carrier indicator) | 0, 1, or 2 |

(continued)

| Field information | Quantity of bits |
|---|---|
| Uplink carrier or secondary uplink carrier indicator (UL/SUL indicator) | 0 or 1 |
| Bandwidth part indicator (bandwidth part indicator) | 0, 1, or 2 |
| Frequency domain resource assignment (frequency domain resource assignment) | RA type 0: $N_{RBG}$<br><br>RA type 1: $\left\lceil \log_2\left(N_{RBG,K1}\left(N_{RBG,K1}+1\right)/2\right) \right\rceil$<br><br>RA types 0 and 1:<br>max($\log_2(N_{RBG,K1}(NRBG,K1+1)/2)$, $N_{RBG}$)+1 |
| Time domain resource assignment (time domain resource assignment) | 0, 1, 2, 3, 4, 5, or 6 |
| Modulation and coding scheme (modulation and coding scheme) | 5 |
| New data indicator (new data indicator) | 1 |
| Redundancy version (redundancy version) | 0, 1, or 2 |
| HARQ process number (HARQ process number) | 0, 1, 2, 3, or 4 |
| Downlink assignment index (downlink assignment index) | 0, 1, 2, or 4 |
| Frequency hopping flag (Frequency hopping flag) | 0 or 1 |
| TPC command for scheduled PUSCH (TPC command for scheduled PUSCH) | 2 |
| SRS resource indicator (SRS resource indicator) | |
| | $\left\lceil \log_2\left( \overline{\sum_{k=1}^{\min\{L_{max},N_{SRS}\}} \binom{N_{SRS}}{k}} \right) \right\rceil$ or<br><br>$\left\lceil \log_2 N_{SRS} \right\rceil$ |
| Precoding information and number of layers (precoding information and number of layers) | 0, 1, 2, 3, 4, 5, or 6 |
| Antenna ports (antenna ports) | 0, 2, 3, 4, or 5 |
| SRS request (SRS request) | 0, 1, 2, or 3 |
| CSI request (CSI request) | 0, 1, 2, 3, 4, 5, or 6 |
| Open-loop power control parameter set indication (Open-loop power control parameter set indication) | 0, 1, or 2 |
| PTRS-DMRS association (PTRS-DMRS association) | 0 or 2 |
| Beta offset indicator (beta_offset indicator) | 0 or 2 |
| DMRS sequence initialization (DMRS sequence initialization) | 0 or 1 |
| Uplink shared channel indicator (UL-SCH indicator) | 1 |
| Invalid symbol pattern indicator (Invalid symbol pattern indicator) | 0 or 1 |
| Priority indicator (Priority indicator) | 0 or 1 |
| Cyclic redundancy check (Cyclic Redundancy Check) | 24 |

**Table 6 DCI format 1_2**

| Field information | Quantity of bits |
| --- | --- |
| Identifier for DCI formats (identifier for DCI formats) | 1 (specifically, 1, indicating scheduling downlink) |
| Carrier indicator (carrier indicator) | 0, 1, 2, or 3 |
| Bandwidth part indicator (bandwidth part indicator) | 0, 1, or 2 |
| Frequency domain resource assignment (frequency domain resource assignment) | RA type 0: $N_{\mathrm{RBG}}$ <br><br> RA type 1: $\left\lceil \log_2 (N_{\mathrm{RB}}^{\mathrm{DL,BWP}} (N_{\mathrm{RB}}^{\mathrm{DL,BWP}} + 1) \big/ 2) \right\rceil$ <br> RA types 0 and 1: <br><br> $\max(\left\lceil \log_2 (N_{\mathrm{RB}}^{\mathrm{DL,BWP}} (N_{\mathrm{RB}}^{\mathrm{DL,BWP}} + 1) \big/ 2) \right\rceil, N_{\mathrm{RBG}}) + 1$ |
| Time domain resource assignment (time domain resource assignment) | 0, 1, 2, 3, or 4 |
| VRB-to-PRB mapping (VRB-to-PRB mapping) | 0 or 1 |
| PRB bundling size indicator (PRB bundling size indicator) | 0 or 1 |
| Rate matching indicator (rate matching indicator) | 0, 1, or 2 |
| ZP-CSI-RS trigger (ZP-CSI-RS trigger) | 0, 1, or 2 |
| Modulation and coding scheme (modulation and coding scheme) | 5 |
| New data indicator (new data indicator) | 1 |
| Redundancy version (redundancy version) | 0, 1, or 2 |
| Priority indicator (Priority indicator) | 0 or 1 |
| PUCCH resource indicator (PUCCH resource indicator) | 0, 1, 2, or 3 |
| TPC command for scheduled PUCCH (TPC command for scheduled PUCCH) | 2 |
| HARQ process number (HARQ process number) | 0, 1, 2, 3, or 4 |
| Downlink assignment index (downlink assignment index) | 0, 1, 2, or 4 |
| PDSCH-to-HARQ feedback timing indicator (PDSCH-to-HARQ_feedback timing indicator) | 0, 1, 2, or 3 |
| Antenna ports (antenna ports) | 0, 4, 5, or 6 |
| Transmission configuration indication (transmission configuration indication) | 0, 1, 2, or 3 |
| SRS request (SRS request) | 0, 1, 2, or 3 |

(continued)

| Field information | Quantity of bits |
|---|---|
| DMRS sequence initialization (DMRS sequence initialization) | 0 or 1 |
| Cyclic redundancy check (Cyclic Redundancy Check) | 24 |

In the DCI format 0_2 and the DCI format 1_2, in addition to the FDRA field, lengths of many fields are not fixed, and need to be configured by using RRC signaling. Therefore, information bit sizes of the DCI format 0_2 and the DCI format 1_2 are not only related to a value of $N_{\mathrm{RB}}^{\mathrm{UL,BWP}}$, but are flexible and variable.

It should be understood that the foregoing six DCI formats may include more or fewer fields in Table 1 to Table 6, and should not constitute a limitation on embodiments of this application.

It can be learned that different DCI formats are essentially corresponding to information bits of different lengths, and more DCI formats result in greater blind detection complexity. Because the terminal device needs to decode all DCI formats that may be transmitted on a PDCCH candidate in a search space, decoding complexity increases accordingly. To reduce complexity of blind detection by the UE as much as possible, a DCI size budget (DCI size budget) is specified in NR, and the following two determining conditions need to be met:

(1) a quantity of different DCI sizes (DCI size) in one time unit (for example, a slot or a PDCCH monitoring occasion) in one cell does not exceed four; and
(2) a quantity of different DCI sizes that are scrambled by using a C-RNTI and that are monitored in one time unit (for example, a slot or a PDCCH monitoring occasion) in one cell does not exceed three.

The different DCI sizes herein should be understood as that a naturally configured DCI size is different from other DCI sizes or a DCI size determined by performing an alignment operation on a naturally configured DCI size is still different from other DCI sizes. The alignment operation includes a zero padding operation or a truncation operation. Explanations of the alignment operation below are the same as those described herein. The zero padding operation indicates an operation of adding at least one bit 0 to DCI to increase a DCI size. The truncation operation indicates an operation of truncating one piece of DCI to reduce a DCI size. Specifically, the truncation operation may be an operation of deleting some information bits of a corresponding field, or may be an operation of deleting all information bits of a corresponding field.

"Naturally configured" in this specification should be understood as that the network device configures, by using configuration information, a size of a bit length occupied by each field in the DCI. The terminal device may determine an information bit length of the DCI (the information bit size of the DCI in the DCI format in the foregoing tables, which is also an original bit length below) based on the configuration information. That is, the information bit length of the DCI can be obtained based only on the configuration information, and does not include a processed bit length obtained by performing another operation (for example, a zero padding operation or a truncation operation performed on the information bit length of the DCI). Alternatively, the information bit length of the DCI is a bit length that is before a zero padding or truncation operation is performed on the DCI. For example, the configuration information may be RRC signaling, medium access control (medium access control, MAC) control element (control element, CE) signaling, or DCI.

Among the DCI sizes of the DCI size budget, both the naturally configured DCI size and the DCI size determined by performing the alignment operation on the naturally configured DCI size may be understood as a DCI size used in a blind detection process.

For example, a DCI format of one piece of DCI is a DCI format 0_0, and a bit length that is actually occupied by each field of the DCI and that is obtained based on the configuration information is 20 bits (excluding a CRC). In other words, an information bit length of the DCI is 20 bits. If an alignment operation does not need to be performed on a DCI size based on the DCI size budget, a DCI size used in a blind detection process is 20. If a zero padding operation needs to be performed on a DCI size based on the DCI size budget to increase the DCI size to 25, a DCI size used in a blind detection process is 25. If a DCI size needs to be truncated based on the DCI size budget to shorten the DCI size to 18, a DCI size used in a blind detection process is 18.

In conclusion, because there are a plurality of types of DCI with different lengths, to meet a limitation on the DCI size budget, in a process of transmitting DCI by the network device and the terminal device, an alignment operation (a zero padding operation or a truncation operation) may need to be performed on the DCI with the different lengths, to reduce a quantity of DCI sizes, thereby reducing complexity of blind detection performed by the terminal device on DCI.

It should be noted that, when it is determined whether the DCI size meets the DCI size budget, a DCI size budget of a cell corresponding to a scheduled component carrier is used for determining. For example, all of four pieces of DCI are for scheduling a component carrier 1, and the component carrier 1 corresponds to a cell 1. When it is determined whether a DCI size obtained based on the four pieces of DCI meets a DCI size budget, a DCI size budget of the cell 1 is used as a reference.

6. Carrier

A carrier is a radio wave of a specific frequency and can be for transmitting data. In carrier aggregation, more than two component carriers (component carriers, CCs) are aggregated together to transmit data. For ease of description, the "carrier" below may be understood as a "component carrier".

For example, the terminal device may use three carriers, where one of the three carriers is referred to as a primary component carrier (primary component carrier, PCC), and the other two carriers are referred to as secondary component carriers (secondary component carrier). In some embodiments, one carrier corresponds to one cell. In the foregoing three carriers, the primary component carrier corresponds to a primary cell (primary cell, Pcell), and one secondary component carrier corresponds to one secondary cell (secondary cell, Scell). In some other embodiments, a plurality of carriers may also correspond to one cell. For example, one cell includes at least two downlink carriers and at least one uplink carrier. For the carrier in embodiments of this application, one carrier may correspond to a carrier in one cell, or a plurality of carriers may correspond to a carrier in one cell.

7. Carrier aggregation

To improve a transmission rate by efficiently using fragmented spectra, carrier aggregation (carrier aggregation, CA) supports aggregation of different carriers. Carrier aggregation aggregates two or more carriers to increase a larger transmission bandwidth. Depending on whether carriers participating in aggregation belong to a same frequency band and are contiguous in frequency domain, carrier aggregation may be classified into: intra-band contiguous carrier aggregation, intra-band non-contiguous carrier aggregation, and inter-band carrier aggregation. Carriers in the intra-band contiguous carrier aggregation belong to a same frequency band and are contiguous in frequency domain, carriers in the intra-band non-contiguous carrier aggregation belong to a same frequency band but are non-contiguous in frequency domain, and carriers in the inter-band carrier aggregation belong to different frequency bands.

Based on carrier aggregation, when scheduling a terminal device, a network device may schedule, by using a plurality of pieces of DCI, a plurality of carriers for data transmission. One piece of DCI is for scheduling one carrier, and a data channel for carrying data is transmitted on a scheduled carrier. In carrier aggregation self-scheduling, a network device sends one piece of DCI on each of a plurality of carriers, and the DCI on each carrier is for scheduling the carrier. In carrier aggregation cross-carrier scheduling, a network device may send a plurality of pieces of DCI on one carrier, and a plurality of carriers scheduled by the plurality of pieces of DCI may include the carrier for sending the plurality of pieces of DCI, or may not include the carrier for sending the plurality of pieces of DCI. In other words, in cross-carrier scheduling, DCI sent on one carrier is allowed to schedule another carrier. To be specific, DCI is transmitted on one carrier, and corresponding data is transmitted on another carrier.

It should be noted that, because DCI is carried on a PDCCH, "sending DCI on a carrier" in embodiments of this application may also be described as "sending a PDCCH on a carrier". Similarly, because data is carried on a data channel (a PDSCH or a PUSCH), "transmitting data on a carrier" in embodiments of this application may also be described as "transmitting a data channel on a carrier", and "scheduling a carrier" may also be described as "scheduling a data channel (a PDSCH or a PUSCH) on a carrier".

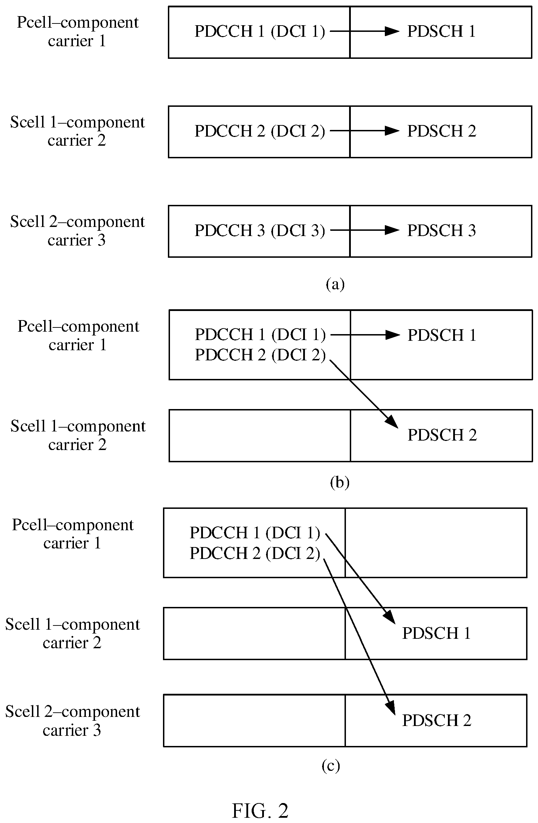

An example in which a carrier for transmitting a PDSCH is scheduled by DCI is used. FIG. 2 is a schematic scenario diagram of carrier aggregation according to an embodiment of this application. (a) in FIG. 2 shows a self-scheduling scenario in carrier aggregation. Each cell corresponds to one carrier, DCI 1 (or a PDCCH 1) sent on a carrier 1 (a primary carrier) corresponding to a primary cell (Pcell) is for scheduling the carrier 1 that is for transmitting a PDSCH 1, DCI 2 (or a PDCCH 2) sent on a carrier 2 (a secondary carrier) corresponding to a secondary cell 1 (Scell 1) is for scheduling the carrier 2 that is for transmitting a PDSCH 2, and DCI 3 (or a PDCCH 3) sent on a carrier 3 corresponding to a secondary cell 2 (Scell 2) is for scheduling the carrier 3 that is for transmitting a PDSCH 3. (b) in FIG. 2 shows a cross-carrier scheduling scenario in carrier aggregation. Two pieces of DCI are sent on a carrier 1 corresponding to a primary cell (Pcell), which are DCI 1 and DCI 2, respectively. The DCI 1 is for scheduling a carrier 1 that is for transmitting a PDSCH 1, and the DCI 2 is for scheduling a carrier 2 that is for transmitting a PDSCH 2. A scenario in which the DCI 2 sent on the carrier 1 is for scheduling the carrier 2 that is for transmitting the PDSCH 2 is the cross-carrier scheduling scenario. (c) in FIG. 2 shows another cross-carrier scheduling scenario in carrier aggregation. Two pieces of DCI are sent on a carrier 1 corresponding to a primary cell (Pcell), which are DCI 1 and DCI 2, respectively. The DCI 1 is for scheduling a carrier 2 that is for transmitting a PDSCH 1, the DCI 2 is for scheduling a carrier 3 that is for transmitting a PDSCH 2, and the two carriers scheduled by the DCI 1 and the DCI 2 are both cross-carrier scheduling scenarios. It should be understood that FIG. 2 shows only an example of a case in which DCI schedules a carrier that is for transmitting a PDSCH. The case in which DCI schedules a carrier that is for transmitting a PUSCH is similar to that in FIG. 2. Details are not described again.

In the foregoing scenario of carrier scheduling performed based on carrier aggregation, one piece of DCI needs to be sent each time a carrier is scheduled. If a plurality of carriers need to be scheduled, a plurality of pieces of DCI need to be sent. One piece of DCI is for scheduling one carrier, and one piece of DCI is transmitted on one PDCCH. Consequently, PDCCH overheads are high, and blind detection complexity is increased due to a large amount of DCI. In addition, because control resources are limited, a quantity of terminal devices that can be scheduled is reduced if PDCCH overheads available to a terminal device are high.

To resolve the foregoing problem, one piece of DCI may be for scheduling a plurality of (for example, two) carriers, to reduce PDCCH overheads and reduce blind detection complexity.

In a solution in which a plurality of carriers are scheduled by one piece of DCI, the DCI may schedule the plurality of carriers in two scheduling manners.

First scheduling manner

The DCI schedules the plurality of carriers by scheduling a plurality of data channels. To be specific, one piece of DCI schedules a plurality of data channels, each data channel corresponds to at least one carrier, and each data channel corresponds to at least one physical transport block. Specifically, each data channel may be transmitted on the at least one carrier, each data channel is for carrying the at least one physical transport block, and each physical transport block is mapped to a transmission resource of the at least one carrier. In this scheduling manner, each data channel corresponds to at least one carrier, and there are the following three cases. In a first case, each data channel corresponds to one carrier. In a second case, each data channel in a part of the plurality of data channels corresponds to one carrier, and each data channel in the other part of data channels corresponds to a plurality of carriers. For example, the DCI schedules two data channels, where one data channel corresponds to one carrier, and the other data channel corresponds to a plurality of carriers. In a third case, each data channel corresponds to a plurality of carriers.

Second scheduling manner

The DCI schedules the plurality of carriers by scheduling one data channel. To be specific, one piece of DCI schedules one data channel, the data channel corresponds to a plurality of carriers, and the data channel corresponds to at least one physical transport block. Specifically, the data channel is transmitted on a plurality of carriers, the data channel is for carrying the at least one physical transport block, and each physical transport block is mapped to a transmission resource of the plurality of carriers.

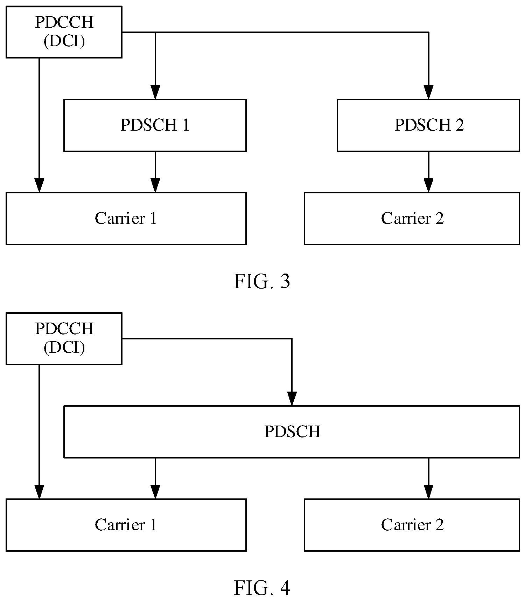

That one piece of DCI schedules two carriers and the carriers each are for transmitting a PDSCH is used as an example. FIG. 3 and FIG. 4 are schematic scenario diagrams of multi-carrier scheduling according to an embodiment of this application. FIG. 3 corresponds to the first scheduling manner. In FIG. 3, one piece of DCI carried on a PDCCH schedules two PDSCHs, where one PDSCH corresponds to one carrier. A PDSCH 1 corresponds to a carrier 1, and a PDSCH 2 corresponds to a carrier 2. FIG. 4 corresponds to the second scheduling manner. In FIG. 4, one piece of DCI carried on a PDCCH schedules one PDSCH, where the PDSCH corresponds to two carriers. To be specific, the PDSCH is transmitted on two carriers, and the two carriers are a carrier 1 and a carrier 2.

In the foregoing solution in which one piece of DCI schedules a plurality of carriers, specific content of how to schedule a plurality of carriers by using one piece of DCI is not further involved in a conventional technology. Therefore, an objective of embodiments of this application is to implement, based on a related design, a function of scheduling a plurality of carriers by using one piece of DCI.

In embodiments of this application, for ease of differentiation, DCI for scheduling one carrier is collectively referred to as single-carrier scheduling DCI, and is represented by sDCI, and DCI for scheduling a plurality of carriers is collectively referred to as multi-carrier scheduling DCI, and is represented by mDCI. It should be understood that sDCI and mDCI are merely names for distinguishing between two types of DCI with different functions, and may be further defined by using other names. This is not limited in embodiments of this application.

In some embodiments, the sDCI may include any one or more existing or future-defined DCI formats, and the sDCI is for scheduling one carrier. For example, the sDCI may include at least one of the following formats: a DCI format 0_0, a DCI format 1_0, a DCI format 0_1, a DCI format 1_1, a DCI format 0_2, and a DCI format 1_2.

In some embodiments, the mDCI may include one or more DCI formats defined in embodiments of this application. For ease of distinguishing, a DCI format of the mDCI is denoted as a DCI format x_3, where a value of x is an integer. For example, a DCI format used by a scheduled carrier to transmit mDCI corresponding to a PUSCH may be a DCI format 0_3, where a value of x is 0; and a DCI format used by a scheduled carrier to transmit mDCI corresponding to a PDSCH may be a DCI format 1_3, where a value of x is 1.

Based on the foregoing defined sDCI and mDCI, a process of transmitting DCI by a terminal device and a network device includes two scenarios: coexistence of the sDCI and the mDCI and non-coexistence of the sDCI and the mDCI.

In the scenario in which the mDCI and the sDCI coexist, the network device supports the terminal device in blindly detecting the sDCI and the mDCI in one time unit. In the time unit, the network device may send the sDCI or the mDCI to schedule a carrier. For example, the network device may configure, for the terminal device by using higher layer signaling, a DCI format for blind detection, including DCI formats of the sDCI and the mDCI. The terminal device blindly detects the sDCI and the mDCI in the time unit based on a configuration of the network device, to obtain DCI actually sent by the network device.

In the scenario in which the mDCI and the sDCI do not coexist, the network device does not support the terminal device in blindly detecting the sDCI and the mDCI in one time unit. In the time unit, the terminal device blindly detects the sDCI, and the network device sends the sDCI to schedule a carrier; or the terminal device blindly detects the mDCI, and the network device sends the mDCI to schedule a carrier.

Based on the foregoing defined sDCI and mDCI and the scenario in which whether the sDCI and the mDCI coexist, embodiments of this application mainly relate to content in the following three aspects.

First is a design of a DCI format of the mDCI.

Second is determining DCI sizes of different DCI in a scenario in which the mDCI and the sDCI coexist, to reduce a quantity of DCI sizes, and reduce complexity of blind detection performed by the terminal device on DCI.

Third is switching between a scheduling mode corresponding to the mDCI and a scheduling mode corresponding to the sDCI in a scenario in which the mDCI and the sDCI do not coexist.

Because the DCI size is mentioned in many places in embodiments of this application, before content of the foregoing three aspects is described, for ease of description, an original bit length of DCI is defined in embodiments of this application.

The original bit length of the DCI is the information bit length of the DCI described above, and represents a size of a bit length occupied by each field in the DCI that is configured by the network device by using configuration information. The terminal device may determine the original bit length of the DCI based on the configuration information. In other words, the original bit length of the DCI may be obtained based only on the configuration information, and does not include a processed bit length obtained by performing another operation (for example, an alignment operation). Alternatively, the original bit length of the DCI is a bit length that is before an alignment operation is performed on the DCI. The DCI formats in the foregoing tables are used as an example. An information bit size of DCI is an original bit length of the DCI. For example, the information bit length of the DCI in the DCI format 0_0 in Table 1 is an original bit length of the DCI format 0_0.

The following separately describes the foregoing three aspects in detail.

**First: Design of the DCI format of the mDCI**

If the mDCI schedules a plurality of carriers by scheduling a plurality of data channels, each data channel corresponds to at least one carrier, and each data channel is for carrying at least one (for example, one or two) physical transport block, and a field included in the mDCI is greatly different from that included in existing sDCI that schedules one carrier by scheduling one data channel. Therefore, a focus is on designing the mDCI in this scheduling manner. When the mDCI schedules a plurality of carriers by scheduling one data channel, a format of the mDCI may be the same as an existing format. A difference lies in that one carrier is scheduled by scheduling a data channel by existing DCI, and a plurality of carriers are scheduled by scheduling a data channel by the mDCI in embodiments of this application.

To facilitate description of the DCI format of the mDCI, the following uses M data channels and corresponding M carriers as an example for description. The M data channels are in a one-to-one correspondence with the M carriers.

**First DCI format of the mDCI**

The mDCI in the scheduling manner of scheduling the M carriers by scheduling the M data channels includes two types of fields. A first-type field includes at least one common field, and a second-type field includes at least one independent field. Information carried in each common field is related to the M data channels transmitted on the M carriers. Specifically, the information carried in each common field is common information of the M data channels. In other words, the information carried in each common field is a part of scheduling information of the mDCI, and is for scheduling the M data channels. Each independent field includes M sub-fields, the M sub-fields are in a one-to-one correspondence with the M carriers, and information carried in each sub-field is related to a data channel transmitted on a corresponding carrier. In other words, information carried in each sub-field is a part of scheduling information of the mDCI, and is for scheduling a corresponding data channel.

The following describes the DCI format of the mDCI by using a DCI format 1_3 of the mDCI and two carriers scheduled by the mDCI as an example.

In the DCI format 1_3 shown in Table 7, the DCI format 1_3 schedules two carriers by scheduling two data channels, where one data channel corresponds to one carrier, the two data channels are denoted as a data channel 1 and a data channel 2, and all fields in the DCI format 1_3 are classified into two types of fields: a common field and an independent field.

For independent fields, functions of the independent fields are different. Each independent field includes two sub-fields. The 1st sub-field on the left corresponds to a data channel 1, and the 2nd sub-field on the right corresponds to a data channel 2. A quantity of bits is a quantity of bits occupied by one sub-field, and represents a bit length of one sub-field. A modulation and coding scheme (modulation and coding scheme, MCS) field in the first row in Table 7 is used as an example. The MCS field is an independent field, and includes two sub-fields: an MCS1 field (one of the two sub-fields) for a transport block 11 on the left and an MCS2 field (the other of the two sub-fields) for a transport block 12 on the right. The MCS1 field for the transport block 11 corresponds to a data channel 1 and is for carrying MCS information of data transmitted on the data channel 1. The MCS2 field on the right for the transport block 12 corresponds to a data channel 2, and is for carrying MCS information of data transmitted on the data channel 2. One sub-field occupies five bits, that is, a bit length of one sub-field is five bits, and the MCS 1 field and the MCS2 field occupy 10 bits in total.

For common fields, functions of the common fields are different, and information carried in each common field is related to a data channel 1 and a data channel 2, and is common information of the two data channels. The frequency domain resource assignment (frequency domain resource assignment, FDRA) field in Table 7 is used as an example. The FDRA field is a common field, and is for carrying frequency domain information for the data channel 1 and the data channel 2. In other words, frequency domain information of the data channel 1 is the same as that of the data channel 2. The frequency domain information carried in the frequency domain resource assignment field is for a 20 MHz frequency domain resource, 104 RBs in the frequency domain resource are resources for data scheduling, and the frequency domain resource assignment field occupies 13 bits.

**Table 7 DCI format 1_3**

| Information (information) | | Quantity of bits (bits) | Common field or independent field (common or independent) |
|---|---|---|---|
| For transport block 11 | For transport block 12 | | |
| Modulation and coding scheme (modulation and coding scheme) 1 | Modulation and coding scheme (modulation and coding scheme) 2 | 5 | Independent field |
| New data indicator (new data indicator) 1 | New data indicator (new data indicator) 2 | 1 | |
| Redundancy version (redundancy version) 1 | Redundancy version (redundancy version) 2 | 2 | |
| For transport block 21 | For transport block 22 | | |
| Modulation and coding scheme (modulation and coding scheme) 1 | Modulation and coding scheme (modulation and coding scheme) 2 | 5 | |
| New data indicator (new data indicator) 1 | New data indicator (new data indicator) 2 | 1 | |

(continued)

| Information (information) | | Quantity of bits (bits) | Common field or independent field (common or independent) |
|---|---|---|---|
| Redundancy version (redundancy version) 1 | Redundancy version (redundancy version) 2 | 2 | |
| HARQ process number (HARQ process number) 1 | HARQ process number (HARQ process number) 2 | 4 | |
| Bandwidth part indicator (bandwidth part indicator) 1 | Bandwidth part indicator (bandwidth part indicator) 2 | 0, 1, or 2 | |
| Rate matching indicator (rate matching indicator) 1 | Rate matching indicator 2 (rate matching indicator) | 0, 1, or 2 | |
| ZP-CSI-RS trigger (ZP-CSI-RS trigger) 1 | ZP-CSI-RS trigger (ZP-CSI-RS trigger) 2 | 0, 1, or 2 | |
| SRS request (SRS request) 1 | SRS request (SRS request) 2 | 2 or 3 | |
| Antenna port (antenna ports) 1 | Antenna port (antenna ports) 2 | 4, 5, or 6 | |
| CBG transmission information (CBG transmission information) 1 | CBG transmission information (CBG transmission information) 2 | 0, 2, 4, or 8 | |
| CBG flushing out information (CBG flushing out information) 1 | CBG flushing out information (CBG flushing out information) 2 | 0 or 1 | |
| Time domain resource assignment (time domain resource assignment) | | 0, 1, 2, 3, or 4 | Common field |

(continued)

| Information (information) | Quantity of bits (bits) | Common field or independent field (common or independent) |
|---|---|---|
| VRB-to-PRB mapping (VRB-to-PRB mapping) | 0 or 1 | |
| PRB bundling size indicator (PRB bundling size indicator) | 0 or 1 | |
| DMRS sequence initialization (DMRS sequence initialization) | 1 | |
| Transmission configuration indication (transmission configuration indication) | 0 or 3 | |
| Frequency domain resource assignment ((frequency domain resource assignment) (104 RBs for 20 MHz)) | 13 | |
| TPC command for scheduled PUCCH (TPC command for scheduled PUCCH) | 2 | |
| Downlink assignment index (downlink assignment index) | 0, 2, or 4 | |
| PDSCH-to-HARQ_feedback timing indicator | 0, 1, 2, or 3 | |
| PUCCH resource indicator (PUCCH resource indicator) | 3 | |
| Carrier indicator (carrier indicator) | 3 | |
| Identifier for DCI formats (identifier for DCI formats) | 1 | |
| CRC | 24 | |

For a plurality of fields in the mDCI, the network device may configure a bit length (that is, a quantity of bits occupied by each field) of each of the plurality of fields by using carrier configuration information of each carrier. The terminal device determines the bit length of each field based on the carrier configuration information of each carrier, to determine bit lengths of all fields in the mDCI, thereby obtaining an original bit length of the mDCI. Subsequently, the terminal device may determine, based on the original bit length of the mDCI, a bit length used in a blind detection process. For the independent field and the common field defined in embodiments of this application, the terminal device may separately determine the bit lengths of the independent field and the common field in different manners based on the carrier configuration information of the carrier, to obtain the original bit length of the mDCI.

For the M carriers, the network device configures M pieces of carrier configuration information that are in a one-to-one correspondence with the M carriers for the M carriers. Each piece of carrier configuration information is for determining a bit length of scheduling information. The scheduling information is partial information of the mDCI, is for scheduling a data channel transmitted on a carrier corresponding to each piece of carrier configuration information, and includes information carried in each common field and information carried in a sub-field of a corresponding carrier in each independent field.

For the independent field, the M carriers are in a one-to-one correspondence with the M sub-fields of each independent field, and the M carriers are in a one-to-one correspondence with the M pieces of carrier configuration information. Therefore, the M pieces of carrier configuration information are in a one-to-one correspondence with the M sub-fields of each independent field, each piece of carrier configuration information corresponds to each sub-field of each independent field, and each piece of carrier configuration information may indicate a bit length of each sub-field of each independent field. In this way, the terminal device can determine the bit lengths of the M sub-fields of each independent field based on the M pieces of carrier configuration information, thereby determining bit lengths of all independent fields.

For example, the MCS field in Table 7 is used as an example. The MCS field is an independent field, and includes two sub-fields: an MCS1 field for a transport block 11 and an MCS2 field for a transport block 12. The MCS1 field corresponds to a carrier 1, and the MCS2 field corresponds to a carrier 2. Carrier configuration information of the carrier 1 indicates that a bit length of the MCS1 field is 5, and carrier configuration information of the carrier 2 indicates that a bit length of the MCS2 field is 5. In this way, a bit length of the MCS field is 10. For another example, the bandwidth part indicator field in Table 7 is used as an example. The bandwidth part indicator field is an independent field, and includes two sub-fields: a bandwidth part indicator 1 field and a bandwidth part indicator 2 field. The bandwidth part indicator 1 field corresponds to a carrier 1, and the bandwidth part indicator 2 field corresponds to a carrier 2. Carrier configuration information of the carrier 1 indicates that a bit length of the bandwidth part indicator 1 field is 1, and carrier configuration information of the carrier 2 indicates that a bit length of the bandwidth part indicator 2 field is 2. In this way, a bit length of the bandwidth part indicator field is 3.

For the common field, information carried in each common field is common information of the M data channels transmitted on the M carriers. Therefore, each common field has only one bit length, and a bit length of each common field may be finally determined in a predefined manner. The predefined manner is related to at least one piece of carrier configuration information in the M pieces of carrier configuration information.

For example, the bit length of each common field is determined based on at least one piece of carrier configuration information in the M pieces of carrier configuration information.

In some embodiments, the bit length of each common field is determined based on any one of the M pieces of carrier configuration information. The time domain resource assignment field in Table 7 is used as an example. The time domain resource assignment field is a common field, and a bit length of the time domain resource assignment field may be 1, 2, 3, or 4. Regardless of whether bit lengths configured by using carrier configuration information of two carriers are the same, a bit length configured by using carrier configuration information of one of the carriers is used as the bit length of the time domain resource assignment field. For example, a bit length configured by using carrier configuration information of a carrier corresponding to a data channel 1 is 1, and a bit length configured by using carrier configuration information of a carrier corresponding to a data channel 2 is 2. In this case, a finally determined bit length of the time domain resource assignment field is 1 based on the bit length configured by using the carrier configuration information of the carrier corresponding to the data channel 1.

In an implementation process, one carrier (denoted as a target carrier) is determined from the M carriers, and carrier configuration information of the target carrier is used as carrier configuration information for determining the bit length of the common field, that is, any piece of the foregoing carrier configuration information. For example, the target carrier is determined based on indexes of carriers. For example, a carrier corresponding to a maximum or a minimum index is determined as the target carrier. For another example, a carrier for sending the mDCI is determined as the target carrier.

In some other embodiments, the bit length of each common field is determined based on the M pieces of carrier configuration information.

In an example, target carrier configuration information is determined based on the M pieces of carrier configuration information, and a bit length indicated by the target carrier configuration information is used as the bit length of each common field. The bit length indicated by the target carrier configuration information is a shortest bit length in the bit lengths indicated by the M pieces of carrier configuration information, or the bit length indicated by the target carrier configuration information is a longest bit length in the bit lengths indicated by the M pieces of carrier configuration information. This example is applicable to a scenario in which bit lengths indicated by the M pieces of carrier configuration information are not completely the same.

The time domain resource assignment field in Table 7 is used as an example. The time domain resource assignment field is a common field, and is for carrying common information of two data channels transmitted on two carriers. Carrier configuration information of the two carriers is respectively denoted as carrier configuration information 1 and carrier configuration information 2. A bit length obtained based on the carrier configuration information 1 is 1, and a bit length obtained based on the carrier configuration information 2 is 2. If a shorter bit length is used as the bit length of the common field, the bit length of the time domain resource assignment field is 1. If a longer bit length is used as the bit length of the common field, the bit length of the time domain resource assignment field is 2.

In another example, a sum of the bit lengths indicated by the M pieces of carrier configuration information is used as the bit length of each common field. The time domain resource assignment field in Table 7 is still used as an example. A bit length obtained based on carrier configuration information 1 is 1, and a bit length obtained based on carrier configuration information 2 is 2. In this case, a finally determined bit length of the time domain resource assignment field is 3.

In this way, the terminal device may determine the bit lengths of each common field and each independent field in different manners, to finally obtain the original bit length of the mDCI. Subsequently, the terminal device may determine, based on the original bit length of the mDCI, the bit length used in the blind detection process.

It can be learned that because there is a difference between the independent field and the common field, when the original bit length of the mDCI is determined, it is necessary to determine which fields in the mDCI are common fields and which fields are independent fields. In this way, bit lengths of the independent field and the common field are determined in different manners. The following describes five manners of determining the independent field and the common field that are provided in embodiments of this application.

Manner A: Pre-defined the common field and the independent field

In this manner, both the common field and the independent field in the mDCI are predefined. The terminal device and the network device may determine, in a predefined manner, which fields are common fields and which fields are independent fields in the mDCI.

Manner B: Predefine and flexibly configure the common field and/or the independent field

In this manner, there are some fields that are not predefined in the mDCI. These undefined fields are collectively referred to as a flexibly configured field. The flexibly configured field may be configured as a common field and/or an independent field. The network device notifies the terminal device by using signaling, and the terminal device determines, based on the signaling, the common field and/or the independent field that are/is not predefined. For example, the signaling may be RRC signaling, MAC CE signaling, or DCI. The following describes this manner in three cases.

Case 1: Some common fields and independent fields are predefined, and other common fields and independent fields are flexibly configured.

In this case, some common fields and independent fields in the mDCI are predefined, and the other common fields and independent fields are configured by using flexibly configured fields, and are sent by the network device to the terminal device by using signaling.

It is assumed that the mDCI has 12 fields, three of which are predefined as common fields, other three fields are predefined as independent fields, and remaining six fields are flexibly configured fields. In actual mDCI transmission, the network device configures four of the remaining six fields as common fields, configures the remaining two fields as independent fields, and notifies the terminal device of the configured common fields and independent fields by using signaling. In this way, the actually transmitted mDCI includes seven common fields and five independent fields. The terminal device determines, based on the predefined common fields, the predefined independent fields, and the independent fields and the common fields that are configured by using the signaling, which fields are common fields and which fields are independent fields in the mDCI.

In an example, the flexibly configured fields may be default independent fields. The flexibly configured fields may be reconfigured as common fields, and the network device notifies the terminal device by using signaling. In the foregoing example, the remaining six flexibly configured fields may be default independent fields. In actual mDCI transmission, the network device reconfigures four of the six flexibly configured fields as common fields. The remaining two fields are default independent fields. The terminal device is notified of the reconfigured four common fields by using signaling. In this way, the actually transmitted mDCI includes seven common fields and five independent fields.

Case 2: Independent fields and some common fields are predefined, and the other common fields are flexibly configured.

In this case, all independent fields in the mDCI are predefined, some common fields are predefined, and the other common fields are configured by the network device by using a flexibly configured field, and are sent to the terminal device by using signaling.

It is assumed that the mDCI has 12 fields, five of which are predefined as independent fields, three fields are predefined as common fields, and remaining four fields are flexibly configured fields. In actual mDCI transmission, the network device configures the remaining four fields as common fields, and notifies the terminal device by using signaling. In this way, the actually transmitted mDCI includes five common fields and seven independent fields.

Case 3: Common fields and some independent fields are predefined, and the other independent fields are flexibly configured.

In this case, all common fields in the mDCI are predefined, some independent fields are predefined, and the other independent fields are configured by the network device by using a flexibly configured field, and are sent to the terminal device by using signaling.

It is assumed that the mDCI has 12 fields, five of which are predefined as common fields, other three fields are predefined as independent fields, and remaining four fields are flexibly configured fields. In actual mDCI transmission, the network device configures the remaining four fields as independent fields, and notifies the terminal device by using signaling. In this way, the actually transmitted mDCI includes five common fields and seven independent fields.

Manner C: Predefine common fields or predefine and flexibly configure common fields and flexibly configure independent fields

In this manner, the independent fields in the mDCI are configured by using a flexibly configured field and are notified to the terminal device by using signaling, and the common fields in the mDCI are predefined, or the common fields are predefined and configured by using a flexibly configured field.

It is assumed that the mDCI has 10 fields, three of which are predefined as common fields, and remaining seven fields are flexibly configured fields. For example, in actual mDCI transmission, the network device configures four of the remaining seven fields as independent fields, configures the remaining three fields as common fields, and notifies the terminal device by using signaling. In this way, the actually transmitted mDCI includes six common fields and four independent fields. For another example, in actual mDCI transmission, the network device configures all of the remaining seven fields as independent fields, and notifies the terminal device by using signaling. In this way, the actually transmitted mDCI includes three common fields and seven independent fields. Therefore, the terminal device determines, based on the predefined common fields and the fields configured by using signaling, which fields are common fields and which fields are independent fields in the mDCI.

Manner D: Predefine independent fields or predefine and flexibly configure independent fields and flexibly configure common fields

In this manner, the common fields in the mDCI are configured by using a flexibly configured field and are notified to the terminal device by using signaling, and the independent fields in the mDCI are predefined, or the independent fields are predefined and configured by using a flexibly configured field.

It is assumed that the mDCI has 10 fields, three of which are predefined as independent fields, and remaining seven fields are flexibly configured fields. For example, in actual mDCI transmission, the network device configures four of the remaining seven fields as independent fields, configures the remaining three fields as common fields, and notifies the terminal device by using signaling. In this way, the actually transmitted mDCI includes three common fields and seven independent fields. For another example, in actual mDCI transmission, the network device configures all of the remaining seven fields as common fields, and notifies the terminal device by using signaling. In this way, the actually transmitted mDCI includes three independent fields and seven common fields. Therefore, the terminal device determines, based on the predefined common fields and the fields configured by using signaling, which fields are common fields and which fields are independent fields in the mDCI.

Mode E: Flexible configure independent fields and common fields

In this manner, there is no predefined common field or independent field. Both the independent fields and the common fields in the mDCI are configured by using a flexibly configured field, and are notified to the terminal device by using signaling. The terminal device determines, based on the signaling, which fields are common fields and which fields are independent fields.

In an example, the common fields and the independent fields in the mDCI are configured by using signaling.

In another example, the common fields in the mDCI are configured by using signaling. If the common fields configured by using the signaling are a part of fields in the mDCI, the terminal device may determine that remaining fields are independent fields, to determine the independent fields and the common fields in the mDCI.

In another example, the independent fields in the mDCI are configured by using signaling. If the independent fields configured by using the signaling are a part of fields in the mDCI, the terminal device may determine that remaining fields are common fields, to determine the independent fields and the common fields in the mDCI.

**Second DCI format of the mDCI**

Based on a quantity of data channels (or carriers) that can be scheduled by the mDCI, M groups of fields are preconfigured in the mDCI. One group of fields corresponds to one data channel, each group of fields includes a plurality of fields, and each group of fields is equivalent to all fields in one piece of sDCI, to implement a function of scheduling one data channel. Each field in the mDCI in this format may be understood as the foregoing independent field. Alternatively, it may be understood that the mDCI in this format is equivalent to copying all fields in the sDCI based on a quantity of data channels. It is assumed that one piece of sDCI includes 24 fields. For the mDCI, if a quantity of data channels that can be scheduled by the mDCI is 2, two groups of fields are preconfigured in the mDCI, and each group of fields may include 24 fields. The 24 fields may be equivalent to 24 fields in one piece of sDCI, and each group of fields may be for scheduling one data channel.

For the mDCI in this format, a bit length of each field in each group of fields is determined based on carrier configuration information of a carrier corresponding to the group of fields, and the carrier configuration information of the carrier may indicate the bit length of each field in each corresponding group of fields in the mDCI.

It should be noted that each field in the second DCI format may be understood as the foregoing independent field.

**Third DCI format of the mDCI**

The mDCI includes a plurality of fields, and information carried in each field is the common information of the M data channels transmitted on the M carriers. Each field in the mDCI in this format may be understood as the foregoing common field, and the M data channels share each field. For specific descriptions, refer to the foregoing related descriptions.

**Second: Determine DCI sizes of different DCI in a scenario in which the mDCI and the sDCI coexist**

As described above, the mDCI is for scheduling a plurality of carriers, the sDCI is for scheduling one carrier, and the sDCI and the mDCI each have a plurality of DCI formats.

In some embodiments, the mDCI may include two DCI formats. One format is for PDSCH scheduling, for example, represented by a DCI format 1_3, and the other format is for PUSCH scheduling, for example, represented by a DCI format 0_3.

In some embodiments, the sDCI may include any one or more existing or future-defined DCI formats. For example, the sDCI may include at least one of the following formats: a DCI format 0_0, a DCI format 1_0, a DCI format 0_1, a DCI format 1_1, a DCI format 0_2, and a DCI format 1_2.

In a scenario in which the sDCI and the mDCI coexist, the network device may configure, for the terminal device, DCI formats for blind detection, including DCI formats of the sDCI and the mDCI. The sDCI has a plurality of DCI formats, the mDCI has a plurality of DCI formats, and the sDCI and the mDCI have different formats. In this way, a plurality of DCI sizes exist. The terminal device needs to blindly detect the sDCI and the mDCI based on DCI sizes in one time unit (for example, a slot or a PDCCH monitoring occasion). However, a large quantity of DCI sizes increase blind detection complexity. Therefore, an alignment operation needs to be performed on DCI in different formats, to reduce a quantity of DCI sizes, to reduce blind detection complexity.

It should be understood that, before sending DCI, if the network device needs to perform an alignment operation, the network device determines a DCI size by using the alignment operation, and sends the DCI based on the determined DCI size. Before blind detection, the terminal device determines a DCI size by using an alignment operation the same as that of the network device, and performs blind detection based on the determined DCI size, so that the network device and the terminal device have a consistent understanding, to obtain the DCI.

To meet a requirement that a quantity of different DCI sizes scrambled by using a C-RNTI in a DCI size budget does not exceed a specific quantity (for example, 3), in the scenario in which the sDCI and the mDCI coexist, this application provides the following embodiments to perform an alignment operation on DCI in different formats, to control a quantity of DCI sizes within the specific quantity (for example, 3).

The following describes embodiments in detail by using the foregoing examples of DCI formats of the sDCI and the mDCI, to control the quantity of different DCI sizes scrambled by using the C-RNTI to be less than 3. It should be understood that DCI in the following embodiments is the DCI scrambled by using the C-RNTI, and the network device or the terminal device may perform the following embodiments.

**Embodiment 1**

In this embodiment, it is assumed that the four DCI formats of the sDCI and the two defined DCI formats of the mDCI may coexist. In other words, the network device configures six DCI formats, and the terminal device may blindly detect DCI in the six formats in a same time unit. The network device and the terminal device determine, based on a defined alignment operation, a DCI size finally used in a blind detection process, and control all DCI sizes to be less than 3.

In some embodiments, the four DCI formats of the sDCI may be a DCI format 0_0, a DCI format 1_0, a DCI format 0_1, and a DCI format 1_1.

Because the DCI format 0_0 and the DCI format 1_0 have different DCI sizes in the CSS and the USS, the DCI format 0_0 may have two DCI sizes, the DCI format 1_0 may also have two DCI sizes. The DCI format 0_1, the DCI format 1_1, the DCI format 0_3, and the DCI format 1_3 each have one DCI size in the USS. Therefore, in this embodiment, there may be eight DCI sizes, and the eight DCI sizes need to be aligned to be within three DCI sizes.

Table 8 shows a step process of Embodiment 1. Different steps are for determining DCI sizes of different DCI formats. When an alignment operation needs to be performed, an alignment operation is performed on DCI sizes of corresponding DCI formats, to obtain a uniform DCI size. A DCI size corresponding to each step in Table 8 represents a DCI size finally obtained after the step. The DCI size is represented by using A, B..., G, and the like. In one step, the DCI size changes from one length to another length, and is represented in a form of X1→X2. X1 and X2 may represent different DCI sizes, or may represent a same DCI size. For example, in step 5A, the DCI size changes from B to A, which is represented by B→A.

**Table 8**

| DCI format | Step 1 | Step 2 | Step 3A | Step 3B | Step 4 | Step 5A | Step 5B | Step 5C |
|---|---|---|---|---|---|---|---|---|
| DCI size (DCI size) | | | | | | | | |
| DCI format 0_0 (CSS) | A | | | | Check whether a DCI size meets a DCI size budget. If the DCI size does not meet the DCI size budget, perform steps 5A to 5C. If the DCI size meets the DCI size budget, the procedure ends. | | | |
| DCI format 1_0 (CSS) | A | | | | | | | |
| DCI format 0_0 (USS) | | B | | | | B→A | | |
| DCI format 1_0 (USS) | | B | | | | B→A | | |
| DCI format 0_1 | | | C | | | | | C→H |
| DCI format 1_1 | | | D | | | | | D→H |
| DCI format 0_3 | | | | E | | | E→G | |
| DCI format 1_3 | | | | F | | | F→G | |

**Step 1.** Perform alignment by using a DCI size of the DCI format 1_0 as a reference, and determine a DCI size of the DCI format 0_0 and the DCI size of the DCI format 1_0 in the CSS.

In step 1, the alignment operation is performed on the DCI format 0_0 in the CSS by using the DCI size of the DCI format 1_0 as the reference, to align the DCI size of the DCI format 0_0 with the DCI size of the DCI format 1_0. In this way, the DCI size of the DCI format 0_0 after the alignment operation is performed is the same as the DCI size of the DCI format 1_0, to finally obtain DCI sizes of a same length. The alignment operation may be a zero padding operation or a truncation operation. For example, the finally obtained DCI sizes of the same length are A in Table 8, and are represented by a size A.

It should be understood that the finally determined DCI sizes in step 1 are a DCI size obtained based on step 1 for blind detection, and the DCI size that is before the alignment operation is performed is an original bit length of the DCI. This is understood based on an actual operation on the DCI. Unless otherwise specified, details are not described in subsequent embodiments.

In some embodiments, a specific process of step 1 is as follows:

Step 1.1. Determine the DCI size of the DCI format 0_0 in the CSS (before an alignment operation is performed) and the DCI size of the DCI format 1_0 in the CSS.

It should be understood that the DCI sizes of the DCI format 0_0 and the DCI format 1_0 that are in the CSS and that are determined in this step are both original bit lengths of the DCI. The original bit length of the DCI format 0_0 in the CSS is the information bit length of the DCI in Table 1. A length of another field in the DCI format 0_0 is fixed. The DCI size is related only to an FDRA field. The FDRA field in the DCI format 0_0 is related only to a value of $N_{RB}^{UL,BWP}$ (a size of an uplink BWP). Herein, $N_{RB}^{UL,BWP}$ is a size of an initial uplink BWP. The original bit length of the DCI format 1_0 in the CSS is the information bit length of the DCI in Table 2 above. A length of another field in the DCI format 1_0 is fixed. The DCI size is related only to an FDRA field. The FDRA field in the DCI format 1_0 is related only to a value of $N_{RB}^{DL,BWP}$ (a size of a downlink BWP). If a CORESET 0 is configured for a current serving cell, $N_{RB}^{DL,BWP}$ is a size of the CORESET 0. If no CORESET 0 is configured for the current serving cell, $N_{RB}^{DL,BWP}$ is a size of an initial downlink BWP.

Step 1.2. Align the DCI size of the DCI format 0_0 in the CSS with the DCI size of the DCI format 1_0.

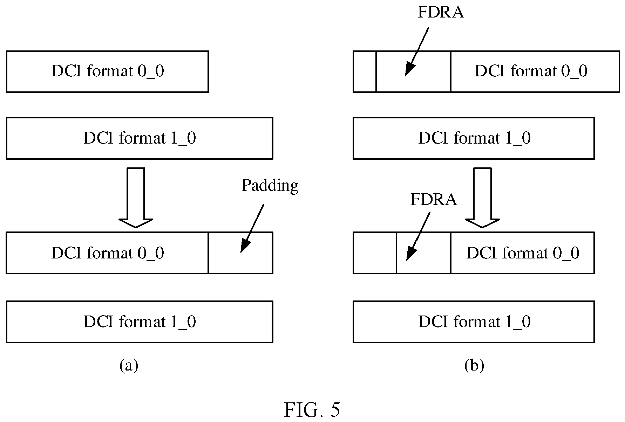

FIG. 5 is a schematic diagram of aligning the DCI size of the DCI format 0_0 with the DCI size of the DCI format 1_0 in the CSS according to an embodiment of this application. Refer to (a) in FIG. 5. If the DCI size (before zero padding is performed) of the DCI format 0_0 in the CSS is less than the DCI size of the DCI format 1_0, a zero padding operation is performed on the DCI format 0_0, and zeros are padded after the DCI format 0_0 as padding, so that the finally determined DCI size of the DCI format 0_0 in the CSS is the same as the DCI size of the DCI format 1_0. Refer to (b) in FIG. 5. If the DCI size (before a truncation operation is performed) of the DCI format 0_0 in the CSS is greater than the DCI size of the DCI format 1_0, a significant most bit of the FDRA field in the DCI format 0_0 is removed, so that the finally determined DCI size of the DCI format 0_0 is the same as the DCI size of the DCI format 1_0.

**Step 2.** Perform alignment by using a larger DCI size in the DCI sizes of the DCI format 0_0 and the DCI format 0_1 as a reference, and determine the DCI size of the DCI format 0_0 and the DCI size of the DCI format 1_0 in the USS.

In step 2, the larger DCI size in the DCI sizes of the DCI format 0_0 and the DCI format 0_0 is used as the reference, and a zero padding operation is performed on DCI with a smaller DCI size, so that the DCI size of the DCI format 0_0 is aligned with the DCI size of the DCI format 1_0, so that a finally obtained DCI size in the DCI format 0_0 is the same as the DCI size in the DCI format 1_0, that is, DCI sizes of a same length is obtained. For example, as shown in Table 8, the finally obtained DCI size with the same length is a size B.

In some embodiments, a specific process of step 2 is as follows:

Step 2.1. Determine the DCI size of the DCI format 0_0 in the USS and the DCI size of the DCI format 1_0 in the USS.

It should be understood that the DCI sizes of the DCI format 0_0 and the DCI format 1_0 that are in the USS and that are determined in this step are both original bit lengths of the DCI. The original bit length of the DCI format 0_0 in the USS is the information bit length of the DCI in Table 1. A length of another field in the DCI format 0_0 is fixed. The DCI size is related only to an FDRA field. The FDRA field in the DCI format 0_0 is related only to a value of $N_{RB}^{UL,BWP}$ (a size of an uplink BWP). Herein, $N_{RB}^{UL,BWP}$ is a size of an active uplink BWP. The original bit length of the DCI format 1_0 in the USS is the information bit length of the DCI in Table 2. A length of another field in the DCI format 1_0 is fixed. The DCI size is related only to an FDRA field. The FDRA field in the DCI format 1_0 is related only to a value of $N_{RB}^{DL,BWP}$ (a size of a downlink BWP). Herein, $N_{RB}^{DL,BWP}$ is a size of an active downlink BWP.

Step 2.2. Align the DCI size of the DCI format 0_0 in the USS with the DCI size of the DCI format 1_0.

In this step, different processing is performed on the DCI format 0_0 and the DCI format 1_0 in the following three cases, to determine the DCI sizes of the two pieces of DCI.

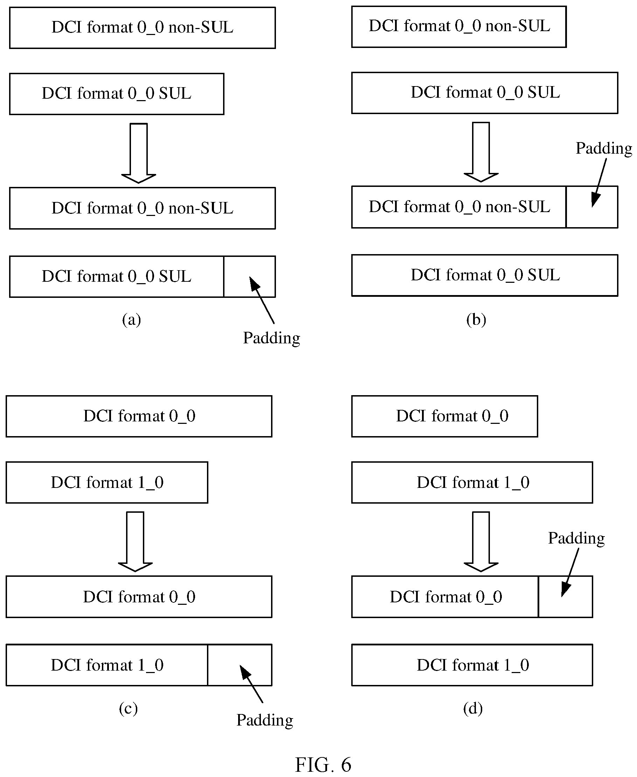

If the network device configures a supplementary uplink (supplementary uplink, SUL) carrier for the terminal device, a PUSCH may be sent on the SUL and a non-SUL. If DCI sizes of the DCI format 0_0, in the USS, for scheduling the SUL and the non-SUL are not equal, a larger DCI size needs to be used as a reference, and a zero padding operation needs to be performed on a DCI format 0_0 with a smaller DCI size, so that the DCI sizes of the DCI format 0_0, in the USS, for scheduling the SUL and the non-SUL are equal. Specifically, refer to (a) in FIG. 6. If a DCI format 0_0 (denoted as a DCI format 0_0 SUL) for scheduling an SUL carrier in the USS has a smaller DCI size than a DCI format 0_0 (denoted as a DCI format 0_0 non SUL) for scheduling a non-SUL carrier, a zero padding operation is performed on the DCI format 0_0 SUL, and zeros are padded after the DCI format 0_0 SUL, so that the DCI size of the DCI format 0_0 SUL is the same as the DCI size of the DCI format 0_0 non-SUL. Refer to (b) in FIG. 6. If a DCI format 0_0 non-SUL in the USS has a smaller DCI size than a DCI format 0_0 SUL, a zero padding operation is performed on the DCI format 0_0 non-SUL, and zeros are padded after the DCI format 0_0 non-SUL, so that the DCI size of the DCI format 0_0 non-SUL is the same as the DCI size of the DCI format 0_0 SUL.

It should be noted that, if the network device configures a SUL carrier for the terminal device, when configuring a DCI format 0_0 for a specific terminal device, the network device schedules only one of the SUL carrier and a non-SUL carrier by using the DCI format 0_0. Therefore, in this embodiment, the network device configures only one DCI format 0_0 for the specific terminal device, and the DCI format 0_0 is for scheduling the SUL carrier or the non-SUL carrier. Subsequent explanations of aligning DCI sizes when the network device configures a SUL carrier for the terminal device are the same as those herein. Details are not described again.

Refer to (c) in FIG. 6. If the DCI size (before zero padding is performed) of the DCI format 1_0 in the USS is less than the DCI size of the DCI format 0_0, a zero padding operation is performed on the DCI format 1_0, and zeros are padded after the DCI format 1_0 as padding, so that the finally determined DCI size of the DCI format 0_0 in the USS is the same as the DCI size of the DCI format 1_0.

Refer to (d) in FIG. 6. If the DCI size (before zero padding is performed) of the DCI format 0_0 in the USS is less than the DCI size of the DCI format 1_0, a zero padding operation is performed on the DCI format 0_0, and zeros are padded after the DCI format 0_0 as padding, so that the finally determined DCI size of the DCI format 0_0 in the USS is the same as the DCI size of the DCI format 1_0.

**Step 3A.** Determine a DCI size of the DCI format 0_1 and a DCI size of the DCI format 1_1.

The DCI size of the DCI format 0_1 and the DCI size of the DCI format 1_1 that are determined in this step may be original bit lengths of the DCI, or may be bit lengths obtained after an alignment operation is performed. The determined DCI sizes of the two pieces of DCI may be the same or may be different. For example, as shown in Table 8, the determined DCI size of the DCI format 0_1 is a size C, and the determined DCI size of the DCI format 1_1 is a size D, where C and D may be the same or different.

In this step, different processing is performed on the DCI format 0_1 and the DCI format 1_1 in the following three cases, to determine the DCI sizes of the two pieces of DCI.

If the network device configures an SUL carrier for the terminal device, a PUSCH may be sent on the SUL and a non-SUL. If DCI sizes of the DCI format 0_1, in the USS, for scheduling the SUL and the non-SUL are not equal, a larger DCI size needs to be used as a reference, and a zero padding operation needs to be performed on a DCI format 0_1 with a smaller DCI size, so that the DCI sizes of the DCI format 0_1, in the USS, for scheduling the SUL and the non-SUL are equal. For specific descriptions of the process, refer to related descriptions of (a) and (b) in FIG. 6 in step 2. The DCI format 0_0 is replaced with the DCI format 0_1, and details are not described again.

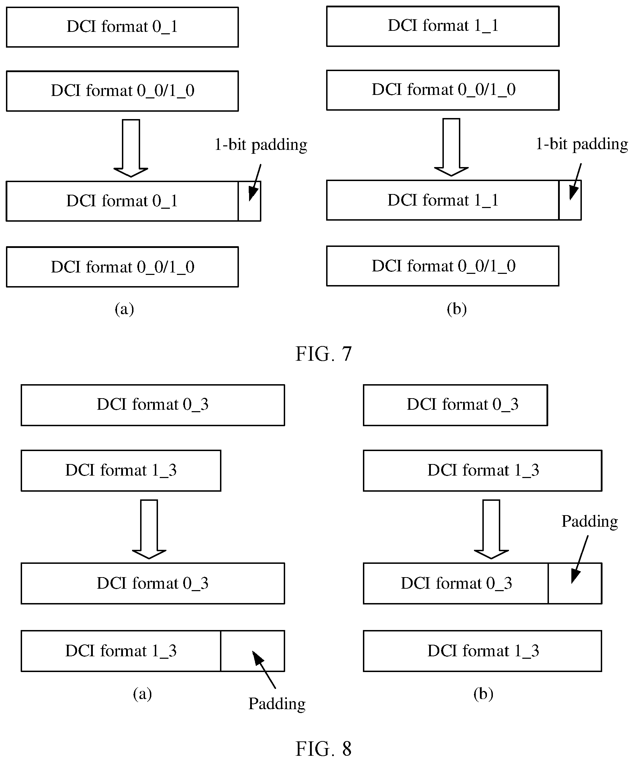

Refer to (a) in FIG. 7. If a DCI size of a DCI format 0_1 of the terminal device in the USS is the same as a DCI size of a DCI format 0_0 or a DCI format 1_0 of another terminal device in the USS, a zero padding operation is performed on the DCI format 0_1, and one zero bit (bit) is padded after the DCI format 0_1. In this case, the size C in Table 8 is a DCI size obtained after the zero padding operation is performed on the DCI format 0_1.

Refer to (b) in FIG. 7. If a DCI size of a DCI format 1_1 of the terminal device in the USS is the same as a DCI size of a DCI format 0_0 or a DCI format 1_0 of another terminal device in the USS, a zero padding operation is performed on the DCI format 1_1, and one zero bit (bit) is padded after the DCI format 1_1. In this case, the size D in Table 8 is a DCI size obtained after the zero padding operation is performed on the DCI format 1_1.

**Step 3B.** Determine a DCI size of the DCI format 0_3 and a DCI size of the DCI format 1_3.

In this step, the determined DCI size of the DCI format 1_3 is an original bit length, and the determined DCI size of the DCI format 0_3 may be an original bit length of the DCI, or may be a bit length obtained after an alignment operation is performed, which is specifically related to whether the network device configures an SUL carrier for the terminal device.

If the network device does not configure an SUL carrier for the terminal device, the determined DCI size of the DCI format 0_3 is the original bit length.

If the network device configures an SUL carrier for the terminal device, a PUSCH may be sent on the SUL and a non-SUL. If DCI sizes of the DCI format 0_3, in the USS, for scheduling the SUL and the non-SUL are not equal, a larger DCI size needs to be used as a reference, and a zero padding operation needs to be performed on a DCI format 0_3 with a smaller DCI size, so that the DCI sizes of the DCI format 0_3, in the USS, for scheduling the SUL and the non-SUL are equal. For specific descriptions of the process, refer to related descriptions of (a) and (b) in FIG. 6 in step 2. The DCI format 0_0 is replaced with the DCI format 0_3, and details are not described again. In this case, if the DCI format 0_3 configured by the network device for the terminal device is DCI with a smaller length, the DCI size of the DCI format 0_3 determined for the terminal device is a DCI size obtained after a zero padding operation is performed. If the DCI format 0_3 configured by the network device for the terminal device is DCI with a larger length, a zero padding operation does not need to be performed on the DCI format 0_3 with the larger length. In this case, the determined DCI size of the DCI format 0_3 is the original bit length.

In this step, the finally determined DCI size of the DCI format 0_3 may be the same as or different from the DCI size of the DCI format 1_3. For example, as shown in Table 8, the determined DCI size of the DCI format 0_3 is a size E, and the determined DCI size of the DCI format 1_3 is a size F, where E and F may be the same or different.

It should be understood that an execution sequence of step 1 to step 3B is not limited in this embodiment of this application, but step 1 to step 3B need to be performed before step 4.

**Step 4.** Determine whether the determined DCI meets a DCI size budget.

If a quantity of DCI sizes obtained by performing step 1 to step 3B meets the DCI size budget, the DCI sizes determined in step 1 to step 3B are used as DCI sizes finally used in a blind detection process. If the DCI size budget is not met, steps 5A to 5C continue to be performed.

It is assumed that the DCI sizes obtained by performing step 1 to step 3B include the size A, the size B, the size C, the size D, the size E, and the size F. If the lengths of all DCIs are different, the quantity of DCI sizes is 6, which is greater than 3, and does not meet the DCI size budget. In this case, steps 5A to 5C continue to be performed.

It should be noted that, in step 1 to step 3B, calculation of the DCI size budget may not be performed. In other words, the terminal device or the network device may not count the quantity of different DCI sizes, and count the quantity after step 1 to step 3B are performed.

**Step 5A.** Re-determine a DCI size of the DCI format 0_0 and a DCI size of the DCI format 1_0 in the USS.

In this step, the re-determined DCI size of the DCI format 0_0 in the USS is the same as the DCI size of the DCI format 1_0, and is the same as the DCI size of the DCI format 0_0 in the USS and the DCI size of the DCI format 1_0 that are obtained in step 1. As shown in Table 8, the DCI size of the DCI format 0_0 and the DCI size of the DCI format 1_0 in the USS that are finally obtained in this step are changed from the previous size B to the size A.

A specific process of this step is as follows:

Step 5A.1. If the zero padding operation shown in FIG. 7 is performed on the DCI format 0_1 and the DCI format 1_1 in step 3A, 1-bit padding added to the DCI format 0_1 and the DCI format 1_1 in step 3A needs to be removed.

In step 3A, the zero padding operation performed on the DCI format 0_1 and the DCI format 1_1 is to distinguish from the DCI size of the DCI format 0_0 or the DCI format 1_0 of the another terminal device in the USS. Therefore, the DCI sizes of the DCI format 0_0 and the DCI format 1_0 need to be re-determined currently, and the re-determined DCI size is different from the DCI size of the DCI format 0_0 or the DCI format 1_0 of the another terminal device in the USS. Therefore, there is no need to reserve the DCI size obtained by performing the zero padding operation on the DCI format 0_1 and the DCI format 1_1 in step 3A, and the added 1 bit is deleted.

Step 5A.2. Determine a DCI size of DCI format 0_0 in the USS and a DCI size of DCI format 1_0 in the USS.

It should be understood that the DCI sizes of the DCI format 0_0 and the DCI format 1_0 that are in the USS and that are determined in this step are both original bit lengths of the DCI. The original bit length of the DCI format 0_0 in the USS is the information bit length of the DCI in Table 1. A length of another field in the DCI format 0_0 is fixed. The DCI size is related only to an FDRA field. The FDRA field in the DCI format 0_0 is related only to a value of $N_{\mathrm{RB}}^{\mathrm{UL,BWP}}$ (a size of an uplink BWP). Herein, $N_{\mathrm{RB}}^{\mathrm{UL,BWP}}$ is a size of an initial access uplink BWP. The original bit length of the DCI format 1_0 in the USS is the information bit length of the DCI in Table 2 above. A length of another field in the DCI format 1_0 is fixed. The DCI size is related only to an FDRA field. The FDRA field in the DCI format 1_0 is related only to a value of $N_{\mathrm{RB}}^{\mathrm{DL,BWP}}$ (a size of a downlink BWP). If a CORESET 0 is configured for a current serving cell, $N_{\mathrm{RB}}^{\mathrm{DL,BWP}}$ is a size of the CORESET 0. If no CORESET 0 is configured for the current serving cell, $N_{\mathrm{RB}}^{\mathrm{DL,BWP}}$ is a size of an initial downlink BWP.

Step 5A.3. Align the DCI size of the DCI format 0_0 in the USS with the DCI size of the DCI format 1_0.

FIG. 5 is used as an example. Refer to (a) in FIG. 5. If the DCI size (before zero padding is performed) of the DCI format 0_0 in the USS is less than the DCI size of the DCI format 1_0, a zero padding operation is performed on the DCI format 0_0, and zeros are padded after the DCI format 0_0 as padding, so that the finally determined DCI size of the DCI format 0_0 in the USS is the same as the DCI size of the DCI format 1_0. Refer to (b) in FIG. 5. If the DCI size (before a truncation operation is performed) of the DCI format 0_0 in the USS is greater than the DCI size of the DCI format 1_0, a significant most bit of the FDRA field in the DCI format 0_0 is removed, so that the finally determined DCI size of the DCI format 0_0 is the same as the DCI size of the DCI format 1_0.

After step 5A, one DCI size is reduced, and whether the determined DCI meets the DCI size budget is further determined. If a quantity of DCI sizes obtained by performing step 1 to step 5A meets the DCI size budget, the DCI sizes determined in step 1 to step 5A are used as DCI sizes in a blind detection process. If the DCI size budget is not met, steps 5B and 5C continue to be performed.

It is assumed that the DCI sizes obtained by performing step 5A include the size A, the size C, the size D, the size E, and the size F. If the lengths of all DCIs are different, the quantity of DCI sizes is 5, which is greater than 3, and does not meet the DCI size budget. In this case, steps 5B and 5C are performed.

**Step 5B.** Re-determine a DCI size of the DCI format 0_3 and a DCI size of the DCI format 1_3.

In this step, the DCI size of the DCI format 0_3 is aligned with the DCI size of the DCI format 1_3, so that the finally obtained DCI size of the DCI format 0_3 is the same as the DCI size of the DCI format 1_3, that is, DCI sizes of a same length are obtained. For example, as shown in Table 8, the DCI size of the DCI format 0_3 finally obtained by performing step 5B changes from the previous size E to a size G, and the DCI size of the DCI format 1_3 finally obtained by performing step 5B changes from the previous size F to the size G.

In some embodiments, a larger DCI size in the DCI sizes of the DCI format 0_3 and the DCI format 1_3 may be used as a reference, to perform a zero padding operation on the other DCI with a smaller DCI size, to change two DCI sizes into one DCI size.

Refer to (a) in FIG. 8. If the DCI size (before zero padding is performed) of the DCI format 1_3 is less than the DCI size of the DCI format 0_3, a zero padding operation is performed on the DCI format 1_3, and zeros are padded after the DCI format 1_3 as padding, so that the finally determined DCI size of the DCI format 0_3 in the USS is the same as the DCI size of the DCI format 1_3. In this case, the size G in Table 8 is the size E.

Refer to (b) in FIG. 8. If the DCI size (before zero padding is performed) of the DCI format 0_3 is less than the DCI size of the DCI format 1_3, a zero padding operation is performed on the DCI format 0_3, and zeros are padded after the DCI format 0_3 as padding, so that the finally determined DCI size of the DCI format 0_3 in the USS is the same as the DCI size of the DCI format 1_3. In this case, the size G in Table 8 is the size F.

It should be understood that the foregoing manner of aligning lengths of the two pieces of DCI by using the larger DCI size of the DCI format 0_3 and the DCI format 1_3 as a reference is merely an example for description, and any method that can align the lengths of the DCI of the DCI format 0_3 and the DCI of the DCI format 1_3 is feasible. For example, the DCI size of either the DCI format 0_3 or the DCI format 1_3 may be used as a reference, and an alignment operation (a zero padding operation or a truncation operation) may be performed on the other DCI, to align the two DCI sizes, and change the two DCI sizes into one DCI size.

After step 5B, one DCI size is further reduced, and whether the determined DCI meets the DCI size budget is further determined. If a quantity of DCI sizes obtained by performing step 1 to step 5B meets the DCI size budget, the DCI sizes determined in step 1 to step 5B are used as DCI sizes finally used in a blind detection process. If the DCI size budget is not met, step 5C continues to be performed.

It is assumed that the DCI sizes obtained by performing step 5B include the size A, the size C, the size D, and the size G. If the lengths of all DCIs are different, the quantity of DCI sizes is 4, which is greater than 3, and does not meet the DCI size budget. In this case, step 5C is performed.

**Step 5C.** Re-determine a DCI size of the DCI format 0_1 and a DCI size of the DCI format 1_1.

In this step, the DCI size of the DCI format 0_1 is aligned with the DCI size of the DCI format 1_1, so that the finally obtained DCI size of the DCI format 0_1 is the same as the DCI size of the DCI format 1_1, that is, DCI sizes of a same length are obtained. For example, as shown in Table 8, the DCI size of the DCI format 0_1 finally obtained by performing step 5C changes from the previous size C to a size H, and the DCI size of the DCI format 1_1 finally obtained by performing step 5C changes from the previous size D to the size H.

In some embodiments, a larger DCI size in the DCI sizes of the DCI format 0_1 and the DCI format 1_1 may be used as a reference, to perform a zero padding operation on the other DCI with a smaller DCI size, to change two DCI sizes into one DCI size.

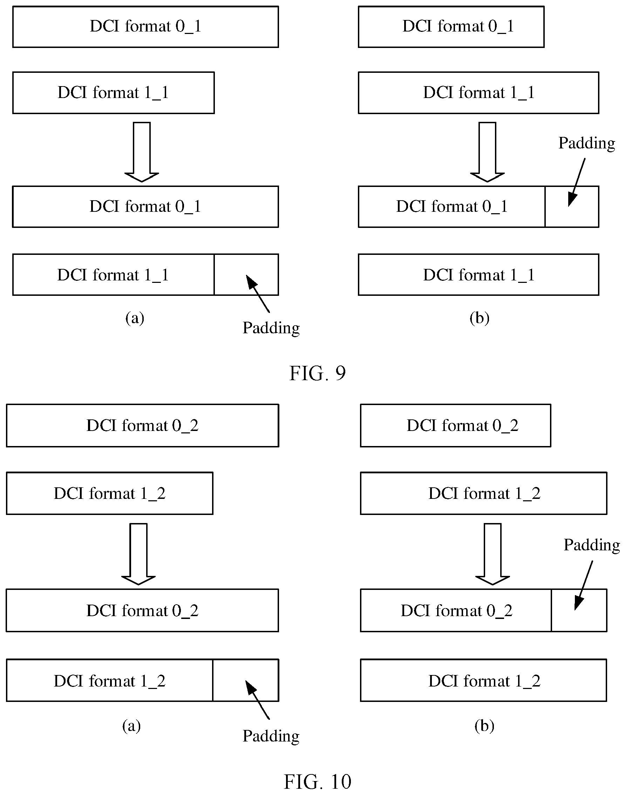

Refer to (a) in FIG. 9. If the DCI size (before zero padding is performed) of the DCI format 1_1 is less than the DCI size of the DCI format 0_1, a zero padding operation is performed on the DCI format 1_1, and zeros are padded after the DCI format 1_1 as padding, so that the finally determined DCI size of the DCI format 0_1 in the USS is the same as the DCI size of the DCI format 1_1. In this case, the size C in Table 8 is the size H.

Refer to (b) in FIG. 9. If the DCI size (before zero padding is performed) of the DCI format 0_1 is less than the DCI size of the DCI format 1_1, a zero padding operation is performed on the DCI format 0_1, and zeros are padded after the DCI format 0_1 as padding, so that the finally determined DCI size of the DCI format 0_1 in the USS is the same as the DCI size of the DCI format 1_1. In this case, the size D in Table 8 is the size F.

It should be understood that the foregoing manner of aligning lengths of the two pieces of DCI by using the larger DCI size of the DCI format 0_1 and the DCI format 1_1 as a reference is merely an example for description, and any method that can align the lengths of the DCI of the DCI format 0_1 and the DCI of the DCI format 1_1 is feasible. For example, the DCI size of either the DCI format 0_1 or the DCI format 1_1 may be used as a reference, and an alignment operation (a zero padding operation or a truncation operation) may be performed on the other DCI, to align the two DCI sizes, and change the two DCI sizes into one DCI size.

After step 5C, one DCI size is further reduced, and whether the determined DCI meets the DCI size budget is further determined. If a quantity of DCI sizes obtained by performing step 1 to step 5C meets the DCI size budget, the DCI sizes determined in step 1 to step 5C are used as finally used in a blind detection process.

It is assumed that after step 5C, the obtained DCI sizes include the size A, the size G, and the size H. If all DCI sizes are different, a quantity of DCI sizes is 3, and a DCI size budget is met. In this case, the size A, the size G, and the size H are DCI sizes finally used in a blind detection process, and the terminal device separately performs blind detection on the DCI by using the size A, the size G, and the size H, to obtain the DCI sent by the network device.

It should be understood that an execution sequence of step 5A to step 5C is not limited in this embodiment of this application, and the foregoing execution sequence is merely an example for description. For example, step 5B may be performed after step 5C. For another example, step 5B may be performed before steps 5A and 5C.

It should be further understood that the four DCI formats (that is, the DCI format 0_0, the DCI format 1_0, the DCI format 0_1, and the DCI format 1_1) of the sDCI in Embodiment 1 are merely examples for description. This is not limited in this embodiment of this application. For example, the four DCI formats of the sDCI may alternatively be the DCI format 0_0, the DCI format 1_0, the DCI format 0_2, and the DCI format 1_2. Step 3A is replaced with determining DCI sizes of the DCI format 0_2 and the DCI format 1_2, and step 5C is replaced with re-determining DCI sizes of the DCI format 0_2 and the DCI format 1_2. For a process of determining the DCI sizes in the two steps, refer to related descriptions of step 3B and step 5B in Embodiment 2. Details are not described again.

According to the multi-carrier scheduling method provided in this embodiment of this application, in the scenario in which the sDCI and the mDCI coexist, a DCI format of the sDCI that coexists with the mDCI is limited. This reduces a quantity of DCI formats that may exist in this scenario, and can reduce duration occupied by a large quantity of alignment operations that may be performed in the process of determining the DCI sizes, to reduce a processing delay and reduce complexity.

In addition, the DCI format 0_1 and the DCI format 1_1 are most commonly used DCI formats in a scheduling process. Therefore, when the terminal device needs to blindly detect a plurality of pieces of DCI including the DCI format 0_1 and the DCI format 1_1 in one time unit, the terminal device first aligns DCI sizes of other DCI formats such as the DCI format 0_3 and the DCI format 1_3, and then aligns the DCI sizes of the DCI format 0_1 and the DCI format 1_1. When the DCI size budget can be met without aligning the DCI sizes of the DCI format 0_1 and the DCI format 1_1, a processing delay and implementation complexity can be reduced.

As described above, in a solution in which a plurality of carriers are scheduled by the mDCI, the mDCI may schedule the plurality of carriers in two scheduling manners. To be specific, in a first scheduling manner, as shown in FIG. 3, the DCI schedules the plurality of carriers by scheduling a plurality of data channels; in a second scheduling manner, as shown in FIG. 4, the DCI schedules the plurality of carriers by scheduling one data channel. The foregoing Embodiment 1 is applicable to either scheduling manner. This is not limited in this embodiment of this application. However, from a perspective of communication overheads, more communication overheads are reduced in Embodiment 1.

The reason is that the mDCI corresponding to the first scheduling manner needs to schedule a plurality of data channels, and related information for transmitting each data channel is indicated by using the mDCI. Therefore, the mDCI corresponding to the first scheduling manner differs greatly from the sDCI. A most intuitive presentation is that the DCI size of the mDCI differs greatly from the DCI size of the sDCI, and the DCI size of the mDCI is larger. If DCI sizes of the plurality of DCI formats in the mDCI are aligned with DCI sizes of the plurality of DCI formats in the sDCI, a large quantity of bit overheads may be increased. For example, the DCI size of the DCI format 0_3 in the mDCI is 100 bits, and the DCI size of the DCI format 0_0 in the sDCI is 50 bits. In a possible alignment manner, 50 bits need to be padded to obtain 100 bits. In this way, a large quantity of bit overheads are increased. In Embodiment 1, in the scenario in which the sDCI and the mDCI can coexist, the DCI format in the sDCI that coexists with the mDCI is limited. When a DCI size of DCI in the mDCI needs to be aligned, only the DCI size of the DCI in the mDCI needs to be aligned, and the DCI size of the mDCI does not need to be aligned with the DCI size of the sDCI, thereby avoiding a large quantity of overheads that may be increased in a process of aligning the DCI size of the mDCI with the DCI size of the sDCI.

**Embodiment 2**

In this embodiment, it is assumed that the six DCI formats of the sDCI and the two defined DCI formats of the mDCI may coexist. In other words, the network device configures eight DCI formats, and the terminal device may blindly detect DCI in the eight formats in a same time unit. The network device and the terminal device determine, based on a defined alignment operation, a DCI size finally used in a blind detection process, and control all DCI sizes to be less than 3.

In some embodiments, the six DCI formats of the sDCI may be a DCI format 0_0, a DCI format 1_0, a DCI format 0_1, a DCI format 1_1, a DCI format 0_2, and a DCI format 1_2.

Because the DCI format 0_0 and the DCI format 1_0 have different DCI sizes in the CSS and the USS, the DCI format 0_0 may have two DCI sizes, the DCI format 1_0 may also have two DCI sizes. The DCI format 0_1, the DCI format 1_1, the DCI format 0_2, the DCI format 1_2, the DCI format 0_3, and the DCI format 1_3 each have one DCI size in the USS. Therefore, in this embodiment, there may be 10 DCI sizes, and the 10 DCI sizes need to be controlled to be within three DCI sizes.

Table 9 shows a step process of Embodiment 2. For descriptions of Table 9, refer to the foregoing descriptions of Table 8. Details are not described again.

**Table 9**

| DCI format | Step 1 | Step 2 | Step 3A | Step 3B | Step 3C | Step 4 | Step 5A | Step 5B | Step 5C | Step 5D | Step 5E |
|---|---|---|---|---|---|---|---|---|---|---|---|
| | | DCI size (DCI size) | | | | | | | | | |
| DCI format 0_0 (CSS) | A | | | | | Check whether a DCI size meets a DCI size budget. If the DCI size does not meet the DCI size budget, perform steps 5A to 5F. If the DCI size meets the DCI size budget, the procedure ends. | | | | | A→L1 |
| DCI format 1_0 (CSS) | A | | | | | | | | | | A→L1 |
| DCI format 0_0 (USS) | | B | | | | | B→A | | | | A→L1 |
| DCI format 1_0 (USS) | | B | | | | | B→A | | | | A→L1 |
| DCI format 0_1 | | | C | | | | | | C→H | | |
| DCI format 1_1 | | | D | | | | | | D→H | | |
| DCI format 0_2 | | | | M | | | | M→K | | | |
| DCI format 1_2 | | | | N | | | | N→K | | | |
| DCI format 0_3 | | | | | E | | | | | E→G | G→L1 |
| DCI format 1_3 | | | | | F | | | | | F→G | G→L1 |

**Step 1.** Perform alignment by using a DCI size of the DCI format 1_0 as a reference, and determine a DCI size of the DCI format 0_0 and the DCI size of the DCI format 1_0 in the CSS. For example, as shown in Table 9, the determined DCI sizes are a size A.

**Step 2.** Perform alignment by using a larger DCI size in the DCI sizes of the DCI format 0_0 and the DCI format 0_1 as a reference, and determine the DCI size of the DCI format 0_0 and the DCI size of the DCI format 1_0 in the USS. For example, as shown in Table 9, the determined DCI sizes are a size B.

**Step 3A.** Determine a DCI size of the DCI format 0_1 and a DCI size of the DCI format 1_1. For example, as shown in Table 9, the determined DCI size of the DCI format 0_1 in the USS is a size C, and the determined DCI size of the DCI format 1_1 in the USS is a size D.

For specific descriptions of step 1 to step 3A, refer to related descriptions of the foregoing three steps respectively in Embodiment 1. Details are not described again.

**Step 3B.** Determine a DCI size of the DCI format 0_2 and a DCI size of the DCI format 1_2.

In this step, the determined DCI size of the DCI format 1_2 is an original bit length, and the determined DCI size of the DCI format 0_2 may be an original bit length of the DCI, or may be a bit length obtained after an alignment operation is performed, which is specifically related to whether the network device configures an SUL carrier for the terminal device.

If the network device does not configure an SUL carrier for the terminal device, the determined DCI size of the DCI format 0_2 is the original bit length.

If the network device configures an SUL carrier for the terminal device, a PUSCH may be sent on the SUL and a non-SUL. If DCI sizes of the DCI format 0_2, in the USS, for scheduling the SUL and the non-SUL are not equal, a larger DCI size needs to be used as a reference, and a zero padding operation needs to be performed on a DCI format 0_2 with a smaller DCI size, so that the DCI sizes of the DCI format 0_2, in the USS, for scheduling the SUL and the non-SUL are equal. For specific descriptions of the process, refer to related descriptions of (a) and (b) in FIG. 6 in step 2. The DCI format 0_0 is replaced with the DCI format 0_2, and details are not described again. In this case, if the DCI format 0_2 configured by the network device for the terminal device is DCI with a smaller length, the DCI size of the DCI format 0_2 determined for the terminal device is a DCI size obtained after a zero padding operation is performed. If the DCI format 0_2 configured by the network device for the terminal device is DCI with a larger length, a zero padding operation does not need to be performed on the DCI format 0_2 with the larger length. In this case, the determined DCI size of the DCI format 0_2 is the original bit length.

In this step, the finally determined DCI size of the DCI format 0_2 may be the same as or different from the DCI size of the DCI format 1_2. For example, as shown in Table 9, the determined DCI size of the DCI format 0_2 is a size M, and the determined DCI size of the DCI format 1_2 is a size N, where M and N may be the same or different.

**Step 3C.** Determine a DCI size of the DCI format 0_3 and a DCI size of the DCI format 1_3. For example, as shown in Table 9, the determined DCI size of the DCI format 0_3 in the USS is a size E, and the determined DCI size of the DCI format 1_3 in the USS is a size F.

For specific descriptions of to step 3C, refer to related descriptions of step 3B in Embodiment 1. Details are not described again.

It should be understood that an execution sequence of step 1 to step 3C is not limited in this embodiment of this application, but step 1 to step 3C need to be performed before step 4.

**Step 4.** Determine whether the determined DCI meets a DCI size budget.

If a quantity of DCI sizes obtained by performing step 1 to step 3C meets the DCI size budget, the DCI sizes determined in step 1 to step 3C are used as DCI sizes finally used in a blind detection process. If the DCI size budget is not met, steps 5A to 5E continue to be performed.

It is assumed that the DCI sizes obtained by performing step 1 to step 3C include the size A, the size B, the size C, the size D, the size E, the size F, the size M, and the size N. If the lengths of all DCIs are different, the quantity of DCI sizes is 8, which is greater than 3, and does not meet the DCI size budget. In this case, steps 5A to 5E continue to be performed.

It should be noted that, in step 1 to step 3C, calculation of the DCI size budget may not be performed. In other words, the terminal device or the network device may not count the quantity of different DCI sizes, and count the quantity after step 1 to step 3C are performed.

**Step 5A.** Re-determine a DCI size of the DCI format 0_0 and a DCI size of the DCI format 1_0 in the USS. For example, as shown in Table 9, the DCI size of the DCI format 0_0 and the DCI size of the DCI format 1_0 in the USS that are finally obtained in this step are changed from the previous size B to the size A.

For specific descriptions of to step 5A, refer to related descriptions of step 5A in Embodiment 1. Details are not described again.

**Step 5B.** Re-determine a DCI size of the DCI format 0_2 and a DCI size of the DCI format 1_2.

In this step, the DCI size of the DCI format 0_2 is aligned with the DCI size of the DCI format 1_2, so that the finally obtained DCI size of the DCI format 0_2 is the same as the DCI size of the DCI format 1_2, that is, DCI sizes of a same length are obtained. For example, as shown in Table 9, the DCI size of the DCI format 0_2 finally obtained by performing step 5B changes from the previous size M to a size K, and the DCI size of the DCI format 1_2 finally obtained by performing step 5B changes from the previous size N to the size K.

In some embodiments, a larger DCI size in the DCI sizes of the DCI format 0_2 and the DCI format 1_2 may be used as a reference, to perform a zero padding operation on the other DCI with a smaller DCI size, to change two DCI sizes into one DCI size.

Refer to (a) in FIG. 10. If the DCI size (before zero padding is performed) of the DCI format 1_2 is less than the DCI size of the DCI format 0_2, a zero padding operation is performed on the DCI format 1_2, and zeros are padded after the DCI format 1_2 as padding, so that the finally determined DCI size of the DCI format 0_2 in the USS is the same as the DCI size of the DCI format 1_2. In this case, the size K in Table 9 is the size M.

Refer to (b) in FIG. 10. If the DCI size (before zero padding is performed) of the DCI format 0_2 is less than the DCI size of the DCI format 1_2, a zero padding operation is performed on the DCI format 0_2, and zeros are padded after the DCI format 0_2 as padding, so that the finally determined DCI size of the DCI format 0_2 in the USS is the same as the DCI size of the DCI format 1_2. In this case, the size K in Table 9 is the size N.

It should be understood that the foregoing manner of aligning lengths of the two pieces of DCI by using the larger DCI size of the DCI format 0_2 and the DCI format 1_2 as a reference is merely an example for description, and any method that can align the lengths of the DCI of the DCI format 0_2 and the DCI of the DCI format 1_2 is feasible. For example, the DCI size of either the DCI format 0_2 or the DCI format 1_2 may be used as a reference, and an alignment operation (a zero padding operation or a truncation operation) may be performed on the other DCI, to align the two DCI sizes, and change the two DCI sizes into one DCI size.

After step 5B is performed, one DCI size is further reduced. It is assumed that the DCI sizes obtained by performing step 5B include the size A, the size C, the size D, the size K, the size E, and the size F. If the lengths of all DCIs are different, the quantity of DCI sizes is 6, which is greater than 3, and does not meet the DCI size budget. In this case, step 5C is performed.

**Step 5C.** Re-determine a DCI size of the DCI format 0_1 and a DCI size of the DCI format 1_1. For example, as shown in Table 9, the DCI size of the DCI format 0_1 finally obtained by performing step 5C changes from the previous size C to a size H, and the DCI size of the DCI format 1_1 finally obtained by performing step 5C changes from the previous size D to the size H.

For specific descriptions of step 5C, refer to related descriptions of step 5C in Embodiment 1. Details are not described again.

After step 5C is performed, one DCI size is further reduced. It is assumed that the DCI sizes obtained by performing step 5C include the size A, the size H, the size K, the size E, and the size F. If the lengths of all DCIs are different, the quantity of DCI sizes is 5, which is greater than 3, and does not meet the DCI size budget. In this case, step 5D is performed.

**Step 5D.** Re-determine a DCI size of the DCI format 0_3 and a DCI size of the DCI format 1_3. For example, as shown in Table 9, the DCI size of the DCI format 0_3 finally obtained by performing step 5D changes from the previous size E to a size G, and the DCI size of the DCI format 1_3 finally obtained by performing step 5D changes from the previous size F to the size G.

For specific descriptions of to step 5D, refer to related descriptions above. Details are not described again.

After step 5D is performed, one DCI size is further reduced. It is assumed that the DCI sizes obtained by performing step 5D include the size A, the size H, the size K, and the size G. If the lengths of all DCIs are different, the quantity of DCI sizes is 5, which is greater than 3, and does not meet the DCI size budget. In this case, step 5E is performed.

**Step 5E.** Align the DCI sizes of the DCI format 0_3 and the DCI format 1_3 with the DCI sizes of the DCI format 0_0 and the DCI format 1_0 in the CSS and the USS.

Before step 5E, the DCI sizes of the DCI format 0_3 and the DCI format 1_3 have been aligned, and the DCI sizes of the DCI format 0_0 and the DCI format 1_0 in the USS and the CSS have been aligned. Therefore, in this step, the four DCI formats have only two DCI sizes, and the two DCI sizes only need to be aligned to obtain one DCI size. For example, as shown in Table 9, the DCI sizes of the DCI format 0_3 and the DCI format 1_3 that are finally obtained by performing step 5E change from the previous size G to a size L1, and the DCI sizes of the DCI format 0_0 and the DCI format 1_0 that are in the USS and the CSS and that are finally obtained by performing step 5E change from the previous size A to the size L1.

In some embodiments, a larger DCI size in the DCI sizes (for example, the size G) of the DCI format 0_3 and the DCI format 1_3 and the DCI sizes (for example, the size A) of the DCI format 0_0 and the DCI format 1_0 may be used as a reference, to perform a zero padding operation on remaining DCI with smaller DCI sizes, to change two DCI sizes into one DCI size.

If the DCI sizes (for example, the size A) of the DCI format 0_0 and the DCI format 1_0 are smaller than the DCI sizes (for example, the size G) of the DCI format 0_3 and the DCI format 1_3, a same zero padding operation is performed on the DCI format 0_0 and the DCI format 1_0, and zeros are padded after the DCI format 0_0 and the DCI format 1_0 as padding, so that the finally determined DCI sizes of the DCI format 0_0 and the DCI format 1_0 are the same as the DCI sizes of the DCI format 0_3 and the DCI format 1_3. In this case, the size L1 in Table 9 is the size G.

If the DCI sizes (for example, the size G) of the DCI format 0_3 and the DCI format 1_3 are smaller than the DCI sizes (for example, the size A) of the DCI format 0_0 and the DCI format 1_0, a same zero padding operation is performed on the DCI format 0_3 and the DCI format 1_3, and zeros are padded after the DCI format 0_3 and the DCI format 1_3 as padding, so that the finally determined DCI sizes of the DCI format 0_0 and the DCI format 1_0 are the same as the DCI sizes of the DCI format 0_3 and the DCI format 1_3. In this case, the size L1 in Table 9 is the size A.

It should be understood that the foregoing manner of aligning the DCI sizes (for example, the size G) of the DCI format 0_3 and the DCI format 1_3 and the DCI sizes (for example, the size A) of the DCI format 0_0 and the DCI format 1_0 by using a larger DCI size in the two DCI sizes as a reference is merely an example for description. Any method that can align the DCI sizes of the four pieces of DCI is feasible. For example, any DCI size in the DCI sizes (for example, the size G) of the DCI format 0_3 and the DCI format 1_3 and the DCI sizes (for example, the size A) of the DCI format 0_0 and the DCI format 1_0 may be used as a reference, to perform a same alignment operation (a zero padding operation or a truncation operation) on the remaining two pieces of DCI, to align the two DCI sizes and change the two DCI sizes into one DCI size.

After step 5E, one DCI size is further reduced, and whether the determined DCI meets the DCI size budget is further determined. If a quantity of DCI sizes obtained by performing step 1 to step 5E meets the DCI size budget, the DCI sizes determined in step 1 to step 5E are used as finally used in a blind detection process.

It is assumed that after step 5E, the obtained DCI sizes include the size L1, the size H, and the size K. If all DCI sizes are different, a quantity of DCI sizes is 3, and a DCI size budget is met. In this case, the size L1, the size H, and the size K are DCI sizes finally used in a blind detection process, and the terminal device separately performs blind detection on the DCI by using the size L1, the size H, and the size K, to obtain the DCI sent by the network device.

It should be understood that an execution sequence of step 5A to step 5E is not limited in this embodiment of this application, and the foregoing execution sequence is merely an example for description.

According to the multi-carrier scheduling method provided in this embodiment of this application, in the scenario in which the sDCI and the mDCI coexist, after DCI sizes of a same series (for example, a DCI format x_0, a DCI format x_1, a DCI format x_2, or a DCI format x_3) are aligned, the DCI size of the DCI format x_3 is aligned with the DCI size of the DCI format x_0, so that a quantity of DCI sizes is controlled to be 3, thereby meeting the DCI size budget, reducing blind detection complexity, and improving system transmission performance.

**Embodiment 3**

DCI formats of the mDCI and the sDCI that can coexist in this embodiment are the same as those defined in Embodiment 2, and the DCI formats of the mDCI and the sDCI that can coexist are shown in Table 10, including: a DCI format 0_0 in a CSS, a DCI format 1_0 in the CSS, a DCI format 0_0 in a USS, and a DCI format 1_0, a DCI format 0_1, a DCI format 1_1, a DCI format 0_2, a DCI format 1_2, a DCI format 0_3, and a DCI format 1_3 in the USS. There may be 10 DCI sizes for the foregoing eight DCI formats, and the 10 DCI sizes need to be controlled to be within three DCI sizes. A difference between Embodiment 3 and Embodiment 2 lies in that, in step 5E, the DCI sizes of the DCI format 0_2 and the DCI format 1_2 are aligned with the DCI sizes of the DCI format 0_0 and the DCI format 1_0 in the CSS and the USS.

**Table 10**

| DCI format | Step 1 | Step 2 | Step 3A | Step 3B | Step 3C | Step 4 | Step 5A | Step 5B | Step 5C | Step 5D | Step 5E |
|---|---|---|---|---|---|---|---|---|---|---|---|
| | | DCI size (DCI size) | | | | | | | | | |
| DCI format 0_0 (CSS) | A | | | | | Check whether a DCI size meets a DCI size budget. If the DCI size does not meet the DCI size budget, perform steps 5A to 5F. If the DCI size meets the DCI size budget, the procedure ends. | | | | | A→L2 |
| DCI format 1_0 (CSS) | A | | | | | | | | | | A→L2 |
| DCI format 0_0 (USS) | | B | | | | | B→A | | | | A→L2 |
| DCI format 1_0 (USS) | | B | | | | | B→A | | | | A→L2 |
| DCI format 0_1 | | | C | | | | | | C→H | | |
| DCI format 1_1 | | | D | | | | | | D→H | | |
| DCI format 0 2 | | | | M | | | | M→K | | | K→L2 |
| DCI format 1_2 | | | | N | | | | N→K | | | K→L2 |
| DCI format 0_3 | | | | | E | | | | | E→G | |
| DCI format 1_3 | | | | | F | | | | | F→G | |

**Step 1.** Perform alignment by using a DCI size of the DCI format 1_0 as a reference, and determine a DCI size of the DCI format 0_0 and the DCI size of the DCI format 1_0 in the CSS.

**Step 2.** Perform alignment by using a larger DCI size in the DCI sizes of the DCI format 0_0 and the DCI format 0_1 as a reference, and determine the DCI size of the DCI format 0_0 and the DCI size of the DCI format 1_0 in the USS.

**Step 3A.** Determine a DCI size of the DCI format 0_1 and a DCI size of the DCI format 1_1.

**Step 3B.** Determine a DCI size of the DCI format 0_2 and a DCI size of the DCI format 1_2.

**Step 3C.** Determine a DCI size of the DCI format 0_3 and a DCI size of the DCI format 1_3.

**Step 4.** Determine whether the determined DCI meets a DCI size budget.

**Step 5A.** Re-determine a DCI size of the DCI format 0_0 and a DCI size of the DCI format 1_0 in the USS.

**Step 5B.** Re-determine a DCI size of the DCI format 0_2 and a DCI size of the DCI format 1_2.

**Step 5C.** Re-determine a DCI size of the DCI format 0_1 and a DCI size of the DCI format 1_1.

**Step 5D.** Re-determine a DCI size of the DCI format 0_3 and a DCI size of the DCI format 1_3.

Processes of step 1 to step 5D are respectively the same as the processes of step 1 to step 5D in Embodiment 2. Therefore, for specific descriptions of step 1 to step 5D, refer to related descriptions of each step in Embodiment 2. Details are not described again.

**Step 5E.** Align the DCI sizes of the DCI format 0_2 and the DCI format 1_2 with the DCI sizes of the DCI format 0_0 and the DCI format 1_0 in the CSS and the USS.

Before step 5E, the DCI sizes of the DCI format 0_2 and the DCI format 1_2 have been aligned, and the DCI sizes of the DCI format 0_0 and the DCI format 1_0 in the USS and the CSS have been aligned. Therefore, in this step, the four DCI formats have only two DCI sizes, and the two DCI sizes only need to be aligned to obtain one DCI size. For example, as shown in Table 10, the DCI sizes of the DCI format 0_2 and the DCI format 1_2 that are finally obtained by performing step 5E change from the previous size K to a size L2, and the DCI sizes of the DCI format 0_0 and the DCI format 1_0 that are in the USS and the CSS and that are finally obtained by performing step 5E change from the previous size A to the size L2.

In some embodiments, a larger DCI size in the DCI sizes (for example, the size K) of the DCI format 0_2 and the DCI format 1_2 and the DCI sizes (for example, the size A) of the DCI format 0_0 and the DCI format 1_0 may be used as a reference, to perform a zero padding operation on remaining DCI with smaller DCI sizes, to change two DCI sizes into one DCI size.

If the DCI sizes (for example, the size A) of the DCI format 0_0 and the DCI format 1_0 are smaller than the DCI sizes (for example, the size K) of the DCI format 0_2 and the DCI format 1_2, a same zero padding operation is performed on the DCI format 0_0 and the DCI format 1_0, and zeros are padded after the DCI format 0_0 and the DCI format 1_0 as padding, so that the finally determined DCI sizes of the DCI format 0_0 and the DCI format 1_0 are the same as the DCI sizes of the DCI format 0_2 and the DCI format 1_2. In this case, the size L2 in Table 10 is the size K.

If the DCI sizes (for example, the size K) of the DCI format 0_2 and the DCI format 1_2 are smaller than the DCI sizes (for example, the size A) of the DCI format 0_0 and the DCI format 1_0, a same zero padding operation is performed on the DCI format 0_2 and the DCI format 1_2, and zeros are padded after the DCI format 0_2 and the DCI format 1_2 as padding, so that the finally determined DCI sizes of the DCI format 0_0 and the DCI format 1_0 are the same as the DCI sizes of the DCI format 0_3 and the DCI format 1_3. In this case, the size L2 in Table 10 is the size A.

It should be understood that the foregoing manner of aligning the DCI sizes (for example, the size K) of the DCI format 0_2 and the DCI format 1_2 and the DCI sizes (for example, the size A) of the DCI format 0_0 and the DCI format 1_0 by using a larger DCI size in the two DCI sizes as a reference is merely an example for description. Any method that can align the DCI sizes of the four pieces of DCI is feasible. For example, any DCI size in the DCI sizes (for example, the size K) of the DCI format 0_2 and the DCI format 1_2 and the DCI sizes (for example, the size A) of the DCI format 0_0 and the DCI format 1_0 may be used as a reference, to perform a same alignment operation (a zero padding operation or a truncation operation) on the remaining two pieces of DCI, to align the two DCI sizes and change the two DCI sizes into one DCI size.

After step 5E, one DCI size is further reduced, and whether the determined DCI meets the DCI size budget is further determined. If a quantity of DCI sizes obtained by performing step 1 to step 5E meets the DCI size budget, the DCI sizes determined in step 1 to step 5E are used as finally used in a blind detection process.

It is assumed that after step 5E, the obtained DCI sizes include the size L2, the size H, and the size G. If all DCI sizes are different, a quantity of DCI sizes is 3, and a DCI size budget is met. In this case, the size L2, the size H, and the size G are DCI sizes finally used in a blind detection process, and the terminal device separately performs blind detection on the DCI by using the size L2, the size H, and the size G, to obtain the DCI sent by the network device.

It should be understood that an execution sequence of step 5A to step 5E is not limited in this embodiment of this application, and the foregoing execution sequence is merely an example for description.

According to the multi-carrier scheduling method provided in this embodiment of this application, in the scenario in which the sDCI and the mDCI coexist, after DCI sizes of a same series (for example, a DCI format x_0, a DCI format x_1, a DCI format x_2, or a DCI format x_3) are aligned, the DCI size of the DCI format x_2 is aligned with the DCI size of the DCI format x_0, so that a quantity of DCI sizes is controlled to be 3, thereby meeting the DCI size budget, reducing blind detection complexity, and improving system transmission performance. In addition, because the DCI sizes of the DCI format x_2 and the DCI format x_0 are not greatly different, in a process of aligning the DCI sizes of the DCI format x_2 and the DCI format x_0, when one of the DCI size corresponding to the DCI format x_2 and the DCI size corresponding to the DCI format x_0 needs to be used as a reference to perform a zero padding operation on DCI sizes corresponding to another series of DCI, a small quantity of bits are increased. This can avoid a problem that a large quantity of overheads may be increased in a DCI size alignment process.

### Embodiment 4

DCI formats of the mDCI and the sDCI that can coexist in this embodiment are the same as those defined in Embodiment 2, and the DCI formats of the mDCI and the sDCI that can coexist are shown in Table 11, including: a DCI format 0_0 in a CSS, a DCI format 1_0 in the CSS, a DCI format 0_0 in a USS, and a DCI format 1_0, a DCI format 0_1, a DCI format 1_1, a DCI format 0_2, a DCI format 1_2, a DCI format 0_3, and a DCI format 1_3 in the USS. There may be 10 DCI sizes for the foregoing eight DCI formats, and the 10 DCI sizes need to be controlled to be within three DCI sizes. A difference between Embodiment 4 and Embodiment 2 lies in that, in step 5E, the DCI sizes of the DCI format 0_1 and the DCI format 1_1 are aligned with the DCI sizes of the DCI format 0_0 and the DCI format 1_0 in the CSS and the USS.

**Table 11**

| DCI format | Step 1 | Step 2 | Step 3A | Step 3B | Step 3C | Step 4 | Step 5A | Step 5B | Step 5C | Step 5D | Step 5E |
|---|---|---|---|---|---|---|---|---|---|---|---|
| | | DCI size (DCI size) | | | | | | | | | |
| DCI format 0_0 (CSS) | A | | | | | Check whether a DCI size meets a DCI size budget. If the DCI size does not meet the DCI size budget, perform steps 5A to | | | | | A→L3 |
| DCI format 1_0 (CSS) | A | | | | | | | | | | A→L3 |
| DCI format 0_0 (USS) | | B | | | | | B→A | | | | A→L3 |
| DCI format 1_0 (USS) | | B | | | | | B→A | | | | A→L3 |
| DCI format 0_1 | | | C | | | | | | C→H | | H→L3 |
| DCI format 1_1 | | | D | | | | | | D→H | | H→L3 |
| DCI format 0_2 | | | | M | | 5F. If the DCI size meets the DCI size budget, the procedure ends. | | M→K | | | |
| DCI format 1_2 | | | | N | | | | N→K | | | |
| DCI format 0_3 | | | | | E | | | | | E→G | |
| DCI format 1_3 | | | | | F | | | | | F→G | |

**Step 1.** Perform alignment by using a DCI size of the DCI format 1_0 as a reference, and determine a DCI size of the DCI format 0_0 and the DCI size of the DCI format 1_0 in the CSS.

**Step 2.** Perform alignment by using a larger DCI size in the DCI sizes of the DCI format 0_0 and the DCI format 0_1 as a reference, and determine the DCI size of the DCI format 0_0 and the DCI size of the DCI format 1_0 in the USS.

**Step 3A.** Determine a DCI size of the DCI format 0_1 and a DCI size of the DCI format 1_1.

**Step 3B.** Determine a DCI size of the DCI format 0_2 and a DCI size of the DCI format 1_2.

**Step 3C.** Determine a DCI size of the DCI format 0_3 and a DCI size of the DCI format 1_3.

**Step 4.** Determine whether the determined DCI meets a DCI size budget.

**Step 5A.** Re-determine a DCI size of the DCI format 0_0 and a DCI size of the DCI format 1_0 in the USS.

**Step 5B.** Re-determine a DCI size of the DCI format 0_2 and a DCI size of the DCI format 1_2.

**Step 5C.** Re-determine a DCI size of the DCI format 0_1 and a DCI size of the DCI format 1_1.

**Step 5D.** Re-determine a DCI size of the DCI format 0_3 and a DCI size of the DCI format 1_3.

Processes of step 1 to step 5D are respectively the same as the processes of step 1 to step 5D in Embodiment 1. Therefore, for specific descriptions of step 1 to step 5D, refer to related descriptions of each step in Embodiment 2. Details are not described again.

**Step 5E.** Align the DCI sizes of the DCI format 0_1 and the DCI format 1_1 with the DCI sizes of the DCI format 0_0 and the DCI format 1_0 in the CSS and the USS.

Before step 5E, the DCI sizes of the DCI format 0_1 and the DCI format 1_1 have been aligned, and the DCI sizes of the DCI format 0_0 and the DCI format 1_0 in the USS and the CSS have been aligned. Therefore, in this step, the four DCI formats have only two DCI sizes, and the two DCI sizes only need to be aligned to obtain one DCI size. For example, as shown in Table 11, the DCI sizes of the DCI format 0_1 and the DCI format 1_1 that are finally obtained by performing step 5E change from the previous size H to a size L3, and the DCI sizes of the DCI format 0_0 and the DCI format 1_0 that are in the USS and the CSS and that are finally obtained by performing step 5E change from the previous size A to the size L3.

In some embodiments, a larger DCI size in the DCI sizes (for example, the size H) of the DCI format 0_1 and the DCI format 1_1 and the DCI sizes (for example, the size A) of the DCI format 0_0 and the DCI format 1_0 may be used as a reference, to perform a zero padding operation on remaining DCI with smaller DCI sizes, to change two DCI sizes into one DCI size.

If the DCI sizes (for example, the size A) of the DCI format 0_0 and the DCI format 1_0 are smaller than the DCI sizes (for example, the size H) of the DCI format 0_1 and the DCI format 1_1, a same zero padding operation is performed on the DCI format 0_0 and the DCI format 1_0, and zeros are padded after the DCI format 0_0 and the DCI format 1_0 as padding, so that the finally determined DCI sizes of the DCI format 0_0 and the DCI format 1_0 are the same as the DCI sizes of the DCI format 0_1 and the DCI format 1_1. In this case, the size L3 in Table 11 is the size H.

If the DCI sizes (for example, the size H) of the DCI format 0_1 and the DCI format 1_1 are smaller than the DCI sizes (for example, the size A) of the DCI format 0_0 and the DCI format 1_0, a same zero padding operation is performed on the DCI format 0_1 and the DCI format 1_1, and zeros are padded after the DCI format 0_1 and the DCI format 1_1 as padding, so that the finally determined DCI sizes of the DCI format 0_0 and the DCI format 1_0 are the same as the DCI sizes of the DCI format 0_3 and the DCI format 1_3. In this case, the size L3 in Table 11 is the size A.

It should be understood that the foregoing manner of aligning the DCI sizes (for example, the size H) of the DCI format 0_1 and the DCI format 1_1 and the DCI sizes (for example, the size A) of the DCI format 0_0 and the DCI format 1_0 by using a larger DCI size in the two DCI sizes as a reference is merely an example for description. Any method that can align the DCI sizes of the four pieces of DCI is feasible. For example, any DCI size in the DCI sizes (for example, the size H) of the DCI format 0_1 and the DCI format 1_1 and the DCI sizes (for example, the size A) of the DCI format 0_0 and the DCI format 1_0 may be used as a reference, to perform a same alignment operation (a zero padding operation or a truncation operation) on the remaining two pieces of DCI, to align the two DCI sizes and change the two DCI sizes into one DCI size.

After step 5E, one DCI size is further reduced, and whether the determined DCI meets the DCI size budget is further determined. If a quantity of DCI sizes obtained by performing step 1 to step 5E meets the DCI size budget, the DCI sizes determined in step 1 to step 5E are used as finally used in a blind detection process.

It is assumed that after step 5E, the obtained DCI sizes include the size L3, the size K, and the size G. If all DCI sizes are different, a quantity of DCI sizes is 3, and a DCI size budget is met. In this case, the size L3, the size K, and the size G are DCI sizes finally used in a blind detection process, and the terminal device separately performs blind detection on the DCI by using the size L3, the size K, and the size G, to obtain the DCI sent by the network device.

It should be understood that an execution sequence of step 5A to step 5E is not limited in this embodiment of this application, and the foregoing execution sequence is merely an example for description.

According to the multi-carrier scheduling method provided in this embodiment of this application, in a scenario in which sDCI and mDCI coexist, after a DCI size of a same series (for example, a DCI format x_0, DCI format x_1, a DCI format x_2, or a DCI format x_3) is aligned, a DCI size of a DCI format x_1 is aligned with a DCI size of a DCI format x_0, so that a quantity of DCI sizes is controlled to be 3, thereby meeting a DCI size budget, reducing blind detection complexity, and improving system transmission performance.

**Embodiment 5**

DCI formats of the mDCI and the sDCI that can coexist in this embodiment are the same as those defined in Embodiment 2, and the DCI formats of the mDCI and the sDCI that can coexist are shown in Table 12, including: a DCI format 0_0 in a CSS, a DCI format 1_0 in the CSS, a DCI format 0_0 in a USS, and a DCI format 1_0, a DCI format 0_1, a DCI format 1_1, a DCI format 0_2, a DCI format 1_2, a DCI format 0_3, and a DCI format 1_3 in the USS. There may be 10 DCI sizes for the foregoing eight DCI formats, and the 10 DCI sizes need to be controlled to be within three DCI sizes. A difference between Embodiment 5 and Embodiment 2 lies in that, in step 5E, the DCI sizes of the DCI format 0_1 and the DCI format 1_1 are aligned with the DCI sizes of the DCI format 0_3 and the DCI format 1_3.

**Table 12**

| DCI format | Step 1 | Step 2 | Step 3A | Step 3B | Step 3C | Step 4 | Step 5A | Step 5B | Step 5C | Step 5D | Step 5E |
|---|---|---|---|---|---|---|---|---|---|---|---|
| | | DCI size (DCI size) | | | | | | | | | |
| DCI format 0_0 (CSS) | A | | | | | Check whether a DCI size meets a DCI size budget. If the DCI size does not meet the DCI size budget, perform steps 5A to 5F. If the DCI size meets the DCI size budget, the procedure ends. | | | | | |
| DCI format 1_0 (CSS) | A | | | | | | | | | | |
| DCI format 0_0 (USS) | | B | | | | | B→A | | | | |
| DCI format 1_0 (USS) | | B | | | | | B→A | | | | |
| DCI format 0_1 | | | C | | | | | | C→H | | H→L4 |
| DCI format 1_1 | | | D | | | | | | D→H | | H→L4 |
| DCI format 0 2 | | | | M | | | | M→K | | | |
| DCI format 1_2 | | | | N | | | | N→K | | | |
| DCI format 0_3 | | | | | E | | | | | E→G | G→L4 |
| DCI format 1_3 | | | | | F | | | | | F→G | G→L4 |

**Step 1.** Perform alignment by using a DCI size of the DCI format 1_0 as a reference, and determine a DCI size of the DCI format 0_0 and the DCI size of the DCI format 1_0 in the CSS.

**Step 2.** Perform alignment by using a larger DCI size in the DCI sizes of the DCI format 0_0 and the DCI format 0_1 as a reference, and determine the DCI size of the DCI format 0_0 and the DCI size of the DCI format 1_0 in the USS.

**Step 3A.** Determine a DCI size of the DCI format 0_1 and a DCI size of the DCI format 1_1.

**Step 3B.** Determine a DCI size of the DCI format 0_2 and a DCI size of the DCI format 1_2.

**Step 3C.** Determine a DCI size of the DCI format 0_3 and a DCI size of the DCI format 1_3.

**Step 4.** Determine whether the determined DCI meets a DCI size budget.

**Step 5A.** Re-determine a DCI size of the DCI format 0_0 and a DCI size of the DCI format 1_0 in the USS.

**Step 5B.** Re-determine a DCI size of the DCI format 0_2 and a DCI size of the DCI format 1_2.

**Step 5C.** Re-determine a DCI size of the DCI format 0_1 and a DCI size of the DCI format 1_1.

**Step 5D.** Re-determine a DCI size of the DCI format 0_3 and a DCI size of the DCI format 1_3.

Processes of step 1 to step 5D are respectively the same as the processes of step 1 to step 5D in Embodiment 1. Therefore, for specific descriptions of step 1 to step 5D, refer to related descriptions of each step in Embodiment 2. Details are not described again.

**Step 5E.** Align the DCI sizes of the DCI format 0_1 and the DCI format 1_1 with the DCI sizes of the DCI format 0_3 and the DCI format 1_3.

Before step 5E, the DCI sizes (for example, the size H) of the DCI format 0_1 and the DCI format 1_1 have been aligned, and the DCI sizes (for example, the size G) of the DCI format 0_3 and the DCI format 1_3 have been aligned. Therefore, in this step, the four DCI formats have only two DCI sizes, and the two DCI sizes only need to be aligned to obtain one DCI size. For example, as shown in Table 12, the DCI sizes of the DCI format 0_1 and the DCI format 1_1 that are finally obtained by performing step 5E change from the previous size H to a size L4, and the DCI sizes of the DCI format 0_3 and the DCI format 1_3 that are finally obtained by performing step 5E change from the previous size G to the size L4.

In some embodiments, a larger DCI size in the DCI sizes (for example, the size H) of the DCI format 0_1 and the DCI format 1_1 and the DCI sizes (for example, the size G) of the DCI format 0_3 and the DCI format 1_3 may be used as a reference, to perform a zero padding operation on remaining DCI with smaller DCI sizes, to change two DCI sizes into one DCI size.

If the DCI sizes (for example, the size H) of the DCI format 0_1 and the DCI format 1_1 are smaller than the DCI sizes (for example, the size G) of the DCI format 0_3 and the DCI format 1_3, a same zero padding operation is performed on the DCI format 0_1 and the DCI format 1_1, and zeros are padded after the DCI format 0_1 and the DCI format 1_1 as padding, so that the finally determined DCI sizes of the DCI format 0_1 and the DCI format 1_1 are the same as the DCI sizes of the DCI format 0_3 and the DCI format 1_3. In this case, the size L4 in Table 12 is the size G.

If the DCI sizes (for example, the size G) of the DCI format 0_3 and the DCI format 1_3 are smaller than the DCI sizes (for example, the size H) of the DCI format 0_1 and the DCI format 1_1, a same zero padding operation is performed on the DCI format 0_3 and the DCI format 1_3, and zeros are padded after the DCI format 0_3 and the DCI format 1_3 as padding, so that the finally determined DCI sizes of the DCI format 0_3 and the DCI format 1_3 are the same as the DCI sizes of the DCI format 0_1 and the DCI format 1_1. In this case, the size L4 in Table 12 is the size H.

It should be understood that the foregoing manner of aligning the DCI sizes (for example, the size H) of the DCI format 0_1 and the DCI format 1_1 and the DCI sizes (for example, the size G) of the DCI format 0_3 and the DCI format 1_3 by using a larger DCI size in the two DCI sizes as a reference is merely an example for description. Any method that can align the DCI sizes of the four pieces of DCI is feasible. For example, any DCI size in the DCI sizes (for example, the size H) of the DCI format 0_1 and the DCI format 1_1 and the DCI sizes (for example, the size G) of the DCI format 0_3 and the DCI format 1_3 may be used as a reference, to perform a same alignment operation (a zero padding operation or a truncation operation) on the remaining two pieces of DCI, to align the two DCI sizes and change the two DCI sizes into one DCI size.

After step 5E, one DCI size is further reduced, and whether the determined DCI meets the DCI size budget is further determined. If a quantity of DCI sizes obtained by performing step 1 to step 5E meets the DCI size budget, the DCI sizes determined in step 1 to step 5E are used as finally used in a blind detection process.

It is assumed that after step 5E, the obtained DCI sizes include the size L4, the size A, and the size K. If all DCI sizes are different, a quantity of DCI sizes is 3, and a DCI size budget is met. In this case, the size L4, the size A, and the size K are DCI sizes finally used in a blind detection process, and the terminal device separately performs blind detection on the DCI by using the size L4, the size A, and the size K, to obtain the DCI sent by the network device.

It should be understood that an execution sequence of step 5A to step 5E is not limited in this embodiment of this application, and the foregoing execution sequence is merely an example for description.

According to the multi-carrier scheduling method provided in this embodiment of this application, in a scenario in which sDCI and mDCI coexist, after a DCI size of a same series (for example, a DCI format x_0, DCI format x_1, a DCI format x_2, or a DCI format x_3) is aligned, a DCI size of a DCI format x_3 is aligned with a DCI size of a DCI format x_1, so that a quantity of DCI sizes is controlled to be 3, thereby meeting a DCI size budget, reducing blind detection complexity, and improving system transmission performance. In addition, because the DCI sizes of the DCI format x_3 and the DCI format x_1 are not greatly different, in a process of aligning the DCI sizes of the DCI format x_3 and the DCI format x_1, when one of the DCI size corresponding to the DCI format x_3 and the DCI size corresponding to the DCI format x_1 needs to be used as a reference to perform a zero padding operation on DCI sizes corresponding to another series of DCI, a small quantity of bits are increased. This can avoid a problem that a large quantity of overheads may be increased in a DCI size alignment process.

**Embodiment 6**

DCI formats of the mDCI and the sDCI that can coexist in this embodiment are the same as those defined in Embodiment 2, and the DCI formats of the mDCI and the sDCI that can coexist are shown in Table 13, including: a DCI format 0_0 in a CSS, a DCI format 1_0 in the CSS, a DCI format 0_0 in a USS, and a DCI format 1_0, a DCI format 0_1, a DCI format 1_1, a DCI format 0_2, a DCI format 1_2, a DCI format 0_3, and a DCI format 1_3 in the USS. There may be 10 DCI sizes for the foregoing eight DCI formats, and the 10 DCI sizes need to be controlled to be within three DCI sizes. A difference between Embodiment 6 and Embodiment 2 lies in that, in step 5E, the DCI sizes of the DCI format 0_2 and the DCI format 1_2 are aligned with the DCI sizes of the DCI format 0_3 and the DCI format 1_3.

**Table 13**

| DCI format | Step 1 | Step 2 | Step 3A | Step 3B | Step 3C | Step 4 | Step 5A | Step 5B | Step 5C | Step 5D | Step 5E |
|---|---|---|---|---|---|---|---|---|---|---|---|
| DCI format 0_0 (CSS) | A | | | | | Check whether a DCI size meets a DCI size budget. If the DCI size does not meet the DCI size budget, perform steps 5A to 5F. If the DCI size meets the DCI size budget, the procedure ends. | | | | | |
| DCI format 1_0 (CSS) | A | | | | | | | | | | |
| DCI format 0_0 (USS) | | B | | | | | B→A | | | | |
| DCI format 1_0 (USS) | | B | | | | | B→A | | | | |
| DCI format 0_1 | | | C | | | | | | C→H | | |
| DCI format 1_1 | | | D | | | | | | D→H | | |
| DCI format 0 2 | | | | M | | | | M→K | | | K→L 5 |
| DCI format 1_2 | | | | N | | | | N→K | | | K→L 5 |
| DCI format 0_3 | | | | | E | | | | | E→G | G→L5 |
| DCI format 1_3 | | | | | F | | | | | F→G | G→L5 |

**Step 1.** Perform alignment by using a DCI size of the DCI format 1_0 as a reference, and determine a DCI size of the DCI format 0_0 and the DCI size of the DCI format 1_0 in the CSS.

**Step 2.** Perform alignment by using a larger DCI size in the DCI sizes of the DCI format 0_0 and the DCI format 0_1 as a reference, and determine the DCI size of the DCI format 0_0 and the DCI size of the DCI format 1_0 in the USS.

**Step 3A.** Determine a DCI size of the DCI format 0_1 and a DCI size of the DCI format 1_1.

**Step 3B.** Determine a DCI size of the DCI format 0_2 and a DCI size of the DCI format 1_2.

**Step 3C.** Determine a DCI size of the DCI format 0_3 and a DCI size of the DCI format 1_3.

**Step 4.** Determine whether the determined DCI meets a DCI size budget.

**Step 5A.** Re-determine a DCI size of the DCI format 0_0 and a DCI size of the DCI format 1_0 in the USS.

**Step 5B.** Re-determine a DCI size of the DCI format 0_2 and a DCI size of the DCI format 1_2.

**Step 5C.** Re-determine a DCI size of the DCI format 0_1 and a DCI size of the DCI format 1_1.

**Step 5D.** Re-determine a DCI size of the DCI format 0_3 and a DCI size of the DCI format 1_3.

Processes of step 1 to step 5D are respectively the same as the processes of step 1 to step 5D in Embodiment 1. Therefore, for specific descriptions of step 1 to step 5D, refer to related descriptions of each step in Embodiment 2. Details are not described again.

**Step 5E.** Align the DCI sizes of the DCI format 0_2 and the DCI format 1_2 with the DCI sizes of the DCI format 0_3 and the DCI format 1_3.

Before step 5E, the DCI sizes (for example, the size K) of the DCI format 0_2 and the DCI format 1_2 have been aligned, and the DCI sizes (for example, the size G) of the DCI format 0_3 and the DCI format 1_3 have been aligned. Therefore, in this step, the four DCI formats have only two DCI sizes, and the two DCI sizes only need to be aligned to obtain one DCI size. For example, as shown in Table 13, the DCI sizes of the DCI format 0_2 and the DCI format 1_2 that are finally obtained by performing step 5E change from the previous size K to a size L5, and the DCI sizes of the DCI format 0_3 and the DCI format 1_3 that are finally obtained by performing step 5E change from the previous size G to the size L5.

In some embodiments, a larger DCI size in the DCI sizes (for example, the size K) of the DCI format 0_2 and the DCI format 1_2 and the DCI sizes (for example, the size G) of the DCI format 0_3 and the DCI format 1_3 may be used as a reference, to perform a zero padding operation on remaining DCI with smaller DCI sizes, to change two DCI sizes into one DCI size.

If the DCI sizes (for example, the size K) of the DCI format 0_2 and the DCI format 1_2 are smaller than the DCI sizes (for example, the size G) of the DCI format 0_3 and the DCI format 1_3, a same zero padding operation is performed on the DCI format 0_2 and the DCI format 1_2, and zeros are padded after the DCI format 0_2 and the DCI format 1_2 as padding, so that the finally determined DCI sizes of the DCI format 0_2 and the DCI format 1_2 are the same as the DCI sizes of the DCI format 0_3 and the DCI format 1_3. In this case, the size L5 in Table 13 is the size G.

If the DCI sizes (for example, the size G) of the DCI format 0_3 and the DCI format 1_3 are smaller than the DCI sizes (for example, the size K) of the DCI format 0_2 and the DCI format 1_2, a same zero padding operation is performed on the DCI format 0_3 and the DCI format 1_3, and zeros are padded after the DCI format 0_3 and the DCI format 1_3 as padding, so that the finally determined DCI sizes of the DCI format 0_3 and the DCI format 1_3 are the same as the DCI sizes of the DCI format 0_2 and the DCI format 1_2. In this case, the size L5 in Table 12 is the size K.

It should be understood that the foregoing manner of aligning the DCI sizes (for example, the size K) of the DCI format 0_2 and the DCI format 1_2 and the DCI sizes (for example, the size G) of the DCI format 0_3 and the DCI format 1_3 by using a larger DCI size in the two DCI sizes as a reference is merely an example for description. Any method that can align the DCI sizes of the four pieces of DCI is feasible. For example, any DCI size in the DCI sizes (for example, the size K) of the DCI format 0_2 and the DCI format 1_2 and the DCI sizes (for example, the size G) of the DCI format 0_3 and the DCI format 1_3 may be used as a reference, to perform a same alignment operation (a zero padding operation or a truncation operation) on the remaining two pieces of DCI, to align the two DCI sizes and change the two DCI sizes into one DCI size.

After step 5E, one DCI size is further reduced, and whether the determined DCI meets the DCI size budget is further determined. If a quantity of DCI sizes obtained by performing step 1 to step 5E meets the DCI size budget, the DCI sizes determined in step 1 to step 5E are used as finally used in a blind detection process.

It is assumed that after step 5E, the obtained DCI sizes include the size L5, the size A, and the size H. If all DCI sizes are different, a quantity of DCI sizes is 3, and a DCI size budget is met. In this case, the size L5, the size A, and the size H are DCI sizes finally used in a blind detection process, and the terminal device separately performs blind detection on the DCI by using the size L5, the size A, and the size H, to obtain the DCI sent by the network device.

It should be understood that an execution sequence of step 5A to step 5E is not limited in this embodiment of this application, and the foregoing execution sequence is merely an example for description.

According to the multi-carrier scheduling method provided in this embodiment of this application, in the scenario in which the sDCI and the mDCI coexist, after DCI sizes of a same series (for example, a DCI format x_0, a DCI format x_1, a DCI format x_2, or a DCI format x_3) are aligned, the DCI size of the DCI format x_2 is aligned with the DCI size of the DCI format x_3, so that a quantity of DCI sizes is controlled to be 3, thereby meeting the DCI size budget, reducing blind detection complexity, and improving system transmission performance.

**Embodiment 7**

DCI formats of the mDCI and the sDCI that can coexist in this embodiment are the same as those defined in Embodiment 2, and the DCI formats of the mDCI and the sDCI that can coexist are shown in Table 14, including: a DCI format 0_0 in a CSS, a DCI format 1_0 in the CSS, a DCI format 0_0 in a USS, and a DCI format 1_0, a DCI format 0_1, a DCI format 1_1, a DCI format 0_2, a DCI format 1_2, a DCI format 0_3, and a DCI format 1_3 in the USS. There may be 10 DCI sizes for the foregoing eight DCI formats, and the 10 DCI sizes need to be controlled to be within three DCI sizes. A difference between Embodiment 7 and Embodiment 2 lies in that, in step 5E, the DCI sizes of the DCI format 0_2 and the DCI format 1_2 are aligned with the DCI sizes of the DCI format 0_1 and the DCI format 1_1.

**Table 14**

| DCI format | Step 1 | Step 2 | Step 3A | Step 3B | Step 3C | Step 4 | Step 5A | Step 5B | Step 5C | Step 5D | Step 5E |
|---|---|---|---|---|---|---|---|---|---|---|---|
| DCI format 0_0 (CSS) | A | | | | | Check whether a DCI size meets a DCI size budget. If the DCI size does not meet the DCI size budget, perform steps 5A to 5F. If the DCI size meets the DCI size budget, the procedure ends. | | | | | |
| DCI format 1_0 (CSS) | A | | | | | | | | | | |
| DCI format 0_0 (USS) | | B | | | | | B→A | | | | |
| DCI format 1_0 (USS) | | B | | | | | B→A | | | | |
| DCI format 0_1 | | | C | | | | | | C→H | | H→L6 |
| DCI format 1_1 | | | D | | | | | | D→H | | H→L6 |
| DCI format 0_2 | | | | M | | | | M→K | | | K→L6 |
| DCI format 1_2 | | | | N | | | | N→K | | | K→L6 |
| DCI format 0_3 | | | | | E | | | | | E→G | |
| DCI format 1_3 | | | | | F | | | | | F→G | |

**Step 1.** Perform alignment by using a DCI size of the DCI format 1_0 as a reference, and determine a DCI size of the DCI format 0_0 and the DCI size of the DCI format 1_0 in the CSS.

**Step 2.** Perform alignment by using a larger DCI size in the DCI sizes of the DCI format 0_0 and the DCI format 0_1 as a reference, and determine the DCI size of the DCI format 0_0 and the DCI size of the DCI format 1_0 in the USS.

**Step 3A.** Determine a DCI size of the DCI format 0_1 and a DCI size of the DCI format 1_1.

**Step 3B.** Determine a DCI size of the DCI format 0_2 and a DCI size of the DCI format 1_2.

**Step 3C.** Determine a DCI size of the DCI format 0_3 and a DCI size of the DCI format 1_3.

**Step 4.** Determine whether the determined DCI meets a DCI size budget.

**Step 5A.** Re-determine a DCI size of the DCI format 0_0 and a DCI size of the DCI format 1_0 in the USS.

**Step 5B.** Re-determine a DCI size of the DCI format 0_2 and a DCI size of the DCI format 1_2.

**Step 5C.** Re-determine a DCI size of the DCI format 0_1 and a DCI size of the DCI format 1_1.

**Step 5D.** Re-determine a DCI size of the DCI format 0_3 and a DCI size of the DCI format 1_3.

Processes of step 1 to step 5D are respectively the same as the processes of step 1 to step 5D in Embodiment 1. Therefore, for specific descriptions of step 1 to step 5D, refer to related descriptions of each step in Embodiment 2. Details are not described again.

**Step 5E.** Align the DCI sizes of the DCI format 0_2 and the DCI format 1_2 with the DCI sizes of the DCI format 0_1 and the DCI format 1_1.

Before step 5E, the DCI sizes (for example, the size K) of the DCI format 0_2 and the DCI format 1_2 have been aligned, and the DCI sizes (for example, the size H) of the DCI format 0_1 and the DCI format 1_1 have been aligned. Therefore, in this step, the four DCI formats have only two DCI sizes, and the two DCI sizes only need to be aligned to obtain one DCI size. For example, as shown in Table 14, the DCI sizes of the DCI format 0_2 and the DCI format 1_2 that are finally obtained by performing step 5E change from the previous size K to a size L6, and the DCI sizes of the DCI format 0_1 and the DCI format 1_1 that are finally obtained by performing step 5E change from the previous size H to the size L6.

In some embodiments, a larger DCI size in the DCI sizes (for example, the size K) of the DCI format 0_2 and the DCI format 1_2 and the DCI sizes (for example, the size H) of the DCI format 0_1 and the DCI format 1_1 may be used as a reference, to perform a zero padding operation on remaining DCI with smaller DCI sizes, to change two DCI sizes into one DCI size.

If the DCI sizes (for example, the size K) of the DCI format 0_2 and the DCI format 1_2 are smaller than the DCI sizes (for example, the size H) of the DCI format 0_1 and the DCI format 1_1, a same zero padding operation is performed on the DCI format 0_2 and the DCI format 1_2, and zeros are padded after the DCI format 0_2 and the DCI format 1_2 as padding, so that the finally determined DCI sizes of the DCI format 0_2 and the DCI format 1_2 are the same as the DCI sizes of the DCI format 0_1 and the DCI format 1_1. In this case, the size L6 in Table 14 is the size H.

If the DCI sizes (for example, the size H) of the DCI format 0_1 and the DCI format 1_1 are smaller than the DCI sizes (for example, the size K) of the DCI format 0_2 and the DCI format 1_2, a same zero padding operation is performed on the DCI format 0_1 and the DCI format 1_1, and zeros are padded after the DCI format 0_1 and the DCI format 1_1 as padding, so that the finally determined DCI sizes of the DCI format 0_1 and the DCI format 1_1 are the same as the DCI sizes of the DCI format 0_2 and the DCI format 1_2. In this case, the size L6 in Table 14 is the size K.

It should be understood that the foregoing manner of aligning the DCI sizes (for example, the size K) of the DCI format 0_2 and the DCI format 1_2 and the DCI sizes (for example, the size H) of the DCI format 0_1 and the DCI format 1_1 by using a larger DCI size in the two DCI sizes as a reference is merely an example for description. Any method that can align the DCI sizes of the four pieces of DCI is feasible. For example, any DCI size in the DCI sizes (for example, the size K) of the DCI format 0_2 and the DCI format 1_2 and the DCI sizes (for example, the size H) of the DCI format 0_1 and the DCI format 1_1 may be used as a reference, to perform a same alignment operation (a zero padding operation or a truncation operation) on the remaining two pieces of DCI, to align the two DCI sizes and change the two DCI sizes into one DCI size.

After step 5E, one DCI size is further reduced, and whether the determined DCI meets the DCI size budget is further determined. If a quantity of DCI sizes obtained by performing step 1 to step 5E meets the DCI size budget, the DCI sizes determined in step 1 to step 5E are used as finally used in a blind detection process.

It is assumed that after step 5E, the obtained DCI sizes include the size L6, the size A, and the size G. If all DCI sizes are different, a quantity of DCI sizes is 3, and a DCI size budget is met. In this case, the size L6, the size A, and the size G are DCI sizes finally used in a blind detection process, and the terminal device separately performs blind detection on the DCI by using the size L6, the size A, and the size G, to obtain the DCI sent by the network device.

It should be understood that an execution sequence of step 5A to step 5E is not limited in this embodiment of this application, and the foregoing execution sequence is merely an example for description.

According to the multi-carrier scheduling method provided in this embodiment of this application, in the scenario in which the sDCI and the mDCI coexist, after DCI sizes of a same series (for example, a DCI format x_0, a DCI format x_1, a DCI format x_2, or a DCI format x_3) are aligned, the DCI size of the DCI format x_2 is aligned with the DCI size of the DCI format x_1, so that a quantity of DCI sizes is controlled to be 3, thereby meeting the DCI size budget, reducing blind detection complexity, and improving system transmission performance.

For the foregoing embodiments, when DCI sizes of DCI in different formats are aligned, different DCI formats need to be distinguished. For example, if the DCI format 0_3 and the DCI format 1_3 need to be distinguished, a 1-bit indication field may be carried in the DCI, where 1 indicates DCI for downlink scheduling, that is, indicates the DCI format 1_3, and 0 indicates DCI for uplink scheduling, that is, indicates the DCI format 0_3. For another example, if the DCI format x_3 and the DCI format x_1 need to be distinguished, a 1-bit indication field may be carried in the DCI, where 1 indicates the DCI format x_3, and 0 indicates the DCI format x_1, or the DCI format x_3 is scrambled by using a special RNTI (for example, a C-M-RNTI).

**Embodiment 8**

As described above, when it is determined whether the DCI size meets the DCI size budget, a DCI size budget of a cell corresponding to a carrier scheduled by the DCI is used for determining. DCI in a plurality of formats may schedule carriers corresponding to a same cell. For the cell, the terminal device and the network device need to determine DCI sizes of the DCI in the plurality of formats and determine whether the determined DCI sizes meet a DCI size budget of the cell. If the DCI size budget is met, an alignment operation ends. If the DCI size budget is not met, the alignment operation continues to be performed to re-determine DCI sizes. To meet the requirement that the quantity of different DCI sizes scrambled by using the C-RNTI in the DCI size budget does not exceed 3, the DCI size budget in embodiments of this application does not exceed 3. In other words, the DCI size budget includes three different DCI sizes.
As described above, currently, sDCI mainly supported by NR is mainly classified into three series of DCI formats: a DCI format x_0, a DCI format x_1, and a DCI format x_2. Values of x in different series of DCI formats are different. For example, in the DCI format x_0 series, a value of x may be 0 or 1, and correspondingly, included DCI formats are a DCI format 0_0 and a DCI format 1_0; in the DCI format x_1 series, a value of x may be 0 or 1, and correspondingly, included DCI formats are a DCI format 0_1 and a DCI format 1_1; and in the DCI format x_2 series, a value of x may be 0 or 1, and correspondingly, included DCI formats are a DCI format 0_2 and a DCI format 1_2. Certainly, the DCI formats of the foregoing series are merely examples for description, and each series may include more DCI formats. This is not limited in embodiments of this application.
In the foregoing three series of DCI formats of the sDCI, the DCI format x_0 can schedule only the carrier corresponding to the primary cell, and the DCI format x_1 and the DCI format x_2 can schedule the carriers corresponding to the primary cell and the secondary cell. To meet the requirement that the DCI size budget does not exceed 3, as specified in this embodiment of this application, for the primary cell, the DCI size of the DCI format x_0, the DCI size of the DCI format x_1, and the DCI size of the DCI format x_2 belong to a DCI size budget of the primary cell, DCI formats of one series correspond to one DCI size, and DCI formats of three series correspond to three DCI sizes respectively. In this way, when the three DCI sizes are different, a maximum quantity of DCI sizes of the primary cell is 3, and a maximum value of the DCI size budget is just met. For the secondary cell, because the DCI format x_0 cannot schedule the carrier corresponding to the secondary cell, DCI sizes of DCI in the DCI format x_1 and the DCI format x_2 may belong to a DCI size budget of the secondary cell. Similarly, DCI formats of one series correspond to one DCI size, and DCI formats of two series correspond to two DCI sizes respectively. In this way, when the three DCI sizes are different, a maximum quantity of DCI sizes of the secondary cell is 2, and there is still one DCI size for the DCI size budget of the secondary cell. It should be understood that the one DCI size corresponding to the DCI formats of one series represents a DCI size that finally meets a DCI size budget, that is, a DCI size finally used in a blind detection process. The DCI size may be a DCI size obtained by aligning original bit lengths of a plurality of DCI formats of the series. When the original bit lengths of the plurality of DCI formats of the series are the same, the DCI size may alternatively be the original bit length that is before alignment.
Because the mDCI schedules a plurality of carriers, it means that the DCI size of the mDCI may belong to a DCI size budget of a cell corresponding to any scheduled carrier. In a scenario in which the mDCI and the sDCI coexist, if the mDCI separately schedules carriers corresponding to a primary cell and a secondary cell, because a DCI size budget of the primary cell has been fully occupied by the sDCI, that is, the DCI size budget of the primary cell has a maximum of three DCI sizes, which meets a maximum limitation of the DCI size budget, and only two DCI sizes, namely, a DCI size of a DCI format x_1 and a DCI size of a DCI format x_2, occupy a DCI size budget of the secondary cell, in other words, the DCI size of the secondary cell has a maximum of two DCI sizes, and there is still one DCI size for the DCI size budget of the secondary cell. Therefore, the DCI size of the mDCI is grouped into the DCI size budget of the secondary cell. In this way, the secondary cell has a maximum of three DCI sizes, which just meets a maximum value of the DCI size budget. If the mDCI separately schedules carriers corresponding to two secondary cells, similarly, because a DCI size of a DCI format x_1 and a DCI size of a DCI format x_2 occupy only two DCI sizes of a DCI size budget of the secondary cell, the DCI size of the mDCI is grouped into the DCI size budget of any secondary cell. In this way, the secondary cell has a maximum of three DCI sizes, which meets a maximum value of the DCI size budget. It should be understood that the DCI size of the mDCI is a DCI size that finally meets a DCI size budget, that is, a DCI size finally used in a blind detection process. The DCI size may be a DCI size obtained by aligning original bit lengths of a plurality of DCI formats of the mDCI. When the original bit lengths of the plurality of DCI formats of the mDCI are the same, the DCI size may alternatively be the original bit length that is before alignment.

In some embodiments, the DCI formats of the mDCI may be DCI formats in the DCI format x_3 series. For example, the DCI format may specifically include a DCI format 0_3 for scheduling a PUSCH and a DCI format 1_3 for scheduling a PDSCH. In conclusion, in the scenario in which the sDCI and the mDCI coexist, when the DCI size is determined based on the DCI size budget, as proposed in this embodiment of this application, the DCI size of the mDCI is grouped into the DCI size budget of the secondary cell, the DCI size of the DCI format x_0 in the sDCI is grouped into the DCI size budget of the primary cell, and the DCI sizes of the DCI format x_1 and the DCI format x_2 are grouped into the DCI size budgets of the primary cell and the secondary cell. In other words, the DCI size of the mDCI belongs to the DCI size budget of the secondary cell, the DCI size of the DCI format x_0 in the sDCI belongs to the DCI size budget of the primary cell, and the DCI sizes of the DCI format x_1 and the DCI format x_2 belong to the DCI size budgets of the primary cell and the secondary cell. In this way, the three DCI sizes of the primary cell may correspond to the DCI size of the DCI format x_0 of the sDCI, the DCI size of the DCI format x_1, and the DCI size of the DCI format x_2 of the sDCI, and the three DCI sizes of the secondary cell may correspond to the DCI size of the DCI format x_1 and the DCI size of the DCI format x_2 of the sDCI, and the DCI size of the mDCI.

Based on the foregoing defined relationship between the DCI size of the DCI format and the cell, for DCI in a plurality of formats configured by the network device, a DCI size finally used in a blind detection process is determined based on a DCI size budget of a cell corresponding to a carrier scheduled by each DCI.

Herein, it should be noted that, in this embodiment, each series of DCI formats corresponds to one DCI size. When the DCI size corresponding to each series of DCI formats is determined, the DCI size corresponding to the series of DCI formats may be obtained in any possible manner. For example, for a manner of determining the DCI size corresponding to each series of DCI formats, refer to the manners in Embodiment 1 to Embodiment 7. The following separately uses three DCI sizes of a primary cell and three DCI sizes of a secondary cell as examples for description.

The three DCI sizes of the primary cell correspond to a DCI size of a DCI format x_0 of sDCI, a DCI size of a DCI format x_1 of the sDCI, and a DCI size of a DCI format x_2 of the sDCI. It is assumed that the network device configures a DCI format 0_0 in a CSS, a DCI format 1_0 in the CSS, a DCI format 0_0 in a USS, a DCI format 1_0 in the USS, a DCI format 0_1 in the USS, a DCI format 1_1 in the USS, a DCI format 0_2 in the USS, and a DCI format 1_2 in the USS. The eight pieces of DCI all schedule a carrier corresponding to the primary cell. For a manner of determining DCI sizes corresponding to the DCI format 0_0 in the CSS, the DCI format 1_0 in the CSS, the DCI format 0_0 in the USS, and the DCI format 1_0 in the USS, refer to step 1, step 2, and step 5A in Embodiment 2. Certainly, when A and B obtained based on step 1 and step 2 are the same, step 5A does not need to be performed. For a manner of determining DCI sizes corresponding to the DCI format 0_1 in the USS and the DCI format 1_1 in the USS, refer to step 3A and step 5C in Embodiment 2. Certainly, when C and D obtained based on step 3A are the same, step 5C does not need to be performed. For a manner of determining DCI sizes corresponding to the DCI format 0_2 in the USS and the DCI format 1_2 in the USS, refer to step 3B and step 5B in Embodiment 2. Certainly, when M and N obtained based on step 3B are the same, step 5B does not need to be performed.

The three DCI sizes of the secondary cell may correspond to the DCI size of the DCI format x_1 of the sDCI, the DCI size of the DCI format x_2 of the sDCI, and a DCI size of mDCI. It is assumed that DCI formats of the mDCI include a DCI format 0_3 and a DCI format 1_3. It is assumed that the network device configures the DCI format 0_1 in the USS, the DCI format 1_1 in the USS, the DCI format 0_2 in the USS, the DCI format 1_2 in the USS, a DCI format 0_3 in the USS, and a DCI format 1_3 in the USS. The six pieces of DCI all schedule carriers corresponding to a same secondary cell. In addition, a remaining carrier scheduled by the DCI format 0_3 may be a carrier of the primary cell or another secondary cell, and a remaining carrier scheduled by the DCI format 1_3 may also be a carrier of the primary cell or another secondary cell. For a manner of determining DCI sizes corresponding to the DCI format 0_1 in the USS and the DCI format 1_1 in the USS, refer to step 3A and step 5C in Embodiment 2. Certainly, when C and D obtained based on step 3A are the same, step 5C does not need to be performed. For a manner of determining DCI sizes corresponding to the DCI format 0_2 in the USS and the DCI format 1_2 in the USS, refer to step 3B and step 5B in Embodiment 2. Certainly, when M and N obtained based on step 3B are the same, step 5B does not need to be performed. For a manner of determining DCI sizes corresponding to the DCI format 0_3 in the USS and the DCI format 1_3 in the USS, refer to step 3C and step 5D in Embodiment 2. Certainly, when E and F obtained based on step 3C are the same, step 5D does not need to be performed.

In this embodiment of this application, the mDCI may schedule a plurality of carriers in the following four cases. The following describes in detail a relationship between a DCI size in a DCI format and a cell in each case.

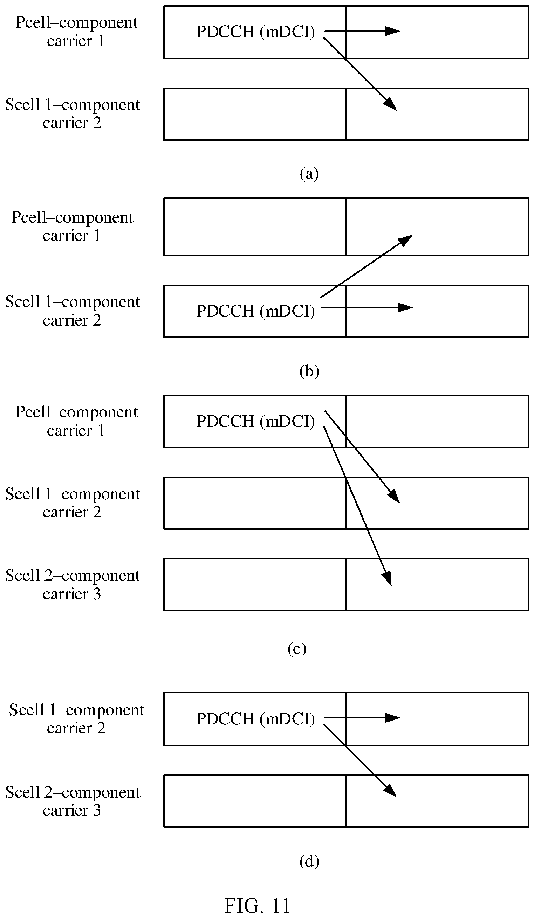

That one piece of mDCI schedules two carriers is used as an example. FIG. 11 is a schematic diagram of scheduling a plurality of carriers by using mDCI according to an embodiment of this application.

Case A

In (a) in FIG. 11, mDCI schedules a carrier 1 corresponding to a primary cell (Pcell) and a carrier 2 corresponding to a secondary cell 1 (Scell 1), and the mDCI is carried on the carrier 1 corresponding to the primary cell. Based on DCI sizes of DCI formats corresponding to the primary cell and the secondary cell that are defined above, because the mDCI schedules the secondary cell 1, a DCI size of the mDCI belongs to a DCI size budget of the secondary cell 1. For the secondary cell 1, when the DCI size is determined, the DCI size of the mDCI is determined based on the DCI size budget of the secondary cell 1. For the primary cell, only a DCI size of a DCI format other than the mDCI needs to be determined based on a DCI size budget of the primary cell, and the DCI size of the mDCI does not need to be considered. In addition, in this case, the DCI size of the mDCI may also be considered as a DCI size budget of a cell corresponding to the scheduled carrier.

Case B

In (b) in FIG. 11, mDCI schedules a carrier 1 corresponding to a primary cell (Pcell) and a carrier 2 corresponding to a secondary cell 1 (Scell 1), and the mDCI is carried on the carrier 2 corresponding to the secondary cell 1. Based on DCI sizes of DCI formats corresponding to the primary cell and the secondary cell that are defined above, because the mDCI schedules the secondary cell 1, a DCI size of the mDCI belongs to a DCI size budget of the secondary cell 1. For the secondary cell 1, when the DCI size is determined, the DCI size of the mDCI is determined based on the DCI size budget of the secondary cell 1. For the primary cell, only a DCI size of a DCI format other than the mDCI needs to be determined based on a DCI size budget of the primary cell, and the DCI size of the mDCI does not need to be considered. In addition, in this case, the DCI size of the mDCI may also be considered as a DCI size budget of a cell corresponding to the scheduling carrier.

Case C

In (c) in FIG. 11, mDCI schedules a carrier 2 corresponding to a secondary cell 1 (Scell 1) and a carrier 3 corresponding to a secondary cell 2 (Scell 2), and the mDCI is carried on a carrier 1 corresponding to a primary cell (Pcell). Based on DCI sizes of DCI formats corresponding to the primary cell and the secondary cells that are defined above, because the mDCI schedules the secondary cell 1 and the secondary cell 2, a DCI size of the mDCI belongs to a DCI size budget of the secondary cell 1 (or the secondary cell 2). When the DCI size is determined, the DCI size of the mDCI is calculated based on the DCI size budget of the secondary cell 1 (or the secondary cell 2). For the primary cell, only a DCI size of another piece of DCI format other than the mDCI needs to be determined based on a DCI size budget of the primary cell, and the DCI size of the mDCI does not need to be considered. In addition, in this case, the DCI size of the mDCI may also be considered as a DCI size budget of a cell corresponding to the scheduled carrier.

Case D

In (d) in FIG. 11, mDCI schedules a carrier 2 corresponding to a secondary cell 1 (Scell 1) and a carrier 3 corresponding to a secondary cell 2 (Scell 2), and the mDCI is carried on the carrier 2 corresponding to the secondary cell 1. Based on DCI sizes of DCI formats corresponding to the primary cell and the secondary cells that are defined above, because the mDCI schedules the secondary cell 1 and the secondary cell 2, a DCI size of the mDCI belongs to a DCI size budget of the secondary cell 1 (or the secondary cell 2). When the DCI size is determined, the DCI size of the mDCI is determined based on a DCI size budget of the secondary cell 1 or the secondary cell 2. For the primary cell, only a DCI size of another piece of DCI format other than the mDCI needs to be determined based on a DCI size budget of the primary cell, and the DCI size of the mDCI does not need to be considered. In addition, in this case, if the DCI size of the mDCI belongs to the DCI size budget of the secondary cell 1, the DCI size of the mDCI may also be considered as a DCI size budget of a cell corresponding to the scheduled carrier. If the DCI size of the mDCI belongs to the DCI size budget of the secondary cell 2, the DCI size of the mDCI may also be considered as a DCI size budget of a cell corresponding to the scheduled carrier.

**Third: Switching between a scheduling mode corresponding to the mDCI and a scheduling mode corresponding to the sDCI in a scenario in which the mDCI and the sDCI do not coexist**

As described above, in the scenario in which the mDCI and the sDCI do not coexist, the terminal device does not blindly detect the sDCI and the mDCI in one time unit.

For ease of description, a scheduling mode in which one carrier is scheduled by the sDCI is referred to as a single-carrier scheduling mode, and a scheduling mode in which a plurality of carriers are scheduled by the mDCI is referred to as a multi-carrier scheduling mode. The following is five example manners of indicating a scheduling mode provided in this embodiment of this application, and each manner is separately described.

Manner 1: Explicitly indicate the scheduling mode by using higher layer signaling

In this manner, a field may be configured in the higher layer signaling, and scheduling mode information carried in the field explicitly indicates that the scheduling mode is a single-carrier scheduling mode or a multi-carrier scheduling mode.

In some embodiments, if a value of a bit in the scheduling mode information in the higher layer signaling sent by the network device is a first value, it indicates that the scheduling mode is a multi-carrier scheduling mode, and the terminal device blindly detects (or monitors) only mDCI corresponding to the multi-carrier scheduling mode. If the value of the bit in the scheduling mode information in the higher layer signaling sent by the network device is a second value, it indicates that the scheduling mode is a single carrier scheduling mode, and the terminal device blindly detects only sDCI corresponding to the single carrier scheduling mode. For example, the first value is 1 and the second value is 0, or the first value is 0 and the second value is 1.

For example, the higher layer signaling may be RRC signaling or MAC CE signaling.

Manner 2: Pre-defined scheduling mode

In this manner, a predefined rule may be defined. The rule is that the terminal device does not expect to blindly detect both sDCI corresponding to a single carrier scheduling mode and mDCI corresponding to a multi-carrier scheduling mode, or the terminal device does not expect the network device to configure both sDCI corresponding to a single carrier scheduling mode and mDCI corresponding to a multi-carrier scheduling mode.

In implementation, the network device configures DCI corresponding to either of the single-carrier scheduling mode and the multi-carrier scheduling mode, and the terminal device blindly detects the DCI, of the network device, corresponding to the any scheduling mode.

Manner 3: Implicitly indicate the scheduling mode by using higher layer signaling

In this manner, the scheduling mode may be implicitly indicated by using higher layer signaling based on a DCI format of mDCI. The following two embodiments are applicable to the first scheduling manner of the mDCI. That is, one piece of mDCI schedules a plurality of corresponding carriers by scheduling a plurality of data channels, and one carrier is for carrying one data channel.

For example, the higher layer signaling may be RRC signaling.

First DCI format of the mDCI

The first DCI format of the mDCI may be the first DCI format described in the first aspect. In this DCI format, the mDCI includes two types of fields. A first-type field includes at least one common field, and a second-type field includes at least one independent field. For specific descriptions of the common field and the independent field, refer to the foregoing related descriptions. Details are not described again.

In some embodiments, field information of DCI is configured in the higher layer signaling, and the field information indicates a common field and/or an independent field in the DCI. The terminal device determines a scheduling mode of the DCI based on the field information.

In an example, the field information indicates the common field and the independent field in the DCI. If the terminal device may determine, based on the field information, that a part of fields in the DCI are common fields and the other part of fields are independent fields, it indicates that there are common fields and independent fields in the DCI, and it indicates that the DCI is mDCI and the scheduling mode is a multi-carrier scheduling mode.

In another example, the field information indicates the common field in the DCI. If the common field indicated by the field information is a part of fields in the DCI, meaning that the other part of fields are independent fields, it indicates that there are common fields and independent fields in the DCI. In this case, it indicates that the DCI is mDCI and the scheduling mode is a multi-carrier scheduling mode. If the common field indicated by the field information is all fields in the DCI, because the mDCI defined in this manner includes a common field and an independent field, the DCI is sDCI by default, and the scheduling mode is a single-carrier scheduling mode.

In another example, the field information indicates an independent field in the DCI. If the independent field indicated by the field information is a part of fields in the DCI, meaning that the other part of fields are common fields, it indicates that there are common fields and independent fields in the DCI. In this case, it indicates that the DCI is mDCI and the scheduling mode is a multi-carrier scheduling mode. If the independent field indicated by the field information is all fields in the DCI, the DCI is sDCI, and the scheduling mode is a single-carrier scheduling mode.

Second DCI format of the mDCI

The second DCI format of the mDCI may be the second DCI format described in the first aspect. A plurality of groups of fields are preconfigured in the mDCI. One group of fields corresponds to one data channel (or carrier), each group of fields includes a plurality of fields, and each group of fields is equivalent to all fields in one piece of sDCI, to implement a function of scheduling one data channel. For specific descriptions of the DCI format, refer to related descriptions above. Details are not described again.

Based on the first DCI format, in some embodiments, the field information of the DCI may be configured in the higher layer signaling sent by the network device. The field information is for determining an available field in the DCI. The terminal device determines a scheduling mode of the DCI based on the field information.

In an example, the field information indicates an available field in candidate fields in the DCI. In this embodiment, a group of fields in the mDCI is predefined available fields, fields other than the predefined group of fields in the plurality of groups of fields are candidate fields, and the available fields in the candidate fields are indicated by using the field information in the higher layer signaling. If the field information indicates that at least one group of fields in the candidate fields in the DCI is available, it may be determined that a group of fields predefined in the DCI and the at least one group of fields determined by using the field information are available. Because the group of fields is for implementing a function of scheduling a data channel, it means that the DCI is mDCI, and the scheduling mode is a multi-carrier scheduling mode. If the field information indicates that an available field in the candidate fields in the DCI is zero, it indicates that there is no available field, and it may be determined that only a predefined group of fields in the DCI is available fields. Therefore, it means that the DCI is sDCI, and the scheduling mode is a single-carrier scheduling mode. For example, 48 fields are preconfigured in the mDCI, and are divided into two groups of fields. As predefined, a first group of fields is available fields, and a second group of fields is candidate fields. In this case, if it is determined, based on the field information, that a candidate field is an available field, it indicates that the DCI is mDCI and the scheduling mode is a multi-carrier scheduling mode; or if it is determined, based on the field information, that a candidate field is an unavailable field, it indicates that the DCI is sDCI and the scheduling mode is a single-carrier scheduling mode.

In another example, the field information indicates an available field in the DCI. In this embodiment, all available fields in the mDCI are indicated by using the field information in the higher layer signaling. If the available fields in the DCI that are determined based on the field information in the higher layer signaling are a plurality of groups of fields preconfigured in the mDCI, it indicates that the DCI is mDCI, and the scheduling mode is a multi-carrier scheduling mode. If the available fields in the DCI that are determined based on the field information in the higher layer signaling are one group of fields in a plurality of groups of fields preconfigured in the mDCI, meaning that there is an unavailable field, it indicates that the DCI is sDCI, and the scheduling mode is a single-carrier scheduling mode. For example, 48 fields are preconfigured in the mDCI, and are divided into two groups of fields. Each group of fields includes 24 fields. If the available fields in the DCI that are determined based on the field information are 48 fields, it may be determined that the DCI is mDCI, and the scheduling mode is a multi-carrier scheduling mode. If a quantity of available fields in the DCI determined based on the field information is 24, meaning that 24 fields are available and 24 fields are unavailable, it may be determined that the DCI is sDCI, the scheduling mode is a single-carrier scheduling mode.

Manner 4: Indicate the scheduling mode by using DCI

In this manner, a scheduling mode of next piece of DCI is indicated by using the DCI. The DCI may be sDCI or mDCI, and the sDCI may be DCI in any format described above.

In some embodiments, a field is configured in the DCI, and scheduling mode information carried in the field may indicate that the scheduling mode is a single carrier scheduling mode or a multi-carrier scheduling mode. For a specific description of the scheduling mode information, refer to the scheduling mode information in the higher layer signaling in the manner 1. Details are not described again.

In an example, the field for carrying the scheduling mode information may be a newly added field in the DCI.

In another example, the field for carrying the scheduling mode information may be an existing field in the DCI, or an existing field in the DCI is reused to carry the scheduling mode information. For example, the existing field in the DCI may be a BWP field or another special field. The DCI in this example may be sDCI.

In some other embodiments, an RNTI scrambled by using DCI may indicate whether the scheduling mode is a multi-carrier scheduling mode or a single carrier scheduling mode. For example, a first RNTI indicates the single carrier scheduling mode, and a second RNTI indicates the multi-carrier scheduling mode. For example, the first RNTI is a C-RNTI, and the second RNTI is a C-M-RNTI.

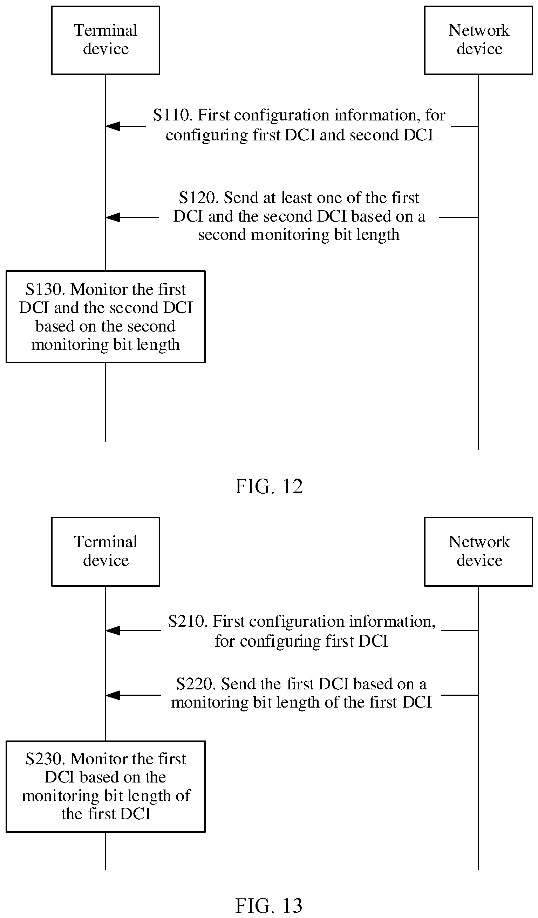

FIG. 12 is a schematic diagram of a structure of a multi-carrier scheduling method 100 according to an embodiment of this application. The method 100 is applicable to the communication system shown in FIG. 1, and is performed by a network device and a terminal device.

In S 110, the network device sends first configuration information, where the first configuration information is for configuring first downlink control information DCI and second DCI, the first DCI is for scheduling M carriers, the second DCI is for scheduling one carrier, M is an integer greater than 1, and a first monitoring bit length of the first DCI is different from a first monitoring bit length of the second DCI. Correspondingly, the terminal device receives the first configuration information.

In S 120, the network device sends at least one piece of the first DCI and the second DCI based on a second monitoring bit length, where the second monitoring bit length is determined based on the first monitoring bit length of the first DCI and the first monitoring bit length of the second DCI.

In S130, the terminal device monitors the first DCI and the second DCI based on a second monitoring bit length, where the second monitoring bit length is determined based on the first monitoring bit length of the first DCI and the first monitoring bit length of the second DCI.

Specifically, the network device may configure two pieces of DCI for the terminal device by using the first configuration information. The first DCI is for scheduling the M carriers, and is one piece of DCI for multi-carrier scheduling (that is, an example of the mDCI defined above). The second DCI is for scheduling one carrier, and is one piece of DCI for single-carrier scheduling (that is, an example of the sDCI defined above). The network device determines the first monitoring bit length of the first DCI and the first monitoring bit length of the second DCI. When the first monitoring bit lengths of the two pieces of DCI are different, to reduce blind detection complexity, the network device determines a final monitoring bit length, that is, the second monitoring bit length, based on the first monitoring bit length of the first DCI and the first monitoring bit length of the second DCI, and sends at least one piece of the first DCI and the second DCI to the terminal device based on the second monitoring bit length. To be consistent with understanding of the network device, the terminal device performs a same step as the network device. The terminal device determines the first monitoring bit length of the first DCI and the first monitoring bit length of the second DCI. When the first monitoring bit lengths of the two pieces of DCI are different, the terminal device determines a final second monitoring bit length based on the first monitoring bit length of the first DCI and the first monitoring bit length of the second DCI, and monitors the first DCI and the second DCI based on the second monitoring bit length, to obtain the DCI sent by the network device.

In the two pieces of DCI configured based on the first configuration information, each piece of DCI has an original bit length. The network device may configure the original bit length of each piece of DCI by using second configuration information. The terminal device or the network device may determine a first monitoring bit length of each piece of DCI based on the second configuration information. The first monitoring bit length of each piece of DCI may be the original bit length of the DCI, or may be a bit length obtained by aligning the original bit length.

For the first DCI, in an example, the first monitoring bit length of the first DCI may be an original bit length of the first DCI. In this example, that the network device or the terminal device determines the first monitoring bit length of the first DCI based on the second configuration information may be understood as: directly determining the first monitoring bit length of the first DCI based on the second configuration information, without performing an alignment operation on the original bit length of the first DCI; or may be understood as: determining the original bit length of the first DCI based on the second configuration information, and using the original bit length of the first DCI as the first monitoring bit length of the first DCI.

In another example, the first monitoring bit length of the first DCI may be a bit length obtained by performing an alignment operation on an original bit length of the first DCI (for details, refer to the following descriptions). In this example, that the network device or the terminal device determines the first monitoring bit length of the first DCI based on the second configuration information may be understood as: determining the original bit length of the first DCI based on the second configuration information, and determining the first monitoring bit length of the first DCI based on the original bit length of the first DCI. In an implementation process, the bit length of the first DCI may be aligned with a bit length of another piece of DCI, and an alignment operation is performed on the original bit length of the first DCI by using the bit length of the another piece of DCI as a reference, to obtain an aligned bit length.

For the second DCI, in an example, the first monitoring bit length of the second DCI may be an original bit length of the second DCI. In this example, that the network device or the terminal device determines the first monitoring bit length of the second DCI based on the second configuration information may be understood as: directly determining the first monitoring bit length of the second DCI based on the second configuration information, without performing an alignment operation on the original bit length of the second DCI; or may be understood as: determining the original bit length of the second DCI based on the second configuration information, and using the original bit length of the second DCI as the first monitoring bit length of the second DCI.

In another example, the first monitoring bit length of the second DCI may be a bit length obtained by performing an alignment operation on an original bit length of the second DCI (for details, refer to the following descriptions). In this example, that the network device or the terminal device determines the first monitoring bit length of the second DCI based on the second configuration information may be understood as: determining the original bit length of the second DCI based on the second configuration information, and determining the first monitoring bit length of the second DCI based on the original bit length of the second DCI. In an implementation process, the bit length of the second DCI may be aligned with a bit length of another piece of DCI, and an alignment operation is performed on the original bit length of the second DCI by using the bit length of the another piece of DCI as a reference, to obtain an aligned bit length.

After determining the first monitoring bit length of the first DCI and the first monitoring bit length of the second DCI based on the second configuration information, the network device or the terminal device determines the second monitoring bit length based on the first monitoring bit length of the first DCI and the first monitoring bit length of the second DCI. In this process, the network device or the terminal device may align the first monitoring bit lengths of the two pieces of DCI, to obtain the second monitoring bit length. For example, the second monitoring bit length may be the same as either of the first monitoring bit length of the first DCI and the first monitoring bit length of the second DCI. This is not limited in this embodiment of this application. A specific implementation process is taken as final.

In some embodiments, a larger bit length in the first monitoring bit length of the first DCI and the first monitoring bit length of the second DCI may be used as a reference to perform an alignment operation on the bit length of the other piece of DCI, to obtain the second monitoring bit length. The alignment operation herein is a zero padding operation.

In an example, if the first monitoring bit length of the first DCI is larger than the first monitoring bit length of the second DCI, the alignment operation is performed on the first monitoring bit length of the second DCI by using the first monitoring bit length of the first DCI as a reference, to obtain the second monitoring bit length. In this example, the second monitoring bit length is the same as the first monitoring bit length of the first DCI.

In another example, if the first monitoring bit length of the second DCI is larger than the first monitoring bit length of the first DCI, the alignment operation is performed on the first monitoring bit length of the first DCI by using the first monitoring bit length of the second DCI as a reference, to obtain the second monitoring bit length. In this example, the second monitoring bit length is the same as the first monitoring bit length of the second DCI.

In some other embodiments, a smaller bit length in the first monitoring bit length of the first DCI and the first monitoring bit length of the second DCI may be used as a reference to perform an alignment operation on the bit length of the other piece of DCI, to obtain the second monitoring bit length. The alignment operation herein is a truncation operation.

In an example, if the first monitoring bit length of the first DCI is smaller than the first monitoring bit length of the second DCI, the alignment operation is performed on the first monitoring bit length of the second DCI by using the first monitoring bit length of the first DCI as a reference, to obtain the second monitoring bit length. In this example, the second monitoring bit length is the same as the first monitoring bit length of the first DCI.

In another example, if the first monitoring bit length of the second DCI is smaller than the first monitoring bit length of the first DCI, the alignment operation is performed on the first monitoring bit length of the first DCI by using the first monitoring bit length of the second DCI as a reference, to obtain the second monitoring bit length. In this example, the second monitoring bit length is the same as the first monitoring bit length of the second DCI.

It should be understood that because the terminal device finally uses the second monitoring bit length in a blind detection process, for the second monitoring bit length, both the first monitoring bit length of the first DCI and the first monitoring bit length of the second DCI may be understood as a candidate monitoring bit length, and the final second monitoring bit length may be obtained based on the candidate monitoring bit lengths of the two pieces of DCI.

In this embodiment of this application, an "original bit length" of DCI indicates a size of a bit length occupied by each field in the DCI that is configured by the network device by using the second configuration information. The original bit length of the DCI is determined based only on a configuration of the second configuration information. In other words, the original bit length of the DCI may be obtained based only on the second configuration information, and does not include a processed bit length obtained by performing another operation (for example, an alignment operation). Alternatively, the original bit length of the DCI is a bit length that is before an alignment operation is performed on the DCI.

The alignment operation includes a zero padding operation or a truncation operation. The zero padding operation indicates an operation of adding at least one bit 0 to DCI to increase a DCI size. The truncation operation indicates an operation of truncating one piece of DCI to reduce a DCI size. Specifically, the truncation operation may be an operation of deleting some information bits of a corresponding field, or may be an operation of deleting all information bits of a corresponding field.

It should be understood that names of the foregoing bit lengths (for example, the original bit length and various monitoring bit lengths) are used in this embodiment of this application only for ease of description. Names of lengths before and after an alignment operation is performed on DCI are not limited in this embodiment of this application.

In this embodiment, the first DCI may be an example of the foregoing mDCI. For example, a format of the first DCI may be the foregoing DCI format 0_3 or DCI format 1_3. The second DCI may be an example of the foregoing sDCI. For example, a format of the second DCI may be any one of the following: the DCI format 0_0 in the CSS, the DCI format 1_0 in the CSS, the DCI format 0_0 in the USS, the DCI format 1_0 in the USS, the DCI format 0_1 in the USS, the DCI format 1_1 in the USS, the DCI format 0_2 in the USS, and the DCI format 1_2 in the USS.

In the M carriers scheduled by the first DCI and the carrier scheduled by the second DCI, the M carriers may include the carrier scheduled by the second DCI, or may not include the carrier scheduled by the second DCI.

When one cell schedules a plurality of carriers, the M carriers scheduled by the first DCI and the carrier scheduled by the second DCI belong to carriers corresponding to a same cell. In an example, the M carriers may include the carrier scheduled by the second DCI. For example, a cell 1 corresponds to three carriers: a carrier 1, a carrier 2, and a carrier 3, and M=2. Two carriers scheduled by the first DCI are the carrier 1 and the carrier 2 that correspond to the cell 1, and the carrier scheduled by the second DCI is the carrier 1. In another example, the M carriers may not include the carrier scheduled by the second DCI. For example, a cell 1 corresponds to three carriers: a carrier 1, a carrier 2, and a carrier 3, and M=2. Two carriers scheduled by the first DCI are the carrier 1 and the carrier 2 that correspond to the cell 1, and the carrier scheduled by the second DCI is the carrier 3.

When one cell schedules one carrier, the M carriers belong to carriers corresponding to at least two cells, the carrier scheduled by the second DCI is a carrier corresponding to one cell, and the carrier scheduled by the second DCI and one of the M carriers are carriers corresponding to a same cell. In this case, the M carriers include the carrier scheduled by the second DCI. For example, M=2, the first DCI schedules a carrier 1 and a carrier 2, the carrier 1 is a carrier corresponding to a cell 1, the carrier 2 is a carrier corresponding to a cell 2, and the carrier scheduled by the second DCI may be the carrier 1 or the carrier 2.

When the M carriers scheduled by the second DCI include the carrier scheduled by the second DCI, for example, the M carriers include a first carrier, and the second DCI is for scheduling the first carrier.

Optionally, the first configuration information is further for configuring a search space for the first DCI and a search space for the second DCI. The search space of the first DCI may be the same as or different from the search space of the second DCI. This is not limited in this embodiment of this application.

According to the multi-carrier scheduling method provided in this embodiment of this application, the network device configures, by using the first configuration information, the first DCI for scheduling a plurality of carriers and the second DCI for scheduling a single carrier, and the network device or the terminal device obtains one DCI size, namely, the second monitoring bit length, based on different first monitoring bit lengths of the two pieces of DCI, so that the terminal device can blindly detect DCI based on the second monitoring bit length, thereby reducing blind detection complexity, and improving system transmission performance. In addition, scheduling a plurality of carriers using the first DCI reduces PDCCH resource overheads.

With reference to the method 100, the following specifically describes embodiments in which more DCI is configured by the network device.

## Embodiment A

Optionally, the first configuration information is further for configuring third DCI, the third DCI is for scheduling N carriers, N is an integer greater than 1, a first monitoring bit length of the third DCI is different from a third monitoring bit length of the first DCI, and the first monitoring bit length of the first DCI is determined based on the third monitoring bit length of the first DCI and the first monitoring bit length of the third DCI. That the terminal device monitors the first DCI and the second DCI based on a second monitoring bit length includes:

The terminal device monitors the first DCI, the second DCI, and the third DCI based on the second monitoring bit length.

Specifically, the network device configures three pieces of DCI by using the first configuration information: the first DCI, the second DCI, and the third DCI, where the first DCI and the third DCI are DCI for multi-carrier scheduling, and the second DCI is DCI for single-carrier scheduling. To reduce blind detection complexity, the terminal device aligns the monitoring bit lengths of the three pieces of DCI, to obtain the second monitoring bit length, and monitors the three pieces of DCI based on the second monitoring bit length, to obtain DCI sent by the network device.

The following describes in detail a process in which the terminal device determines the second monitoring bit length.

**Step 1.** The terminal device determines the first monitoring bit length of the third DCI and the third monitoring bit length of the first DCI.

For the first monitoring bit length of the third DCI, in an example, the terminal device may determine the first monitoring bit length of the third DCI only by using the configuration of the second configuration information. In this example, the first monitoring bit length of the third DCI is an original bit length of the third DCI. In another example, the terminal device determines an original bit length of the third DCI based on the second configuration information, and performs an alignment operation on the original bit length of the third DCI to obtain a bit length obtained after the alignment operation. In this example, the first monitoring bit length of the third DCI is the bit length obtained after the alignment operation is performed on the original bit length of the third DCI.

For the third monitoring bit length of the first DCI, in an example, the terminal device may determine the third monitoring bit length of the first DCI only by using the configuration of the second configuration information. In this example, the third monitoring bit length of the first DCI is the original bit length of the first DCI. In another example, the terminal device determines the original bit length of the first DCI based on the second configuration information, and performs an alignment operation on the original bit length of the first DCI to obtain a bit length obtained after the alignment operation. In this example, the third monitoring bit length of the first DCI is the bit length obtained after the alignment operation is performed on the original bit length of the first DCI.

In an example, if the first DCI is for scheduling a PUSCH, and the third DCI is for scheduling a PDSCH, the first monitoring bit length of the third DCI is the original bit length configured by using the second configuration information, and the first monitoring bit length of the first DCI is determined depending on whether the network device configures an SUL carrier for the terminal device. If the network device configures an SUL carrier for the terminal device, the PUSCH may be sent on the SUL and a non-SUL, and the first DCI may schedule the SUL or the non-SUL. If the original bit length of the first DCI is not equal to an original bit length of DCI for scheduling another carrier, the original bit length of the first DCI needs to be aligned with the original bit length of the DCI for scheduling the another carrier. If the original bit length of the DCI for scheduling the another carrier is used as a reference, an alignment operation needs to be performed on the original bit length of the first DCI. In this case, the first monitoring bit length of the first DCI is a bit length obtained after the alignment operation is performed on the original bit length of the first DCI. Alternatively, if the original bit length of the first DCI is used as a reference, no alignment operation needs to be performed on the original bit length of the first DCI. In this case, the first monitoring bit length of the first DCI is the original bit length of the first DCI. If the network device does not configure an SUL carrier for the terminal device, the first monitoring bit length of the first DCI is the original bit length of the first DCI.

In another example, if the third DCI is for scheduling a PUSCH, and the first DCI is for scheduling a PDSCH, the first monitoring bit length of the first DCI is the original bit length configured by using the second configuration information, and the first monitoring bit length of the third DCI is determined depending on whether the network device configures an SUL carrier for the terminal device. For a specific description, refer to the description of the first monitoring bit length of the first DCI in the foregoing example, and the first DCI in the foregoing example is replaced with the third DCI. Details are not described again.

Step 2. The terminal device determines the first monitoring bit length of the first DCI based on the first monitoring bit length of the third DCI and the third monitoring bit length of the first DCI.

It should be understood that the first monitoring bit length of the first DCI obtained in step 2 is not only a monitoring bit length of the first DCI obtained after step 2 is performed, but also a monitoring bit length of the third DCI obtained after step 2 is performed.

For example, the first monitoring bit length of the first DCI may be the same as either of the first monitoring bit length of the third DCI and the third monitoring bit length of the first DCI.

In step 2, the terminal device may align the first monitoring bit length of the third DCI with the third monitoring bit length of the first DCI, to obtain the first monitoring bit length of the first DCI.

In some embodiments, a larger bit length in the first monitoring bit length of the third DCI and the third monitoring bit length of the first DCI may be used as a reference to perform an alignment operation on the bit length of the other piece of DCI, to obtain the first monitoring bit length of the first DCI. The alignment operation herein is a zero padding operation.

In an example, if the third monitoring bit length of the first DCI is larger than the first monitoring bit length of the third DCI, the third monitoring bit length of the first DCI is used as a reference, and the first monitoring bit length of the third DCI is aligned with the third monitoring bit length of the first DCI, to obtain the first monitoring bit length of the first DCI. In this example, the first monitoring bit length of the first DCI is the same as the third monitoring bit length of the first DCI, may be the original bit length of the first DCI or may be the bit length obtained after the alignment operation is performed on the original bit length of the first DCI, and is specifically determined by the third monitoring bit length of the first DCI that is determined in step 1.

In another example, if the first monitoring bit length of the third DCI is larger than the third monitoring bit length of the first DCI, the first monitoring bit length of the third DCI is used as a reference, and the third monitoring bit length of the first DCI is aligned with the first monitoring bit length of the third DCI, to obtain the first monitoring bit length of the first DCI. In this example, the first monitoring bit length of the first DCI is the same as the first monitoring bit length of the third DCI, may be the original bit length of the third DCI or may be the bit length obtained after the alignment operation is performed on the original bit length of the third DCI, and is specifically determined by the first monitoring bit length of the third DCI that is determined in step 1.

In some other embodiments, a smaller bit length in the first monitoring bit length of the third DCI and the third monitoring bit length of the first DCI may be used as a reference to perform an alignment operation on the bit length of the other piece of DCI, to obtain the first monitoring bit length of the first DCI. The alignment operation herein is a truncation operation.

In an example, if the third monitoring bit length of the first DCI is smaller than the first monitoring bit length of the third DCI, the third monitoring bit length of the first DCI is used as a reference, and the first monitoring bit length of the third DCI is aligned with the third monitoring bit length of the first DCI, to obtain the first monitoring bit length of the first DCI.

In another example, if the first monitoring bit length of the third DCI is smaller than the third monitoring bit length of the first DCI, the first monitoring bit length of the third DCI is used as a reference, and the third monitoring bit length of the first DCI is aligned with the first monitoring bit length of the third DCI, to obtain the first monitoring bit length of the first DCI.

**Step 3.** The terminal device determines the second monitoring bit length based on the first monitoring bit length of the first DCI and the first monitoring bit length of the second DCI.

For example, the second monitoring bit length may be the same as either of the first monitoring bit length of the first DCI and the first monitoring bit length of the second DCI.

For a specific description of step 3, refer to the foregoing related description of the process of determining the second monitoring bit length based on the first monitoring bit length of the first DCI and the first monitoring bit length of the second DCI. Details are not described again.

For the network device, the network device determines the second monitoring bit length in a same manner as the terminal device. After determining the second monitoring bit length, the network device sends at least one piece of the first DCI, the second DCI, and the third DCI based on the second monitoring bit length.

In this embodiment, the format of the first DCI may be an example of the foregoing mDCI, and a format of the third DCI may be another example of the foregoing mDCI. For example, the format of the first DCI is a DCI format 0_3, and the format of the third DCI is a DCI format 1_3. For another example, the format of the first DCI is a DCI format 1_3, and the format of the third DCI is a DCI format 0_3.

In the M carriers scheduled by the first DCI and the N carriers scheduled by the third DCI, the M carriers and the N carriers may include a same carrier, or may not include a same carrier.

When a cell schedules a plurality of carriers, the M carriers and the N carriers belong to carriers corresponding to a same cell. In an example, the M carriers and the N carriers may include a same carrier. For example, a cell 1 corresponds to three carriers: a carrier 1, a carrier 2, and a carrier 3, M=2, and N=2. Two carriers scheduled by the first DCI are the carrier 1 and the carrier 2 corresponding to the cell 1, two carriers scheduled by the third DCI are the carrier 2 and the carrier 3 corresponding to the cell 1, and the two carriers scheduled by the first DCI and the two carriers scheduled by the third DCI include the same carrier 2. For another example, a cell 1 corresponds to two carriers: a carrier 1 and a carrier 2, M=2, and N=2. Two carriers scheduled by the first DCI are the carrier 1 and the carrier 2 corresponding to the cell 1, two carriers scheduled by the third DCI are the carrier 1 and the carrier 2 corresponding to the cell 1, the two carriers scheduled by the first DCI and the two carriers scheduled by the third DCI include the same carrier 1 and the same carrier 2, and the two carriers scheduled by the two pieces of DCI are the same.

When one cell schedules one carrier, the M carriers belong to carriers corresponding to at least two cells, the N carriers belong to carriers corresponding to at least two cells, the M carriers and the N carriers include a same carrier, and the carrier is a carrier corresponding to one cell. For example, M=2, the first DCI schedules a carrier 1 and a carrier 2, the carrier 1 is a carrier corresponding to a cell 1, the carrier 2 is a carrier corresponding to a cell 2, N=2, the third DCI schedules the carrier 2 and a carrier 3, the carrier 2 is the carrier corresponding to the cell 2, and the carrier 3 is a carrier corresponding to the cell 3. The two carriers scheduled by the first DCI and the two carriers scheduled by the third DCI include the same carrier 2, and the carrier 2 is the carrier corresponding to the cell 2. Optionally, the first configuration information is further for configuring a search space of the third DCI. The search space of the third DCI, the search space of the first DCI, and the search space of the second DCI may be the same or different. This is not limited in this embodiment of this application. For example, the search spaces of the first DCI and the third DCI are the same, and the search space of the second DCI is different from the search spaces of the first DCI and the third DCI.

According to the multi-carrier scheduling method provided in this embodiment of this application, the network device further configures, by using the first configuration information, the third DCI for scheduling the plurality of carriers, and the terminal device or the network device unifies bit lengths of the first DCI, the second DCI, and the third DCI as the second monitoring bit length. In this way, the terminal device can blindly detect DCI based on the second monitoring bit length, thereby reducing blind detection complexity, and improving system transmission performance. In addition, because both the first DCI and the third DCI are DCI for multi-carrier scheduling, a difference between the third monitoring bit length of the first DCI and the first monitoring bit length of the third DCI is not large. Therefore, after the first monitoring bit length of the first DCI is obtained based on the third monitoring bit length of the first DCI and the first monitoring bit length of the third DCI, the second monitoring bit length is obtained based on the first monitoring bit length of the first DCI and the first monitoring bit length of the second DCI. In a process of aligning the third monitoring bit length of the first DCI with the first monitoring bit length of the third DCI, when either of the third monitoring bit length of the first DCI and the first monitoring bit length of the third DCI needs to be used as a reference to perform a zero padding operation on the bit length of the other DCI, a small quantity of bits are increased. This can avoid a problem that a large quantity of overheads may be increased in a DCI size alignment process.

As described above, in a DCI size budget (DCI size budget), there are a maximum of three different DCI sizes scrambled by using a C-RNTI. When there is a large amount of DCI, a DCI size may be controlled to be less than 3. It should be understood that the DCI size herein is a DCI size used by the terminal device in a blind detection process, for example, the second monitoring bit length, and a fourth monitoring bit length and a fifth monitoring bit length described below.

The following describes an embodiment in which three DCI sizes are met.

**Embodiment B**

Optionally, the first configuration information is further for configuring fourth DCI and fifth DCI, and each of the fourth DCI and the fifth DCI is for scheduling one carrier. That the terminal device monitors the first DCI and the second DCI based on a second monitoring bit length includes:

The terminal device monitors the first DCI, the second DCI, the fourth DCI, and the fifth DCI based on the second monitoring bit length, a fourth monitoring bit length, and a fifth monitoring bit length, where the second monitoring bit length, the fourth monitoring bit length, and the fifth monitoring bit length are different, the fourth monitoring bit length is a monitoring bit length of the fourth DCI, and the fifth monitoring bit length is a monitoring bit length of the fifth DCI. Specifically, the network device configures four pieces of DCI by using the first configuration information: the first DCI, the second DCI, the fourth DCI, and the fifth DCI. The first DCI is DCI for multi-carrier scheduling, the second DCI, the fourth DCI, and the fifth DCI are DCI for single-carrier scheduling, and each piece of DCI has an original bit length. If the original bit lengths of the DCIs are different, the four pieces of DCI correspond to four DCI sizes, and a DCI size budget is not met. Therefore, an alignment operation is performed on the DCI based on the original bit lengths of the four pieces of DCI, to finally obtain three monitoring bit lengths, namely, the second monitoring bit length, the fourth monitoring bit length, and the fifth monitoring bit length, which exactly meet the DCI size budget.

In this embodiment, the second monitoring bit length is determined based on the first monitoring bit length of the first DCI and the first monitoring bit length of the second DCI, and may be the original bit length of the first DCI or the bit length obtained after the alignment operation is performed on the original bit length of the first DCI, or may be the original bit length of the second DCI or the bit length obtained after the alignment operation is performed on the original bit length of the second DCI. For details, refer to the foregoing descriptions.

The fourth monitoring bit length is a monitoring bit length of the fourth DCI, and the fourth monitoring bit length may be an original bit length of the fourth DCI that is configured by using the second configuration information, or may be a bit length obtained after an alignment operation is performed on an original bit length of the fourth DCI (for details, refer to the following descriptions).

The fifth monitoring bit length is a monitoring bit length of the fifth DCI, and the fifth monitoring bit length may be an original bit length of the fifth DCI that is configured by using the second configuration information, or may be a bit length obtained after an alignment operation is performed on an original bit length of the fifth DCI (for details, refer to the following descriptions).

For the network device, the network device determines the second monitoring bit length, the fourth monitoring bit length, and the fifth monitoring bit length in a same manner as the terminal device. After determining the second monitoring bit length, the fourth monitoring bit length, and the fifth monitoring bit length, the network device sends at least one piece of the first DCI, the second DCI, the fourth DCI, and the fifth DCI based on at least one of the second monitoring bit length, the fourth monitoring bit length, and the fifth monitoring bit length.

It should be understood that when sending at least one piece of DCI, the network device sends the DCI based on a determined monitoring bit length of the DCI.

If the network device sends at least one piece of the first DCI and the second DCI, the network device sends at least one piece of the first DCI and the second DCI based on the second monitoring bit length; if the network device sends the fourth DCI, the network device sends the fourth DCI based on the fourth monitoring bit length; or if the network device sends the fifth DCI, the network device sends the fifth DCI based on the fifth monitoring bit length.

In this embodiment, the first DCI may be an example of the foregoing mDCI. For example, a format of the first DCI may be the foregoing DCI format 0_3 or DCI format 1_3. The second DCI, the fourth DCI, and the fifth DCI each may be any example of the foregoing sDCI, and the second DCI, the fourth DCI, and the fifth DCI have different formats. For example, the format of the second DCI is the DCI format 0_0 in the CSS, the DCI format 1_0 in the CSS, the DCI format 0_0 in the USS, or the DCI format 1_0 in the USS, the fourth DCI is the DCI format 0_1 in the USS or the DCI format 1_1 in the USS, and the fifth DCI is the DCI format 0_2 in the USS or the DCI format 1_2 in the USS. For another example, the second DCI is the DCI format 0_1 in the USS or the DCI format 1_1 in the USS, the fourth DCI is the DCI format 0_2 in the USS or the DCI format 1_2 in the USS, and the fifth DCI format is the DCI format 0_0 in the CSS, the DCI format 1_0 in the CSS, the DCI format 0_0 in the USS, or the DCI format 1_0 in the USS.

It should be understood that one carrier scheduled by each of the second DCI, the fourth DCI, and the fifth DCI is a carrier corresponding to a same cell, and carriers scheduled by the three pieces of DCI may be at least partially the same, or may be different.

When one cell schedules a plurality of carriers, three carriers scheduled by the second DCI, the fourth DCI, and the fifth DCI may be at least partially the same, or may be different. For example, a cell 1 corresponds to three carriers: a carrier 1, a carrier 2, and a carrier 3, the second DCI schedules the carrier 1, the fourth DCI schedules the carrier 2, and the fifth DCI schedules the carrier 3. The carriers scheduled by the three pieces of DCI are different from each other. For another example, a cell 1 corresponds to a carrier 1, a carrier 2, and a carrier 3, the second DCI schedules the carrier 1, the fourth DCI schedules the carrier 2, and the fifth DCI schedules the carrier 2. Two carriers in the carriers scheduled by the three pieces of DCI are the same. For another example, a cell 1 corresponds to a carrier 1, a carrier 2, and a carrier 3, and the second DCI, the fourth DCI, and the fifth DCI all schedule the carrier 1. The three pieces of DCI schedule the same carrier.

When one cell schedules one carrier, the three pieces of DCI schedule a same carrier.

Optionally, the first configuration information is further for configuring a search space of the fourth DCI and a search space of the fifth DCI. The search space of the fourth DCI, the search space of the fifth DCI, the search space of the first DCI, and the search space of the second DCI may be the same or may be different. This is not limited in this embodiment of this application. For example, the search space of the first DCI is different from the search spaces of the remaining three pieces of DCI, and search spaces of any two of the remaining three pieces of DCI are the same. For another example, the search spaces of the four pieces of DCI are different.

**Embodiment C**

Optionally, the first configuration information is further for configuring the third DCI, sixth DCI, seventh DCI, eighth DCI, ninth DCI, and tenth DCI, the third DCI is for scheduling the N carriers, N is an integer greater than 1, the sixth DCI, the seventh DCI, the eighth DCI, the ninth DCI, and the tenth DCI each are for scheduling one carrier, the first monitoring bit length of the third DCI is different from the third monitoring bit length of the first DCI, and the first monitoring bit length of the first DCI is determined based on the third monitoring bit length of the first DCI and the first monitoring bit length of the third DCI.

That the terminal device monitors the first DCI, the second DCI, the fourth DCI, and the fifth DCI based on the second monitoring bit length, a fourth monitoring bit length, and a fifth monitoring bit length includes:

The terminal device monitors the first DCI, the second DCI, the third DCI, the fourth DCI, the fifth DCI, the sixth DCI, the seventh DCI, the eighth DCI, the ninth DCI, and the tenth DCI based on the second monitoring bit length, the fourth monitoring bit length, and the fifth monitoring bit length.

The second monitoring bit length is monitoring bit lengths of the first DCI, the second DCI, the third DCI, and the sixth DCI, the fourth monitoring bit length is monitoring bit lengths of the fourth DCI and the seventh DCI, and the fifth monitoring bit length is monitoring bit lengths of the fifth DCI, the eighth DCI, the ninth DCI, and the tenth DCI.

Specifically, the network device configures 10 pieces of DCI by using the first configuration information: the first DCI, the second DCI, the third DCI, the fourth DCI, the fifth DCI, the sixth DCI, the seventh DCI, the eighth DCI, the ninth DCI, and the tenth DCI. The first DCI and the second DCI are DCI for multi-carrier scheduling, and the remaining eight pieces of DCI are DCI for single-carrier scheduling. Each piece of DCI has an original bit length. If the original bit lengths of the DCIs are different, the 10 pieces of DCI correspond to 10 DCI sizes, and a DCI size budget is not met. Therefore, an alignment operation is performed on the DCI based on the original bit lengths of the 10 pieces of DCI, to finally obtain three monitoring bit lengths, namely, the second monitoring bit length, the fourth monitoring bit length, and the fifth monitoring bit length, which meet the DCI size budget.

In this embodiment, the first monitoring bit length of the first DCI is determined based on the third monitoring bit length of the first DCI and the first monitoring bit length of the third DCI, the first monitoring bit length of the second DCI is determined based on a sixth monitoring bit length of the second DCI and a first monitoring bit length of the sixth DCI, the second monitoring bit length is determined based on the first monitoring bit length of the first DCI and the first monitoring bit length of the second DCI, the fourth monitoring bit length is determined based on a first monitoring bit length of the fourth DCI and a first monitoring bit length of the seventh DCI, and the fifth monitoring bit length is determined based on a first monitoring bit length of the fifth DCI, a first monitoring bit length of the eighth DCI, a first monitoring bit length of the ninth DCI, and a first monitoring bit length of the tenth DCI.

The following uses the 10 pieces of DCI shown in Table 12 and the corresponding Embodiment 5 as an example to describe in detail a process in which the terminal device determines the second monitoring bit length, the fourth monitoring bit length, and the fifth monitoring bit length. For example, in Embodiment 5 corresponding to Table 12, the first DCI and the third DCI are DCI in the DCI format x_3 series, and corresponding formats are the DCI format 0_3 and the DCI format 1_3 respectively; the second DCI and the sixth DCI are DCI in the DCI format x_1 series, and corresponding formats are the DCI format 0_1 and the DCI format 1_1 respectively; the fourth DCI and the seventh DC are DCI in the DCI format x_2 series, and corresponding formats are the DCI format 0_2 and the DCI format 1_2 respectively; and the fifth DCI, the eighth DCI, the ninth DCI, and the tenth DCI are DCI in the DCI format x_0 series, and corresponding formats are the DCI format 0_0 in the CSS, the DCI format 1_0 in the CSS, the DCI format 0_0 in the USS, and the DCI format 1_0 in the USS respectively.

**Step 1.** The terminal device determines the first monitoring bit length of the third DCI and the third monitoring bit length of the first DCI. For specific descriptions, refer to related descriptions of step 1 in Embodiment A. Details are not described again.

Embodiment 5 corresponding to Table 12 is used as an example. Step 1 may correspond to step 3C in Embodiment 5. The format of the first DCI may be the DCI format 0_3, the format of the third DCI may be the DCI format 1_3, the third monitoring bit length of the first DCI may be the size E, and the first monitoring bit length of the third DCI may be the size F.

**Step 2.** The terminal device determines the first monitoring bit length of the first DCI based on the first monitoring bit length of the third DCI and the third monitoring bit length of the first DCI. For specific descriptions, refer to related descriptions of step 2 in Embodiment A. Details are not described again.

Embodiment 5 corresponding to Table 12 is used as an example. Step 2 may correspond to step 5D in Embodiment 5. The first monitoring bit length of the first DCI may be the size G.

**Step 3.** The terminal device determines the first monitoring bit length of the second DCI based on the sixth monitoring bit length of the second DCI and the first monitoring bit length of the sixth DCI.

It should be understood that the first monitoring bit length of the second DCI obtained in step 3 is not only a monitoring bit length of the second DCI obtained after step 3 is performed, but also a monitoring bit length of the sixth DCI obtained after step 3 is performed.

The terminal device may determine the sixth monitoring bit length of the second DCI based on the second configuration information. The sixth monitoring bit length of the second DCI may be the original bit length of the second DCI, or may be the bit length obtained after the alignment operation is performed on the original bit length of the second DCI. The terminal device may determine the first monitoring bit length of the sixth DCI based on the second configuration information, where the first monitoring bit length may be an original bit length of the sixth DCI, or may be a bit length obtained after an alignment operation is performed on an original bit length of the sixth DCI.

Embodiment 5 corresponding to Table 12 is used as an example. The format of the second DCI may be the DCI format 0_1, the sixth monitoring bit length of the second DCI is the size C, the format of the sixth DCI may be the DCI format 1_1, and the first monitoring bit length of the sixth DCI is the size D. For the DCI format 0_1, in addition to the original bit length configured by using the second configuration information, whether to perform an alignment operation on the DCI format 0_1 further needs to be determined depending on whether the network device configures an SUL carrier for the terminal device and whether a DCI size of the DCI format 0_1 of the terminal device is the same as a DCI size of the DCI format 0_0 or the DCI format 1_0 of another terminal device in the USS. If the alignment operation is not performed, an obtained size C is an original bit length of the DCI format 0_1. If the alignment operation is performed, the obtained size C is a bit length obtained after the alignment operation is performed on the bit length of the DCI format 0_1. For a specific description, refer to the foregoing descriptions. For the DCI format 1_1, in addition to the original bit length configured by using the second configuration information, whether to perform an alignment operation on the DCI format 1_1 further needs to be determined depending on whether a DCI size of the DCI format 1_1 of the terminal device is the same as a DCI size of the DCI format 0_0 or the DCI format 1_0 of another terminal device in the USS. If the alignment operation is not performed, an obtained size D is an original bit length of the DCI format 1_1. If the alignment operation is performed, the obtained size D is a bit length obtained after the alignment operation is performed on the bit length of the DCI format 1_1. For a specific description, refer to the foregoing descriptions.

Example 1: If the first monitoring bit length of the sixth DCI is the same as the sixth monitoring bit length of the second DCI, the first monitoring bit length of the sixth DCI and the sixth monitoring bit length of the second DCI are determined as the first monitoring bit length of the second DCI.

In this example, Embodiment 5 corresponding to Table 12 is used as an example. Step 3 may correspond to step 3A in Embodiment 5, step 5C is not performed, and the obtained size C (for example, the sixth monitoring bit length of the second DCI) of the DCI format 0_1 and the obtained size D (for example, the first monitoring bit length of the sixth DCI) of the DCI format 1_1 are the same, and are one bit length (or DCI size). The bit length is used as the first monitoring bit length of the second DCI, to align the first monitoring bit length of the second DCI with a bit length of another piece of DCI.

Example 2: If the first monitoring bit length of the sixth DCI is different from the sixth monitoring bit length of the second DCI, the first monitoring bit length of the second DCI is determined based on the first monitoring bit length of the sixth DCI and the sixth monitoring bit length of the second DCI.

In a process of determining the first monitoring bit length of the second DCI based on the first monitoring bit length of the sixth DCI and the sixth monitoring bit length of the second DCI, the first monitoring bit length of the sixth DCI is aligned with the sixth monitoring bit length of the second DCI, to obtain the first monitoring bit length of the second DCI. For example, the first monitoring bit length of the second DCI is the same as either of the first monitoring bit length of the sixth DCI and the sixth monitoring bit length of the second DCI. For example, a larger bit length in the first monitoring bit length of the sixth DCI and the sixth monitoring bit length of the second DCI is used as a reference to perform an alignment operation on the bit length of the other piece of DCI, to obtain the first monitoring bit length of the second DCI. The alignment operation herein is a zero padding operation. For another example, a smaller bit length in the first monitoring bit length of the sixth DCI and the sixth monitoring bit length of the second DCI is used as a reference to perform an alignment operation on the bit length of the other piece of DCI, to obtain the first monitoring bit length of the second DCI. The alignment operation herein is a truncation operation.

In this example, Embodiment 5 corresponding to Table 12 is used as an example. Step 3 may correspond to steps 3A and 5C in Embodiment 5, and the size C (for example, the sixth monitoring bit length of the second DCI) of the DCI format 0_1 obtained in step 3A is different from the size D (for example, the first monitoring bit length of the sixth DCI) of the DCI format 1_1. The size C and the size D are aligned in step 5C, to obtain the size H (for example, the first monitoring bit length of the second DCI), to align the size H with a bit length of another piece of DCI.

**Step 4.** The terminal device determines the second monitoring bit length based on the first monitoring bit length of the first DCI and the first monitoring bit length of the second DCI. For specific descriptions, refer to related descriptions of step 3 in Method Embodiment A. Details are not described again.

Embodiment 5 corresponding to Table 12 is used as an example. Step 4 may correspond to step 5E in Embodiment 5. The second monitoring bit length is the size L4.

**Step 5.** The terminal device determines the fourth monitoring bit length based on the first monitoring bit length of the fourth DCI and the first monitoring bit length of the seventh DC.

The terminal device may determine the first monitoring bit length of the fourth DCI based on the second configuration information. The first monitoring bit length of the fourth DCI may be an original bit length of the fourth DCI, or may be a bit length obtained after the alignment operation is performed on an original bit length of the fourth DCI. The terminal device may determine the first monitoring bit length of the seventh DCI based on the second configuration information, where the first monitoring bit length may be an original bit length of the seventh DCI, or may be a bit length obtained after an alignment operation is performed on an original bit length of the seventh DCI.

Embodiment 5 corresponding to Table 12 is used as an example. The format of the fourth DCI is the DCI format 0_2, the first monitoring bit length of the fourth DCI is the size M, the format of the seventh DCI is the DCI format 1_2, and the first monitoring bit length of the seventh DCI is the size N. For the DCI format 0_2, in addition to the original bit length configured by using the second configuration information, whether to perform an alignment operation on the DCI format 0_2 further needs to be determined depending on whether the network device configures an SUL carrier for the terminal device. If the alignment operation is not performed, an obtained size M is an original bit length of the DCI format 0_2. If the alignment operation is performed, the obtained size M is a bit length obtained after the alignment operation is performed on the bit length of the DCI format 0_2. For a specific description, refer to the foregoing descriptions. For the DCI format 1_2, the size N is the original bit length of the DCI format 1_2.

Example 1: If the first monitoring bit length of the fourth DCI is the same as the first monitoring bit length of the seventh DC, the first monitoring bit length of the fourth DCI and the first monitoring bit length of the seventh DC are determined as the fourth monitoring bit length.

In this example, Embodiment 5 corresponding to Table 12 is used as an example. Step 5 may correspond to step 3B in Embodiment 5, step 5B is not performed, and the obtained size M (for example, the first monitoring bit length of the fourth DCI) of the DCI format 0_2 and the obtained size N (for example, the first monitoring bit length of the seventh DCI) of the DCI format 1_2 are the same, and are one bit length (or DCI size). The bit length is used as the fourth monitoring bit length.

Example 2: If the first monitoring bit length of the fourth DCI is different from the first monitoring bit length of the seventh DCI, the fourth monitoring bit length is determined based on the first monitoring bit length of the fourth DCI and the first monitoring bit length of the seventh DCI.

In a process of determining the fourth monitoring bit length based on the first monitoring bit length of the fourth DCI and the first monitoring bit length of the seventh DCI, the first monitoring bit length of the fourth DCI is aligned with the first monitoring bit length of the seventh DCI, to obtain the fourth monitoring bit length. For example, the fourth monitoring bit length is the same as either of the first monitoring bit length of the fourth DCI and the first monitoring bit length of the seventh DCI. For example, a larger bit length in the first monitoring bit length of the fourth DCI and the first monitoring bit length of the seventh DCI is used as a reference to perform an alignment operation on the bit length of the other piece of DCI, to obtain the fourth monitoring bit length. The alignment operation herein is a zero padding operation. For another example, a smaller bit length in the first monitoring bit length of the fourth DCI and the first monitoring bit length of the seventh DCI is used as a reference to perform an alignment operation on the bit length of the other piece of DCI, to obtain the fourth monitoring bit length. The alignment operation herein is a truncation operation.

In this example, Embodiment 5 corresponding to Table 12 is used as an example. Step 5 may correspond to steps 3B and 5B in Embodiment 5, the size M (for example, the first monitoring bit length of the fourth DCI) of the DCI format 0_2 obtained in step 3B is different from the size N (for example, the first monitoring bit length of the seventh DCI) of the DCI format 1_2. The size M and the size N are aligned in step 5B, to obtain the size K (for example, the fourth monitoring bit length).

**Step 6.** Determine the fifth monitoring bit length based on the first monitoring bit length of the fifth DCI, the first monitoring bit length of the eighth DCI, the first monitoring bit length of the ninth DCI, and the first monitoring bit length of the tenth DCI.

The terminal device may determine the first monitoring bit lengths of the fifth DCI, the eighth DCI, the ninth DCI, and the tenth DCI based on the second configuration information. The first monitoring bit length of each piece of DCI may be an original bit length, or may be a bit length obtained after an alignment operation is performed on an original bit length of the DCI.

In some embodiments, the first monitoring bit length of the fifth DCI is the same as the first monitoring bit length of the eighth DCI, and the first monitoring bit length of the ninth DCI is the same as the first monitoring bit length of the tenth DCI.

Embodiment 5 corresponding to Table 12 is used as an example. The format of the fifth DCI may be the DCI format 0_0 in the CSS, the first monitoring bit length of the fifth DCI is the size A, the format of the eighth DCI may be the DCI format 1_0 in the CSS, the first monitoring bit length of the eighth DCI is the size A, the format of the ninth DCI may be the DCI format 0_0 in the USS, the first monitoring bit length of the ninth DCI is the size B, the format of the tenth DCI is the DCI format 1_0 in the USS, and the first monitoring bit length of the tenth DCI is the size B. For the DCI format 0_0 in the CSS, if the original bit length of the DCI format 0_0 in the CSS is the same as that of the DCI format 1_0, an alignment operation does not need to be performed on the DCI format 0_0 in the CSS, and the obtained size A is an original bit length. If original bit lengths of the two pieces of DCI are different, an alignment operation needs to be performed on the DCI format 0_0 in the CSS, and the obtained size A is a bit length obtained after the alignment operation is performed on the original bit length. For the DCI format 1_0 in the CSS, the obtained size A is an original bit length. For the DCI format 0_0 in the USS and the DCI format 1_0 in the USS, whether to perform an alignment operation on an original bit length of each piece of DCI needs to be determined based on original bit lengths of the two pieces of DCI and whether the network device configures an SUL carrier for the terminal device. For specific descriptions, refer to the foregoing descriptions.

Example 1: If the first monitoring bit lengths of the fifth DCI and the eighth DCI are the same as the first monitoring bit lengths of the ninth DCI and the tenth DCI, the first monitoring bit lengths of the four pieces of DCI are determined as the fifth monitoring bit length.

In this example, Embodiment 5 corresponding to Table 12 is used as an example. Step 5 may correspond to step 1 and step 2 in Embodiment 5, and step 5A is not performed, and the size A (for example, the first monitoring bit lengths of the fifth DCI and the eighth DCI) of the DCI format 0_0 and the DCI format 1_0 in the CSS obtained in step 1 and the size B (for example, the first monitoring bit lengths of the ninth DCI and the tenth DCI) of the DCI format 0_0 and the DCI format 1_0 in the USS obtained in step 2 are the same, and are one bit length (or DCI size). The bit length is used as the fifth monitoring bit length.

Example 2: If the first monitoring bit lengths of the fifth DCI and the eighth DCI are different from the first monitoring bit lengths of the ninth DCI and the tenth DCI, the fifth monitoring bit length is determined based on the first monitoring bit lengths of the fifth DCI and the eighth DCI and the first monitoring bit lengths of the ninth DCI and the tenth DCI.

In a process of determining the fifth monitoring bit length based on the first monitoring bit lengths of the fifth DCI and the eighth DCI and the first monitoring bit lengths of the ninth DCI and the tenth DCI, the first monitoring bit lengths of the fifth DCI and the eighth DCI are aligned with the first monitoring bit lengths of the ninth DCI and the tenth DCI, to obtain the fifth monitoring bit length. For example, the fifth monitoring bit length is the same as any one of the first monitoring bit lengths of the fifth DCI and the eighth DCI and the first monitoring bit lengths of the ninth DCI and the tenth DCI. For example, the first monitoring bit lengths of the fifth DCI and the eighth DCI are used as a reference, and the first monitoring bit lengths of the ninth DCI and the tenth DCI are aligned with the first monitoring bit lengths of the fifth DCI and the eighth DCI, so that the obtained fifth monitoring bit length is the same as the first monitoring bit lengths of the fifth DCI and the eighth DCI. For another example, the first monitoring bit lengths of the ninth DCI and the tenth DCI are used as a reference, and the first monitoring bit lengths of the fifth DCI and the eighth DCI are aligned with the first monitoring bit lengths of the ninth DCI and the tenth DCI, so that the obtained fifth monitoring bit length is the same as the first monitoring bit lengths of the fifth DCI and the eighth DCI.

In this example, Embodiment 5 corresponding to Table 12 is used as an example. Step 5 may correspond to step 1, step 2, and step 5A in Embodiment 5, and the size A (for example, the first monitoring bit lengths of the fifth DCI and the eighth DCI) of the DCI format 0_0 and the DCI format 1_0 in the CSS obtained in step 1 is different from the size B (for example, the first monitoring bit lengths of the ninth DCI and the tenth DCI) of the DCI format 0_0 and the DCI format 1_0 in the USS obtained in step 2. In step 5A, the size A is used as a reference, and the size B is aligned with the size A, so that the bit lengths of the DCI format 0_0 and the DCI format 1_0 in the USS are changed to the size A, and the size A is used as the fifth monitoring bit length.

In this way, the second monitoring bit length, the fourth monitoring bit length, and the fifth monitoring bit length are obtained by performing step 1 to step 6, and the 10 pieces of DCI are monitored based on the three monitoring bit lengths, to reduce blind detection complexity.

It should be understood that an execution sequence of step 1 to step 6 is not limited in this embodiment of this application. Sequence numbers of the foregoing steps do not represent an execution sequence, and internal logic of implementation of the steps is taken as final.

In this embodiment, the first DCI and the third DCI each may be any example of the foregoing mDCI, and the formats of the first DCI and the third DCI are different. For example, the format of the first DCI is one of the DCI format 0_3 and the DCI format 1_3, and the format of the third DCI is the other one of the DCI format 0_3 and the DCI format 1_3. The remaining eight pieces of DCI may be any example of the foregoing sDCI, and the eight pieces of DCI have different formats. The second DCI and the sixth DCI are DCI in a same series, the fourth DCI and the seventh DCI are DCI in a same series, the second DCI and the sixth DCI may correspond to DCI formats in either of the DCI format x_2 series and the DCI format x_1 series, the fourth DCI and the seventh DCI correspond to DCI formats of the other one of the DCI format x_2 series and the DCI format x_1 series, and each piece of DCI corresponds to one DCI format. The fifth DCI, the eighth DCI, the ninth DCI, and the tenth DCI are DCI in a same series, correspond to DCI formats of the DCI format x_0 series, and correspond to the DCI format 0_0 in the CSS, the DCI format 1_0 in the CSS, the DCI format 0_0 in the USS, and the DCI format 1_0 in the USS respectively.

It should be understood that Embodiment C described above by using Embodiment 5 corresponding to Table 12 is merely an example for description, and Embodiment C may also correspond to Embodiment 6 corresponding to Table 13.

For example, in Embodiment 6 corresponding to Table 13, the first DCI and the third DCI are DCI in the DCI format x_3 series, and corresponding formats are the DCI format 0_3 and the DCI format 1_3 respectively; the second DCI and the sixth DCI are DCI in the DCI format x_2 series, and corresponding formats are the DCI format 0_2 and the DCI format 1_2 respectively; the fourth DCI and the seventh DC are DCI in the DCI format x_1 series, and corresponding formats are the DCI format 0_1 and the DCI format 1_1 respectively; and the fifth DCI, the eighth DCI, the ninth DCI, and the tenth DCI are DCI in the DCI format x_0 series, and corresponding formats are the DCI format 0_0 in the CSS, the DCI format 1_0 in the CSS, the DCI format 0_0 in the USS, and the DCI format 1_0 in the USS respectively.

Step 1 in Embodiment C may correspond to step 3C in Embodiment 6. Step 2 in Embodiment C may correspond to step 5D in Embodiment 6. Step 3 in Embodiment C may correspond to step 3B, or step 3B and step 5B in Embodiment 6. If the size M of the DCI format 0_2 obtained in step 3B is the same as the size N of the DCI format 1_2, step 3 in Embodiment C corresponds to step 3B in Embodiment 6, and the size M of the DCI format 0_2 and the size N of the DCI format 1_2 are the first monitoring bit length of the second DCI. If the size M of the DCI format 0_2 obtained in step 3B is different from the size N of the DCI format 1_2, step 3 in Embodiment C corresponds to step 3B and step 5B in Embodiment 6. The finally obtained size K is the first monitoring bit length of the second DCI. Step 4 in Embodiment C may correspond to step 5E in Embodiment 6, and the finally obtained size L5 is the second monitoring bit length. Step 5 in Embodiment C may correspond to step 3A, or step 3A and step 5C in Embodiment 6. If the size C of the DCI format 0_1 obtained in step 3A is the same as the size D of the DCI format 1_1, step 5 in Embodiment C corresponds to step 3A in Embodiment 6, and the size C of the DCI format 0_1 and the size D of the DCI format 1_1 are the fourth monitoring bit length. If the size C of the DCI format 0_1 obtained in step 3A is different from the size D of the DCI format 1_1, step 6 in Embodiment C corresponds to step 3A and step 5C in Embodiment 6. The finally obtained size H is the fourth monitoring bit length. Step 6 in Embodiment C corresponds to step 1 and step 2, or step 1, step 2, and step 5A in Embodiment 6. If the size A of the DCI format 0_0 and the DCI format 1_0 in the CSS obtained in step 1 in Embodiment 6 is the same as the size B of the DCI format 0_0 and the DCI format 1_0 in the USS obtained in step 2, step 6 in Embodiment C corresponds to step 1 and step 2 in Embodiment 6. The size A or the size B is the fifth monitoring bit length. If the size A of the DCI format 0_0 and the DCI format 1_0 in the CSS obtained in step 1 in Embodiment 6 is different from the size B of the DCI format 0_0 and the DCI format 1_0 in the USS obtained in step 2, step 6 in Embodiment C corresponds to step 1, step 2, and step 5A in Embodiment 6. The finally obtained size A is the fifth monitoring bit length.

For the network device, the network device determines the second monitoring bit length, the fourth monitoring bit length, and the fifth monitoring bit length in a same manner as the terminal device. After determining the second monitoring bit length, the fourth monitoring bit length, and the fifth monitoring bit length, the network device sends at least one of the 10 pieces of DCI based on at least one of the second monitoring bit length, the fourth monitoring bit length, and the fifth monitoring bit length.

It should be understood that when sending at least one of the 10 pieces of DCI, the network device sends the DCI based on a determined monitoring bit length of the DCI. For example, at least one piece of the first DCI, the second DCI, the third DCI, and the sixth DCI is sent based on the second monitoring bit length, at least one piece of the fourth DCI and the seventh DCI is sent based on the fourth monitoring bit length, and at least one piece of the fifth DCI, the eighth DCI, the ninth DCI, and the tenth DCI is sent based on the fifth monitoring bit length.

It should be understood that one carrier scheduled by each of the second DCI, the fourth DCI, the fifth DCI, the sixth DCI, the seventh DCI, the eighth DCI, the ninth DCI, and the tenth DCI is a carrier corresponding to a same cell, and carriers scheduled by the eight pieces of DCI may be at least partially the same, or may be different.

When one cell schedules a plurality of carriers, carriers scheduled by the foregoing eight pieces of DCI may be at least partially the same, or may be different. When one cell schedules one carrier, the eight pieces of DCI schedule one carrier.

**Embodiment D**

Optionally, the first configuration information is further for configuring the third DCI, sixth DCI, seventh DCI, eighth DCI, ninth DCI, and tenth DCI, the third DCI is for scheduling the N carriers, N is an integer greater than 1, the sixth DCI, the seventh DCI, the eighth DCI, the ninth DCI, and the tenth DCI each are for scheduling one carrier, the first monitoring bit length of the third DCI is different from the third monitoring bit length of the first DCI, and the first monitoring bit length of the first DCI is determined based on the third monitoring bit length of the first DCI and the first monitoring bit length of the third DCI.

That the terminal device monitors the first DCI, the second DCI, the fourth DCI, and the fifth DCI based on the second monitoring bit length, a fourth monitoring bit length, and a fifth monitoring bit length includes:

The terminal device monitors the first DCI, the second DCI, the third DCI, the fourth DCI, the fifth DCI, the sixth DCI, the seventh DCI, the eighth DCI, the ninth DCI, and the tenth DCI based on the second monitoring bit length, the fourth monitoring bit length, and the fifth monitoring bit length.

The second monitoring bit length is monitoring bit lengths of the first DCI, the second DCI, the third DCI, the eighth DCI, the ninth DCI, and the tenth DCI, the fourth monitoring bit length is monitoring bit lengths of the fourth DCI and the seventh DCI, and the fifth monitoring bit length is monitoring bit lengths of the fifth DCI and the sixth DCI.

Specifically, the network device configures 10 pieces of DCI by using the first configuration information: the first DCI, the second DCI, the third DCI, the fourth DCI, the fifth DCI, the sixth DCI, the seventh DCI, the eighth DCI, the ninth DCI, and the tenth DCI. The first DCI and the second DCI are DCI for multi-carrier scheduling, and the remaining eight pieces of DCI are DCI for single-carrier scheduling. Each piece of DCI has an original bit length. If the original bit lengths of the DCIs are different, the 10 pieces of DCI correspond to 10 DCI sizes, and a DCI size budget is not met. Therefore, an alignment operation is performed on the DCI based on the original bit lengths of the 10 pieces of DCI, to finally obtain three monitoring bit lengths, namely, the second monitoring bit length, the fourth monitoring bit length, and the fifth monitoring bit length, which meet the DCI size budget.

In this embodiment, the first monitoring bit length of the second DCI is determined based on a seventh monitoring bit length of the second DCI, a first monitoring bit length of the eighth DCI, a first monitoring bit length of the ninth DCI, and a first monitoring bit length of the tenth DCI, the fourth monitoring bit length is determined based on a first monitoring bit length of the fourth DCI and a first monitoring bit length of the seventh DCI, and the fifth monitoring bit length is determined based on a first monitoring bit length of the fifth DCI and a first monitoring bit length of the sixth DCI.

The following uses the 10 pieces of DCI shown in Table 9 and the corresponding Embodiment 2 as an example to describe in detail a process in which the terminal device determines the second monitoring bit length, the fourth monitoring bit length, and the fifth monitoring bit length. For example, in Embodiment 2 corresponding to Table 9, the first DCI and the third DCI are DCI in the DCI format x_3 series, and corresponding formats are the DCI format 0_3 and the DCI format 1_3 respectively; the second DCI, the eighth DCI, the ninth DCI, and the tenth DCI are DCI in the DCI format x_0 series, and corresponding formats are the DCI format 0_0 in the CSS, the DCI format 1_0 in the CSS, the DCI format 0_0 in the USS, and the DCI format 1_0 in the USS respectively; the fourth DCI and the seventh DCI are DCI in the DCI format x_2 series, and corresponding formats are the DCI format 0_2 and the DCI format 1_2 respectively; and the fifth DCI and the sixth DCI are DCI in the DCI format x_1 series, and corresponding formats are the DCI format 0_1 and the DCI format 1_1 respectively.

**Step 1.** The terminal device determines the first monitoring bit length of the third DCI and the third monitoring bit length of the first DCI.

**Step 2.** The terminal device determines the first monitoring bit length of the first DCI based on the first monitoring bit length of the third DCI and the third monitoring bit length of the first DCI.

For specific descriptions of step 1 and step 2, refer to related descriptions of step 1 and step 2 in Embodiment C. Details are not described again.

**Step 3.** The terminal device determines the first monitoring bit length of the second DCI based on the seventh monitoring bit length of the second DCI, the first monitoring bit length of the eighth DCI, the first monitoring bit length of the ninth DCI, and the first monitoring bit length of the tenth DCI.

A process of determining the first monitoring bit length of the second DCI in step 3 is similar to the process of determining the fifth monitoring bit length in step 6 in Embodiment C. The first monitoring bit length of the fifth DCI in Embodiment C is replaced with the seventh monitoring bit length of the second DCI herein, and the fifth monitoring bit length in Embodiment C is replaced with the first monitoring bit length of the second DCI herein. For specific descriptions, refer to related descriptions in step 6 in Embodiment C. Details are not described again.

**Step 4.** The terminal device determines the second monitoring bit length based on the first monitoring bit length of the second DCI and the first monitoring bit length of the first DCI. For specific descriptions, refer to related descriptions of step 4 in Embodiment C. Details are not described again.

**Step 5.** The terminal device determines the fourth monitoring bit length based on the first monitoring bit length of the fourth DCI and the first monitoring bit length of the seventh DC. For specific descriptions, refer to related descriptions of step 5 in Embodiment C. Details are not described again.

**Step 6.** The terminal device determines the fifth monitoring bit length based on the first monitoring bit length of the fifth DCI and the first monitoring bit length of the sixth DCI.

A process of determining the fifth monitoring bit length in step 6 is similar to the process of determining the first monitoring bit length of the second DCI in step 3 in Embodiment C. The sixth monitoring bit length of the second DCI in Embodiment C is replaced with the first monitoring bit length of the fifth DCI herein, and the first monitoring bit length of the second DCI in Embodiment C is replaced with the fifth monitoring bit length herein. For specific descriptions, refer to related descriptions in step 3 in Embodiment C. Details are not described again.

In this way, the second monitoring bit length, the fourth monitoring bit length, and the fifth monitoring bit length are obtained by performing step 1 to step 6, and the 10 pieces of DCI are monitored based on the three monitoring bit lengths.

It should be understood that an execution sequence of step 1 to step 6 is not limited in this embodiment of this application. Sequence numbers of the foregoing steps do not represent an execution sequence, and internal logic of implementation of the steps is taken as final.

In this embodiment, the first DCI and the third DCI each may be any example of the foregoing mDCI, and the formats of the first DCI and the third DCI are different. For example, the format of the first DCI is one of the DCI format 0_3 and the DCI format 1_3, and the format of the third DCI is the other one of the DCI format 0_3 and the DCI format 1_3. The remaining eight pieces of DCI may be any example of the foregoing sDCI, and the eight pieces of DCI have different formats. The second DCI, the eighth DCI, the ninth DCI, and the tenth DCI are DCI in a same series, correspond to DCI formats of the DCI format x_0 series: the DCI format 0_0 in the CSS, the DCI format 1_0 in the CSS, the DCI format 0_0 in the USS, and the DCI format 1_0 in the USS respectively. The fourth DCI and the seventh DCI are DCI in a same series, the fifth DCI and the sixth DCI are DCI in a same series, the fourth DCI and the seventh DCI may correspond to either series of DCI formats in the DCI format x_2 series and the DCI format x_1 series, the fifth DCI and the sixth DCI correspond to the other DCI format in the DCI format x_2 series and the DCI format x_1 series, and each piece of DCI corresponds to one DCI format.

For the network device, the network device determines the second monitoring bit length, the fourth monitoring bit length, and the fifth monitoring bit length in a same manner as the terminal device. After determining the second monitoring bit length, the fourth monitoring bit length, and the fifth monitoring bit length, the network device sends at least one of the 10 pieces of DCI based on at least one of the second monitoring bit length, the fourth monitoring bit length, and the fifth monitoring bit length.

It should be understood that when sending at least one of the 10 pieces of DCI, the network device sends the DCI based on a determined monitoring bit length of the DCI. For example, at least one piece of the first DCI, the second DCI, the third DCI, the eighth DCI, the ninth DCI, and the tenth DCI is sent based on the second monitoring bit length, at least one piece of the fourth DCI and the seventh DCI is sent based on the fourth monitoring bit length, and at least one piece of the fifth DCI and the sixth DCI is sent based on the fifth monitoring bit length.

Optionally, the first DCI includes at least one of a first-type field and a second-type field, the first-type field includes at least one common field, the second-type field includes at least one independent field, information carried in the common field is common information of data channels transmitted on the M carriers, the independent field includes M sub-fields, the M sub-fields are in a one-to-one correspondence with the M carriers, and information carried in each sub-field is related to a data channel transmitted on a corresponding carrier.

That the first DCI includes at least one of a first-type field and a second-type field indicates that the first DCI includes the first-type field, the first DCI includes the second-type field, or the first DCI includes the first-type field and the second-type field.

For a case in which the first DCI includes the first-type field, refer to specific descriptions of the third DCI format of the mDCI in the first aspect. Details are not described again.

For a case in which the first DCI includes the second-type field, refer to specific descriptions of the second DCI format of the mDCI in the first aspect. Details are not described again.

For a case in which the first DCI includes the first-type field and the second-type field, refer to specific descriptions of the first DCI format of the mDCI in the first aspect. Details are not described again.

Optionally, the method further includes:
the network device sends second configuration information, where the second configuration information includes M pieces of carrier configuration information, the M pieces of carrier configuration information are in a one-to-one correspondence with the M carriers, a bit length of each sub-field of the independent field is determined based on corresponding carrier configuration information, and a bit length of the common field is determined in a predefined manner. Correspondingly, the terminal device receives the second configuration information.

In other words, the terminal device may determine a bit length of each common field and a bit length of each independent field in the first DCI based on the second configuration information, to obtain the original bit length of the first DCI. Therefore, the terminal device may determine, based on the original bit length of the first DCI, the first monitoring bit length of the first DCI and the second monitoring bit length finally used for blind detection, to implement a blind detection process.

For the independent field, bit lengths of the M sub-fields in each independent field may be determined based on the M pieces of carrier configuration information, to determine bit lengths of all independent fields. For specific descriptions, refer to related descriptions of determining the bit length of the independent field in the first DCI format of the mDCI in the first aspect. Details are not described again.

For the common field, a bit length of each common field may be determined in a predefined manner. The predefined manner is related to at least one piece of carrier configuration information in the M pieces of carrier configuration information. In other words, the bit length of each common field may be determined based on at least one piece of carrier configuration information in the M pieces of carrier configuration information, to determine bit lengths of all common fields. In some embodiments, the bit length of each common field is determined based on any one of the M pieces of carrier configuration information. Any one of the M pieces of carrier configuration information is a part of the M pieces of carrier configuration information. In some other embodiments, the bit length of each common field is determined based on the M pieces of carrier configuration information. The M pieces of carrier configuration information are all carrier configuration information in the M pieces of carrier configuration information. For specific descriptions, refer to related descriptions of determining the bit length of the common field in the first DCI format of the mDCI in the first aspect. Details are not described again.

FIG. 13 is a schematic diagram of a structure of a multi-carrier scheduling method 200 according to an embodiment of this application. The method 200 is applicable to the communication system shown in FIG. 1, and is performed by a network device and a terminal device.

In S210, the network device sends first configuration information, where the first configuration information is for configuring first downlink control information DCI, the first DCI is for scheduling M carriers, a first carrier in the M carriers corresponds to a first secondary cell, and M is an integer greater than 1. Correspondingly, the terminal device receives the first configuration information.

In S220, the network device sends the first DCI based on a monitoring bit length of the first DCI.

In S230, the terminal device monitors the first DCI based on the monitoring bit length of the first DCI, where monitoring bit lengths corresponding to the first secondary cell include the monitoring bit length of the first DCI, and a quantity of the monitoring bit lengths corresponding to the first secondary cell is less than or equal to a preset quantity. For example, the preset quantity is 3.

Specifically, the network device configures the first DCI for multi-carrier scheduling for the terminal device by using the first configuration information, and the terminal device or the network device determines the monitoring bit length of the first DCI, so that the terminal device monitors the first DCI based on the monitoring bit length of the first DCI, to complete a blind detection process. When the first carrier scheduled by the first DCI corresponds to the first secondary cell, the monitoring bit length (or a DCI size) of the first DCI grouped into the monitoring bit length corresponding to the first secondary cell, to meet a requirement that the quantity of the monitoring bit lengths corresponding to the first secondary cell is less than or equal to the preset quantity.

It should be understood that the monitoring bit length corresponding to the first secondary cell represents a monitoring bit length for blind detection. A monitoring bit length of DCI described below is also a monitoring bit length for blind detection.

For a secondary cell (for example, the first secondary cell), monitoring bit lengths (or DCI sizes) of DCI in an existing DCI format x_1 and DCI format x_2 for single-carrier scheduling belong to monitoring bit lengths corresponding to the secondary cell. One series of DCI formats correspond to one monitoring bit length, and two series of DCI formats correspond to two monitoring bit lengths. If a quantity of monitoring bit lengths corresponding to the secondary cell is 3, there is still one monitoring bit length. Therefore, a monitoring bit length of DCI (for example, the first DCI) for multi-carrier scheduling is grouped into the monitoring bit lengths corresponding to the secondary cell. In this way, the secondary cell corresponds to a maximum of three monitoring bit lengths, and a requirement that the quantity of the monitoring bit lengths corresponding to the secondary cell is 3 is met.

According to the multi-carrier scheduling method provided in this embodiment of this application, the monitoring bit length of the first DCI for multi-carrier scheduling is grouped into the monitoring bit lengths corresponding to the first secondary cell, that is, the monitoring bit lengths corresponding to the first secondary cell include the monitoring bit length of the first DCI. In this way, when a network device configures a plurality of pieces of DCI for single-carrier scheduling and a plurality of pieces of DCI for multi-carrier scheduling, monitoring bit lengths of all DCI meet a requirement that the quantity of the monitoring bit lengths corresponding to the first secondary cell is less than or equal to the preset quantity (for example, 3), with no need to align a bit length of the DCI for multi-carrier scheduling with a bit length of the DCI for single-carrier scheduling. This reduces complexity of a process of determining a monitoring bit length of DCI, and facilitates implementation.

Optionally, a carrier for carrying the first DCI is any carrier in the M carriers, or a carrier for carrying the first DCI is different from the M carriers.

That is, if the carrier for carrying the first DCI is any carrier in the M carriers, the first DCI may be a scheduling carrier; or if the carrier for carrying the first DCI is different from the M carriers, the first DCI is a scheduled carrier.

It should be noted that a quantity of monitoring bit lengths corresponding to a cell may be understood as the DCI size budget corresponding to the cell described above, and the DCI size budget is less than or equal to the preset quantity. For the first secondary cell, the quantity of the monitoring bit lengths corresponding to the first secondary cell may be understood as a DCI size budget corresponding to the first secondary cell.

The method 200 in this embodiment of this application is similar to Embodiment 8 in the second aspect. The first DCI may be any example of the mDCI, and the first secondary cell may be any secondary cell. For specific descriptions of the method 200, refer to related descriptions in Embodiment 8.

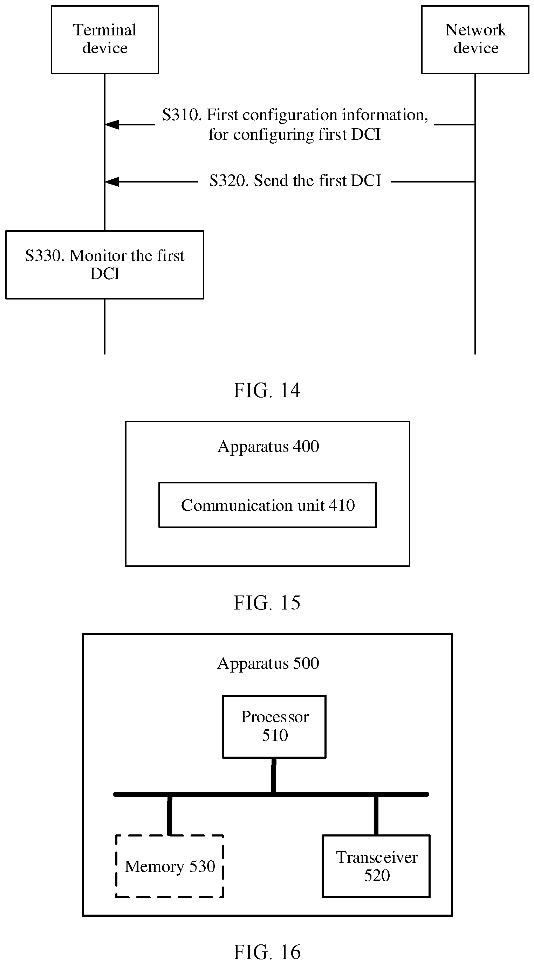

FIG. 14 is a schematic diagram of a structure of a multi-carrier scheduling method 300 according to an embodiment of this application. The method 300 is applicable to the communication system shown in FIG. 1, and is performed by a network device and a terminal device.

In S310, the network device sends first configuration information, where the first configuration information is for configuring first downlink control information DCI, the first DCI is for scheduling M carriers, M is an integer greater than 1, the first DCI includes at least one of a first-type field and a second-type field, the first-type field includes at least one common field, the second-type field includes at least one independent field, information carried in the common field is common information of data channels transmitted on the M carriers, the independent field includes M sub-fields, the M sub-fields are in a one-to-one correspondence with the M carriers, and information carried in each sub-field is related to a data channel transmitted on a corresponding carrier. Correspondingly, the terminal device receives the first configuration information.

In S320, the network device sends the first DCI.

In S330, the terminal device monitors the first DCI.

Optionally, the method further includes:
the network device sends second configuration information, where the second configuration information includes M pieces of carrier configuration information, the M pieces of carrier configuration information are in a one-to-one correspondence with the M carriers, a bit length of each sub-field of the independent field is determined based on corresponding carrier configuration information, and a bit length of the common field is determined in a predefined manner. Correspondingly, the terminal device receives the second configuration information.

In this embodiment, that the first DCI includes at least one of a first-type field and a second-type field indicates that the first DCI includes the first-type field, the first DCI includes the second-type field, or the first DCI includes the first-type field and the second-type field.

For a case in which the first DCI includes the first-type field, refer to specific descriptions of the third DCI format of the mDCI in the first aspect. Details are not described again.

For a case in which the first DCI includes the second-type field, refer to specific descriptions of the second DCI format of the mDCI in the first aspect. Details are not described again.

For a case in which the first DCI includes the first-type field and the second-type field, refer to specific descriptions of the first DCI format of the mDCI in the first aspect. Details are not described again.

It should be noted that the first configuration information and the second configuration information described in the methods 100, 200, and 300 may be two pieces of configuration information in the configuration information in the first aspect, the second aspect, and the third aspect. A function specifically implemented by the configuration information above corresponds to the first configuration information and the second configuration information in the methods 100, 200, and 300.

The foregoing describes in detail the multi-carrier scheduling method provided in embodiments of this application with reference to FIG. 1 to FIG. 14. The following describes in detail a multi-carrier scheduling apparatus provided in embodiments of this application with reference to FIG. 15 and FIG. 16.

FIG. 15 shows a multi-carrier scheduling apparatus 400 according to an embodiment of this application. The apparatus 400 may be a terminal device or a network device, or may be a chip in the terminal device or the network device. The apparatus 400 includes a communication unit 410.

In a possible implementation, the apparatus 400 is configured to perform the procedures and the steps corresponding to the terminal device in the method 100. The communication unit 410 is configured to:

receive first configuration information, where the first configuration information is for configuring first downlink control information DCI and second DCI, the first DCI is for scheduling M carriers, the second DCI is for scheduling one carrier, M is an integer greater than 1, and a first monitoring bit length of the first DCI is different from a first monitoring bit length of the second DCI; and
monitor the first DCI and the second DCI based on a second monitoring bit length, where the second monitoring bit length is determined based on the first monitoring bit length of the first DCI and the first monitoring bit length of the second DCI.

The communication unit 410 may be configured to perform the procedures and the steps that correspond to the terminal device and that are in steps S 110, S120, and S130 in the method 100.

In another possible implementation, the apparatus 400 is configured to perform the procedures and the steps corresponding to the network device in the method 100. The communication unit 410 is configured to:

send first configuration information, where the first configuration information is for configuring first downlink control information DCI and second DCI, the first DCI is for scheduling M carriers, the second DCI is for scheduling one carrier, M is an integer greater than 1, and a first monitoring bit length of the first DCI is different from a first monitoring bit length of the second DCI; and

send at least one piece of the first DCI and the second DCI based on a second monitoring bit length, where the second monitoring bit length is determined based on the first monitoring bit length of the first DCI and a second monitoring bit length of the second DCI.

The communication unit 410 may be configured to perform the procedures and the steps that correspond to the network device and that are in steps S110 and S 120 in the method 100.

It should be understood that a specific process in which the units perform the foregoing corresponding steps in the foregoing methods is described in detail in the foregoing method embodiments. For brevity, details are not described herein.

In another possible implementation, the apparatus 400 is configured to perform the procedures and the steps corresponding to the terminal device in the method 200. The communication unit 410 is configured to:

receive first configuration information, where the first configuration information is for configuring first downlink control information DCI, the first DCI is for scheduling M carriers, a first carrier in the M carriers corresponds to a first secondary cell, and M is an integer greater than 1; and

monitor the first DCI based on a monitoring bit length of the first DCI, where monitoring bit lengths corresponding to the first secondary cell include the monitoring bit length of the first DCI, and a quantity of the monitoring bit lengths corresponding to the first secondary cell is less than or equal to a preset quantity.

In another possible implementation, the apparatus 400 is configured to perform the procedures and the steps corresponding to the network device in the method 200. The communication unit 410 is configured to:

send first configuration information, where the first configuration information is for configuring first downlink control information DCI, the first DCI is for scheduling M carriers, a first carrier in the M carriers corresponds to a first secondary cell, and M is an integer greater than 1; and

send the first DCI, where monitoring bit lengths corresponding to the first secondary cell include the monitoring bit length of the first DCI, and a quantity of the monitoring bit lengths corresponding to the first secondary cell is less than or equal to a preset quantity.

In another possible implementation, the apparatus 400 is configured to perform the procedures and the steps corresponding to the terminal device in the method 300. The communication unit 410 is configured to:

receive first configuration information, where the first configuration information is for configuring first downlink control information DCI, the first DCI is for scheduling M carriers, M is an integer greater than 1, the first DCI includes at least one of a first-type field and a second-type field, the first-type field includes at least one common field, the second-type field includes at least one independent field, information carried in the common field is common information of data channels transmitted on the M carriers, the independent field includes M sub-fields, the M sub-fields are in a one-to-one correspondence with the M carriers, and information carried in each sub-field is related to a data channel transmitted on a corresponding carrier; and

monitor the first DCI.

In another possible implementation, the apparatus 400 is configured to perform the procedures and the steps corresponding to the network device in the method 300. The communication unit 410 is configured to:

send first configuration information, where the first configuration information is for configuring first downlink control information DCI, the first DCI is for scheduling M carriers, M is an integer greater than 1, the first DCI includes at least one of a first-type field and a second-type field, the first-type field includes at least one common field, the second-type field includes at least one independent field, information carried in the common field is common information of data channels transmitted on the M carriers, the independent field includes M sub-fields, the M sub-fields are in a one-to-one correspondence with the M carriers, and information carried in each sub-field is related to a data channel transmitted on a corresponding carrier; and

send the first DCI.

It should be understood that the apparatus 400 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The apparatus 400 in the foregoing solutions has a function of implementing corresponding steps performed by an access network device or a core network device in the foregoing methods. The function may be implemented by hardware, or may be implemented by hardware executing corresponding software. The hardware or the software includes one or more modules corresponding to the foregoing function. For example, the communication unit may be replaced with a transmitter and a receiver, and another unit such as a processing unit may be replaced with a processor, to separately perform a sending and receiving operation and a related processing operation in the method embodiments. In addition, the communication unit in the apparatus 400 may alternatively include a sending unit and a receiving unit. For performing a receiving-related operation, a function of the communication unit may be understood as a receiving operation performed by the receiving unit. For performing a sending-related operation, a function of the communication unit may be understood as a sending operation performed by the sending unit.

In this embodiment of this application, the apparatus in FIG. 15 may alternatively be a chip or a chip system, for example, a system on chip (system on chip, SoC). Correspondingly, the transceiver unit may be a transceiver circuit of the chip. This is not limited herein.

FIG. 16 shows another multi-carrier scheduling apparatus 500 according to an embodiment of this application. It should be understood that the apparatus 500 may be specifically the terminal device or the network device in the foregoing embodiments, and may be configured to perform the steps and/or the procedures corresponding to the terminal device or the network device in the foregoing method embodiments.

The apparatus 500 includes a processor 510, a transceiver 520, and a memory 530. The processor 510, the transceiver 520, and the memory 530 communicate with each other by using an internal connection path. The processor 510 may implement functions of the processing unit 420 in various possible implementations of the apparatus 400. The transceiver 520 may implement functions of the communication unit 410 in various possible implementations of the apparatus 400. The memory 530 is configured to store instructions, and the processor 510 is configured to execute the instructions stored in the memory 530. In other words, the processor 510 may invoke the stored instructions to implement a function of the processing unit 420 in the apparatus 400, to control the transceiver 520 to send a signal and/or receive a signal.

Optionally, the memory 530 includes a read-only memory and a random access memory, and provide instructions and data to the processor. A part of the memory may further include a non-volatile random access memory. For example, the memory may further store information of a device type. The processor 510 may be configured to execute the instructions stored in the memory. When the processor 510 executes the instructions stored in the memory, the processor 510 is configured to perform the steps and/or the procedures corresponding to an access network device or a core network device in the foregoing method embodiments.

In a possible implementation, the apparatus 500 is configured to perform the procedures and the steps corresponding to the terminal device in the method 100.

The processor 510 controls the transceiver 520 to perform the following steps:

receive first configuration information, where the first configuration information is for configuring first downlink control information DCI and second DCI, the first DCI is for scheduling M carriers, the second DCI is for scheduling one carrier, M is an integer greater than 1, and a first monitoring bit length of the first DCI is different from a first monitoring bit length of the second DCI; and
monitor the first DCI and the second DCI based on a second monitoring bit length, where the second monitoring bit length is determined based on the first monitoring bit length of the first DCI and the first monitoring bit length of the second DCI.

In another possible implementation, the apparatus 500 is configured to perform the procedures and the steps corresponding to the network device in the method 100.

The processor 510 controls the transceiver 520 to perform the following steps:

send first configuration information, where the first configuration information is for configuring first downlink control information DCI and second DCI, the first DCI is for scheduling M carriers, the second DCI is for scheduling one carrier, M is an integer greater than 1, and a first monitoring bit length of the first DCI is different from a first monitoring bit length of the second DCI; and

send at least one piece of the first DCI and the second DCI based on a second monitoring bit length, where the second monitoring bit length is determined based on the first monitoring bit length of the first DCI and a second monitoring bit length of the second DCI.

In another possible implementation, the apparatus 500 is configured to perform the procedures and the steps corresponding to the terminal device in the method 200.
The processor 510 controls the transceiver 520 to perform the following steps:

receive first configuration information, where the first configuration information is for configuring first downlink control information DCI, the first DCI is for scheduling M carriers, a first carrier in the M carriers corresponds to a first secondary cell, and M is an integer greater than 1; and
monitor the first DCI based on a monitoring bit length of the first DCI, where monitoring bit lengths corresponding to the first secondary cell include the monitoring bit length of the first DCI, and a quantity of the monitoring bit lengths corresponding to the first secondary cell is less than or equal to a preset quantity.

In another possible implementation, the apparatus 500 is configured to perform procedures and steps corresponding to the network device in the method 200.
The processor 510 controls the transceiver 520 to perform the following steps:

send first configuration information, where the first configuration information is for configuring first downlink control information DCI, the first DCI is for scheduling M carriers, a first carrier in the M carriers corresponds to a first secondary cell, and M is an integer greater than 1; and
send the first DCI based on a monitoring bit length of the first DCI, where monitoring bit lengths corresponding to the first secondary cell include the monitoring bit length of the first DCI, and a quantity of the monitoring bit lengths corresponding to the first secondary cell is less than or equal to a preset quantity.

In another possible implementation, the apparatus 500 is configured to perform the procedures and the steps corresponding to the terminal device in the method 300.
The processor 510 controls the transceiver 520 to perform the following steps:

receive first configuration information, where the first configuration information is for configuring first downlink control information DCI, the first DCI is for scheduling M carriers, M is an integer greater than 1, the first DCI includes at least one of a first-type field and a second-type field, the first-type field includes at least one common field, the second-type field includes at least one independent field, information carried in the common field is common information of data channels transmitted on the M carriers, the independent field includes M sub-fields, the M sub-fields are in a one-to-one correspondence with the M carriers, and information carried in each sub-field is related to a data channel transmitted on a corresponding carrier; and
monitor the first DCI.

In another possible implementation, the apparatus 500 is configured to perform the procedures and the steps corresponding to the network device in the method 300.
The processor 510 controls the transceiver 520 to perform the following steps:

send first configuration information, where the first configuration information is for configuring first downlink control information DCI, the first DCI is for scheduling M carriers, M is an integer greater than 1, the first DCI includes at least one of a first-type field and a second-type field, the first-type field includes at least one common field, the second-type field includes at least one independent field, information carried in the common field is common information of data channels transmitted on the M carriers, the independent field includes M sub-fields, the M sub-fields are in a one-to-one correspondence with the M carriers, and information carried in each sub-field is related to a data channel transmitted on a corresponding carrier; and
send the first DCI.

It should be understood that a specific process in which the components perform the foregoing corresponding steps in the foregoing methods is described in detail in the foregoing method embodiments. For brevity, details are not described herein.
It should be understood that in embodiment of this application, the processor of the foregoing apparatus may be a central processing unit (central processing unit, CPU), or the processor may be another general-purpose processor, a digital signal processor (DSP), an application-specific integrated circuit (ASIC), a field-programmable gate array (FPGA), or another programmable logic device, discrete gate or transistor logic device, discrete hardware component, or the like. The general-purpose processor may be a microprocessor, or the processor may be any conventional processor or the like.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by a combination of hardware and software modules in the processor. A software unit may be located in a mature storage medium in the art, such as a random access memory, a flash memory, a read-only memory, a programmable read-only memory, an electrically erasable programmable memory, a register, or the like. The storage medium is located in the memory, and a processor reads instructions in the memory and completes the steps in the foregoing methods in combination with hardware of the processor. To avoid repetition, details are not described herein again.

It should be noted that, in the implementation of this application, the "protocol" may refer to a standard protocol in the communication field.

It should be further noted that, in embodiments of this application, "predefinition" may be implemented by pre-storing corresponding code or a corresponding table in a device (for example, including a station and an access point), or in another manner that may indicate related information. A specific implementation of the "predefinition" is not limited in this application. For example, "predefined" may be "defined in a protocol".

Terms "first" and "second" are merely intended for a purpose of description, and shall not be understood as an indication or implication of relative importance or implicit indication of a quantity of indicated technical features. A feature limited by "first" and "second" may explicitly or implicitly include one or more features.

In embodiments of this application, "at least one" means one or more, and "a plurality of" means two or more. "At least some members" means some or all members. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A multi-carrier scheduling method, comprising:

   receiving, by a terminal device, first configuration information, wherein the first configuration information is for configuring first downlink control information DCI and second DCI, the first DCI is for scheduling M carriers, the second DCI is for scheduling one carrier, M is an integer greater than 1, and a first monitoring bit length of the first DCI is different from a first monitoring bit length of the second DCI; and

   monitoring, by the terminal device, the first DCI and the second DCI based on a second monitoring bit length, wherein the second monitoring bit length is determined based on the first monitoring bit length of the first DCI and the first monitoring bit length of the second DCI.

2. The method according to claim 1, wherein the first configuration information is further for configuring third DCI, the third DCI is for scheduling N carriers, N is an integer greater than 1, a first monitoring bit length of the third DCI is different from a third monitoring bit length of the first DCI, and the first monitoring bit length of the first DCI is determined based on the third monitoring bit length of the first DCI and the first monitoring bit length of the third DCI; and

   the monitoring, by the terminal device, the first DCI and the second DCI based on a second monitoring bit length comprises:

   monitoring, by the terminal device, the first DCI, the second DCI, and the third DCI based on the second monitoring bit length.

3. The method according to claim 1 or 2, wherein the first configuration information is further for configuring fourth DCI and fifth DCI, and each of the fourth DCI and the fifth DCI is for scheduling one carrier; and

   the monitoring, by the terminal device, the first DCI and the second DCI based on a second monitoring bit length comprises:

   monitoring, by the terminal device, the first DCI, the second DCI, the fourth DCI, and the fifth DCI based on the second monitoring bit length, a fourth monitoring bit length, and a fifth monitoring bit length, wherein the second monitoring bit length, the fourth monitoring bit length, and the fifth monitoring bit length are different, the fourth monitoring bit length is a monitoring bit length of the fourth DCI, and the fifth monitoring bit length is a monitoring bit length of the fifth DCI.

4. The method according to claim 3, wherein the first configuration information is further for configuring the third DCI, sixth DCI, seventh DCI, eighth DCI, ninth DCI, and tenth DCI, the third DCI is for scheduling the N carriers, N is an integer greater than 1, the sixth DCI, the seventh DCI, the eighth DCI, the ninth DCI, and the tenth DCI each are for scheduling one carrier, the first monitoring bit length of the third DCI is different from the third monitoring bit length of the first DCI, and the first monitoring bit length of the first DCI is determined based on the third monitoring bit length of the first DCI and the first monitoring bit length of the third DCI; and

   the monitoring, by the terminal device, the first DCI, the second DCI, the fourth DCI, and the fifth DCI based on the second monitoring bit length, a fourth monitoring bit length, and a fifth monitoring bit length comprises:

   monitoring, by the terminal device, the first DCI, the second DCI, the third DCI, the fourth DCI, the fifth DCI, the sixth DCI, the seventh DCI, the eighth DCI, the ninth DCI, and the tenth DCI based on the second monitoring bit length, the fourth monitoring bit length, and the fifth monitoring bit length, wherein

   the first monitoring bit length of the second DCI is determined based on a sixth monitoring bit length of the second DCI and a first monitoring bit length of the sixth DCI, the fourth monitoring bit length is determined based on a first monitoring bit length of the fourth DCI and a first monitoring bit length of the seventh DCI, and the fifth monitoring bit length is determined based on a first monitoring bit length of the fifth DCI, a first monitoring bit length of the eighth DCI, a first monitoring bit length of the ninth DCI, and a first monitoring bit length of the tenth DCI; or

   the first monitoring bit length of the second DCI is determined based on a seventh monitoring bit length of the second DCI, a first monitoring bit length of the eighth DCI, a first monitoring bit length of the ninth DCI, and a first monitoring bit length of the tenth DCI, the fourth monitoring bit length is determined based on a first monitoring bit length of the fourth DCI and a first monitoring bit length of the seventh DCI, and the fifth monitoring bit length is determined based on a first monitoring bit length of the fifth DCI and a first monitoring bit length of the sixth DCI.

5. The method according to any one of claims 1 to 4, wherein the second DCI is in any one of the following formats: a DCI format 0_0 in a common search space CSS, a DCI format 1_0 in the CSS, a DCI format 0_0 in a user equipment-specific search space USS, a DCI format 1_0 in the USS, a DCI format 0_1 in the USS, a DCI format 1_1 in the USS, a DCI format 0_2 in the USS, and a DCI format 1_2 in the USS.

6. The method according to any one of claims 1 to 5, wherein the first DCI comprises at least one of a first-type field and a second-type field, the first-type field comprises at least one common field, the second-type field comprises at least one independent field, information carried in the common field is common information of data channels transmitted on the M carriers, the independent field comprises M sub-fields, the M sub-fields are in a one-to-one correspondence with the M carriers, and information carried in each sub-field is related to a data channel transmitted on a corresponding carrier.

7. The method according to claim 6, wherein the method further comprises:
receiving, by the terminal device, second configuration information, wherein the second configuration information comprises M pieces of carrier configuration information, the M pieces of carrier configuration information are in a one-to-one correspondence with the M carriers, a bit length of each sub-field of the independent field is determined based on corresponding carrier configuration information, and a bit length of the common field is determined in a predefined manner.

8. The method according to any one of claims 1 to 7, wherein the M carriers comprise a first carrier, and the second DCI is for scheduling the first carrier.

9. A multi-carrier scheduling method, comprising:

sending, by a network device, first configuration information, wherein the first configuration information is for configuring first downlink control information DCI and second DCI, the first DCI is for scheduling M carriers, the second DCI is for scheduling one carrier, M is an integer greater than 1, and a first monitoring bit length of the first DCI is different from a first monitoring bit length of the second DCI; and
sending, by the network device, at least one piece of the first DCI and the second DCI based on a second monitoring bit length, wherein the second monitoring bit length is determined based on the first monitoring bit length of the first DCI and a second monitoring bit length of the second DCI.

10. The method according to claim 9, wherein the first configuration information is further for configuring third DCI, the third DCI is for scheduling N carriers, N is an integer greater than 1, a first monitoring bit length of the third DCI is different from a third monitoring bit length of the first DCI, and the first monitoring bit length of the first DCI is determined based on the third monitoring bit length of the first DCI and the first monitoring bit length of the third DCI; and
the sending, by the network device, at least one piece of the first DCI and the second DCI based on a second monitoring bit length comprises:
sending, by the network device, at least one piece of the first DCI, the second DCI, and the third DCI based on the second monitoring bit length.

11. The method according to claim 9 or 10, wherein the first configuration information is further for configuring fourth DCI and fifth DCI, and each of the fourth DCI and the fifth DCI is for scheduling one carrier; and
the sending, by the network device, at least one piece of the first DCI and the second DCI based on a second monitoring bit length comprises:
sending, by the network device, at least one piece of the first DCI, the second DCI, the fourth DCI, and the fifth DCI based on at least one of the second monitoring bit length, a fourth monitoring bit length, and a fifth monitoring bit length, wherein the second monitoring bit length, the fourth monitoring bit length, and the fifth monitoring bit length are different, the fourth monitoring bit length is a monitoring bit length of the fourth DCI, and the fifth monitoring bit length is a monitoring bit length of the fifth DCI.

12. The method according to claim 11, wherein the first configuration information is further for configuring the third DCI, sixth DCI, seventh DCI, eighth DCI, ninth DCI, and tenth DCI, the third DCI is for scheduling the N carriers, N is an integer greater than 1, the sixth DCI, the seventh DCI, the eighth DCI, the ninth DCI, and the tenth DCI each are for scheduling one carrier, the first monitoring bit length of the third DCI is different from the first monitoring bit length of the first DCI, and the first monitoring bit length of the first DCI is determined based on the third monitoring bit length of the first DCI and the first monitoring bit length of the third DCI; and
the sending, by the network device, at least one piece of the first DCI, the second DCI, the fourth DCI, and the fifth DCI based on at least one of the second monitoring bit length, a fourth monitoring bit length, and a fifth monitoring bit length comprises:

sending, by the network device, at least one piece of the first DCI, the second DCI, the third DCI, the fourth DCI, the fifth DCI, the sixth DCI, the seventh DCI, the eighth DCI, the ninth DCI, and the tenth DCI based on at least one of the second monitoring bit length, the fourth monitoring bit length, and the fifth monitoring bit length, wherein

the first monitoring bit length of the second DCI is determined based on a sixth monitoring bit length of the second DCI and a first monitoring bit length of the sixth DCI, the fourth monitoring bit length is determined based on a first monitoring bit length of the fourth DCI and a first monitoring bit length of the seventh DCI, and the fifth monitoring bit length is determined based on a first monitoring bit length of the fifth DCI, a first monitoring bit length of the eighth DCI, a first monitoring bit length of the ninth DCI, and a first monitoring bit length of the tenth DCI; or

the first monitoring bit length of the second DCI is determined based on a seventh monitoring bit length of the second DCI, a first monitoring bit length of the eighth DCI, a first monitoring bit length of the ninth DCI, and a first monitoring bit length of the tenth DCI, the fourth monitoring bit length is determined based on a first monitoring bit length of the fourth DCI and a first monitoring bit length of the seventh DCI, and the fifth monitoring bit length is determined based on a first monitoring bit length of the fifth DCI and a first monitoring bit length of the sixth DCI.

13. The method according to any one of claims 9 to 12, wherein the second DCI is in any one of the following formats: a DCI format 0_0 in a common search space CSS, a DCI format 1_0 in the CSS, a DCI format 0_0 in a user-specific search space USS, a DCI format 1_0 in the USS, a DCI format 0_1 in the USS, a DCI format 1_1 in the USS, a DCI format 0_2 in the USS, and a DCI format 1_2 in the USS.

14. The method according to any one of claims 9 to 13, wherein the first DCI comprises at least one of a first-type field and a second-type field, the first-type field comprises at least one common field, the second-type field comprises at least one independent field, information carried in the common field is common information of data channels transmitted on the M carriers, the independent field comprises M sub-fields, the M sub-fields are in a one-to-one correspondence with the M carriers, and information carried in each sub-field is related to a data channel transmitted on a corresponding carrier.

15. The method according to claim 14, wherein the method further comprises:
sending, by the network device, second configuration information, wherein the second configuration information comprises M pieces of carrier configuration information, the M pieces of carrier configuration information are in a one-to-one correspondence with the M carriers, a bit length of each sub-field of the independent field is determined based on corresponding carrier configuration information, and a bit length of the common field is determined in a predefined manner.

16. The method according to any one of claims 9 to 15, wherein the M carriers comprise a first carrier, and the second DCI is for scheduling the first carrier.

17. A multi-carrier scheduling apparatus, comprising a communication unit, wherein the communication unit is configured to:

receive first configuration information, wherein the first configuration information is for configuring first downlink control information DCI and second DCI, the first DCI is for scheduling M carriers, the second DCI is for scheduling one carrier, M is an integer greater than 1, and a first monitoring bit length of the first DCI is different from a first monitoring bit length of the second DCI; and

monitor the first DCI and the second DCI based on a second monitoring bit length, wherein the second monitoring bit length is determined based on the first monitoring bit length of the first DCI and the first monitoring bit length of the second DCI.

18. The apparatus according to claim 17, wherein the first configuration information is further for configuring third DCI, the third DCI is for scheduling N carriers, N is an integer greater than 1, a first monitoring bit length of the third DCI is different from a third monitoring bit length of the first DCI, and the first monitoring bit length of the first DCI is determined based on the third monitoring bit length of the first DCI and the first monitoring bit length of the third DCI; and

the communication unit is specifically configured to:

monitor the first DCI, the second DCI, and the third DCI based on the second monitoring bit length.

19. The apparatus according to claim 17 or 18, wherein the first configuration information is further for configuring fourth DCI and fifth DCI, and each of the fourth DCI and the fifth DCI is for scheduling one carrier; and
the communication unit is specifically configured to:
monitor the first DCI, the second DCI, the fourth DCI, and the fifth DCI based on the second monitoring bit length, a fourth monitoring bit length, and a fifth monitoring bit length, wherein the second monitoring bit length, the fourth monitoring bit length, and the fifth monitoring bit length are different, the fourth monitoring bit length is a monitoring bit length of the fourth DCI, and the fifth monitoring bit length is a monitoring bit length of the fifth DCI.

20. The apparatus according to claim 19, wherein the first configuration information is further for configuring the third DCI, sixth DCI, seventh DCI, eighth DCI, ninth DCI, and tenth DCI, the third DCI is for scheduling the N carriers, N is an integer greater than 1, the sixth DCI, the seventh DCI, the eighth DCI, the ninth DCI, and the tenth DCI each are for scheduling one carrier, the first monitoring bit length of the third DCI is different from the third monitoring bit length of the first DCI, and the first monitoring bit length of the first DCI is determined based on the third monitoring bit length of the first DCI and the first monitoring bit length of the third DCI; and
the communication unit is specifically configured to:

monitor the first DCI, the second DCI, the third DCI, the fourth DCI, the fifth DCI, the sixth DCI, the seventh DCI, the eighth DCI, the ninth DCI, and the tenth DCI based on the second monitoring bit length, the fourth monitoring bit length, and the fifth monitoring bit length, wherein
the first monitoring bit length of the second DCI is determined based on a sixth monitoring bit length of the second DCI and a first monitoring bit length of the sixth DCI, the fourth monitoring bit length is determined based on a first monitoring bit length of the fourth DCI and a first monitoring bit length of the seventh DCI, and the fifth monitoring bit length is determined based on a first monitoring bit length of the fifth DCI, a first monitoring bit length of the eighth DCI, a first monitoring bit length of the ninth DCI, and a first monitoring bit length of the tenth DCI; or
the first monitoring bit length of the second DCI is determined based on a seventh monitoring bit length of the second DCI, a first monitoring bit length of the eighth DCI, a first monitoring bit length of the ninth DCI, and a first monitoring bit length of the tenth DCI, the fourth monitoring bit length is determined based on a first monitoring bit length of the fourth DCI and a first monitoring bit length of the seventh DCI, and the fifth monitoring bit length is determined based on a first monitoring bit length of the fifth DCI and a first monitoring bit length of the sixth DCI.

21. The apparatus according to any one of claims 17 to 20, wherein the second DCI is in any one of the following formats:
a DCI format 0_0 in a common search space CSS, a DCI format 1_0 in the CSS, a DCI format 0_0 in a user-specific search space USS, a DCI format 1_0 in the USS, a DCI format 0_1 in the USS, a DCI format 1_1 in the USS, a DCI format 0_2 in the USS, and a DCI format 1_2 in the USS.

22. The apparatus according to any one of claims 17 to 21, wherein the first DCI comprises at least one of a first-type field and a second-type field, the first-type field comprises at least one common field, the second-type field comprises at least one independent field, information carried in the common field is common information of data channels transmitted on the M carriers, the independent field comprises M sub-fields, the M sub-fields are in a one-to-one correspondence with the M carriers, and information carried in each sub-field is related to a data channel transmitted on a corresponding carrier.

23. The apparatus according to claim 22, wherein the communication unit is further configured to:
receive second configuration information, wherein the second configuration information comprises M pieces of carrier configuration information, the M pieces of carrier configuration information are in a one-to-one correspondence with the M carriers, a bit length of each sub-field of the independent field is determined based on corresponding carrier configuration information, and a bit length of the common field is determined in a predefined manner.

24. The apparatus according to any one of claims 17 to 23, wherein the M carriers comprise a first carrier, and the second DCI is for scheduling the first carrier.

25. A multi-carrier scheduling apparatus, comprising a communication unit, wherein the communication unit is configured to:

send first configuration information, wherein the first configuration information is for configuring first downlink control information DCI and second DCI, the first DCI is for scheduling M carriers, the second DCI is for scheduling one carrier, M is an integer greater than 1, and a first monitoring bit length of the first DCI is different from a first monitoring bit length of the second DCI; and

send at least one piece of the first DCI and the second DCI based on a second monitoring bit length, wherein the second monitoring bit length is determined based on the first monitoring bit length of the first DCI and a second monitoring bit length of the second DCI.

26. The apparatus according to claim 25, wherein the first configuration information is further for configuring third DCI, the third DCI is for scheduling N carriers, N is an integer greater than 1, a first monitoring bit length of the third DCI is different from a third monitoring bit length of the first DCI, and the first monitoring bit length of the first DCI is determined based on the third monitoring bit length of the first DCI and the first monitoring bit length of the third DCI; and
the communication unit is specifically configured to:
send at least one piece of the first DCI, the second DCI, and the third DCI based on the second monitoring bit length.

27. The apparatus according to claim 25 or 26, wherein the first configuration information is further for configuring fourth DCI and fifth DCI, and each of the fourth DCI and the fifth DCI is for scheduling one carrier; and
the communication unit is specifically configured to:
send at least one piece of the first DCI, the second DCI, the fourth DCI, and the fifth DCI based on at least one of the second monitoring bit length, a fourth monitoring bit length, and a fifth monitoring bit length, wherein the second monitoring bit length, the fourth monitoring bit length, and the fifth monitoring bit length are different, the fourth monitoring bit length is a monitoring bit length of the fourth DCI, and the fifth monitoring bit length is a monitoring bit length of the fifth DCI.

28. The apparatus according to claim 27, wherein the first configuration information is further for configuring the third DCI, sixth DCI, seventh DCI, eighth DCI, ninth DCI, and tenth DCI, the third DCI is for scheduling the N carriers, N is an integer greater than 1, the sixth DCI, the seventh DCI, the eighth DCI, the ninth DCI, and the tenth DCI each are for scheduling one carrier, the first monitoring bit length of the third DCI is different from the third monitoring bit length of the first DCI, and the first monitoring bit length of the first DCI is determined based on the third monitoring bit length of the first DCI and the first monitoring bit length of the third DCI; and
the communication unit is specifically configured to:

send at least one piece of the first DCI, the second DCI, the third DCI, the fourth DCI, the fifth DCI, the sixth DCI, the seventh DCI, the eighth DCI, the ninth DCI, and the tenth DCI based on at least one of the second monitoring bit length, the fourth monitoring bit length, and the fifth monitoring bit length, wherein
the first monitoring bit length of the second DCI is determined based on a sixth monitoring bit length of the second DCI and a first monitoring bit length of the sixth DCI, the fourth monitoring bit length is determined based on a first monitoring bit length of the fourth DCI and a first monitoring bit length of the seventh DCI, and the fifth monitoring bit length is determined based on a first monitoring bit length of the fifth DCI, a first monitoring bit length of the eighth DCI, a first monitoring bit length of the ninth DCI, and a first monitoring bit length of the tenth DCI; or
the first monitoring bit length of the second DCI is determined based on a seventh monitoring bit length of the second DCI, a first monitoring bit length of the eighth DCI, a first monitoring bit length of the ninth DCI, and a first monitoring bit length of the tenth DCI, the fourth monitoring bit length is determined based on a first monitoring bit length of the fourth DCI and a first monitoring bit length of the seventh DCI, and the fifth monitoring bit length is determined based on a first monitoring bit length of the fifth DCI and a first monitoring bit length of the sixth DCI.

29. The apparatus according to any one of claims 25 to 28, wherein the second DCI is in any one of the following formats:
a DCI format 0_0 in a common search space CSS, a DCI format 1_0 in the CSS, a DCI format 0_0 in a user-specific search space USS, a DCI format 1_0 in the USS, a DCI format 0_1 in the USS, a DCI format 1_1 in the USS, a DCI format 0_2 in the USS, and a DCI format 1_2 in the USS.

30. The apparatus according to any one of claims 25 to 29, wherein the first DCI comprises at least one of a first-type field and a second-type field, the first-type field comprises at least one common field, the second-type field comprises at least one independent field, information carried in the common field is common information of data channels transmitted on the M carriers, the independent field comprises M sub-fields, the M sub-fields are in a one-to-one correspondence with the M carriers, and information carried in each sub-field is related to a data channel transmitted on a corresponding carrier.

**31.** The apparatus according to claim 30, wherein the communication unit is further configured to:
send second configuration information, wherein the second configuration information comprises M pieces of carrier configuration information, the M pieces of carrier configuration information are in a one-to-one correspondence with the M carriers, a bit length of each sub-field of the independent field is determined based on corresponding carrier configuration information, and a bit length of the common field is determined in a predefined manner.

**32.** The apparatus according to any one of claims 25 to 31, wherein the M carriers comprise a first carrier, and the second DCI is for scheduling the first carrier.

**33.** A multi-carrier scheduling apparatus, comprising:

a memory, configured to store computer instructions; and
a processor, configured to invoke the computer instructions stored in the memory, to perform the method according to any one of claims 1 to 8, or perform the method according to any one of claims 9 to 16.

**34.** A computer-readable storage medium, configured to store computer instructions, wherein the computer instructions are for implementing the method according to any one of claims 1 to 8 or the method according to any one of claims 9 to 16.

**35.** A computer program product, comprising computer instructions, wherein the computer instructions are for implementing the method according to any one of claims 1 to 8 or the method according to any one of claims 9 to 16.

**36.** A chip, wherein the chip comprises:

a memory, configured to store instructions; and
a processor, configured to invoke the instructions from the memory and run the instructions, so that a communication device in which the chip system is installed performs the method according to any one of claims 1 to 8 or the method according to any one of claims 9 to 16.

FIG. 1

Pcell–component
carrier 1 | PDCCH 1 (DCI 1) ⟶ PDSCH 1

Scell 1–component
carrier 2 | PDCCH 2 (DCI 2) ⟶ PDSCH 2

Scell 2–component
carrier 3 | PDCCH 3 (DCI 3) ⟶ PDSCH 3

(a)

Pcell–component
carrier 1 | PDCCH 1 (DCI 1) ⟶ PDSCH 1
PDCCH 2 (DCI 2)

Scell 1–component
carrier 2 | PDSCH 2

(b)

Pcell–component
carrier 1 | PDCCH 1 (DCI 1)
PDCCH 2 (DCI 2)

Scell 1–component
carrier 2 | PDSCH 1

Scell 2–component
carrier 3 | PDSCH 2

(c)

FIG. 2

```
┌──────────┐
│  PDCCH   │───────────────────────────────────────────┐
│  (DCI)   │──────────────┐                             │
└────┬─────┘              ▼                             ▼
     │            ┌───────────────┐            ┌───────────────┐
     │            │    PDSCH 1     │            │    PDSCH 2     │
     │            └───────┬───────┘            └───────┬───────┘
     ▼                    ▼                            ▼
┌──────────────────────────────┐        ┌──────────────────────────────┐
│          Carrier 1           │        │          Carrier 2           │
└──────────────────────────────┘        └──────────────────────────────┘
```

FIG. 3

```
┌──────────┐
│  PDCCH   │──────────────────────────┐
│  (DCI)   │                          │
└────┬─────┘                          ▼
     │     ┌─────────────────────────────────────────────────────┐
     │     │                       PDSCH                          │
     │     └─────────┬──────────────────────────────────┬────────┘
     ▼               ▼                                  ▼
┌──────────────────────────────┐        ┌──────────────────────────────┐
│          Carrier 1           │        │          Carrier 2           │
└──────────────────────────────┘        └──────────────────────────────┘
```

FIG. 4

FIG. 5

DCI format 0_0 non-SUL

DCI format 0_0 SUL

⬇

DCI format 0_0 non-SUL

DCI format 0_0 SUL | Padding

(a)

DCI format 0_0 non-SUL

DCI format 0_0 SUL

⬇

DCI format 0_0 non-SUL | Padding

DCI format 0_0 SUL

(b)

DCI format 0_0

DCI format 1_0

⬇

DCI format 0_0

DCI format 1_0 | Padding

(c)

DCI format 0_0

DCI format 1_0

⬇

DCI format 0_0 | Padding

DCI format 1_0

(d)

FIG. 6

| DCI format 0_1 |
| DCI format 0_0/1_0 |

1-bit padding

| DCI format 0_1 | ↘ |
| DCI format 0_0/1_0 |

(a)

| DCI format 1_1 |
| DCI format 0_0/1_0 |

1-bit padding

| DCI format 1_1 | ↘ |
| DCI format 0_0/1_0 |

(b)

FIG. 7

| DCI format 0_3 |
| DCI format 1_3 |

| DCI format 0_3 |
| DCI format 1_3 | ↗ |

(a)

Padding

| DCI format 0_3 |
| DCI format 1_3 |

Padding

| DCI format 0_3 | ↘ |
| DCI format 1_3 |

(b)

FIG. 8

DCI format 0_1

DCI format 1_1

⬇

DCI format 0_1

DCI format 1_1 | Padding

(a)

DCI format 0_1

DCI format 1_1

⬇

DCI format 0_1 | Padding

DCI format 1_1

(b)

FIG. 9

DCI format 0_2

DCI format 1_2

⬇

DCI format 0_2

DCI format 1_2 | Padding

(a)

DCI format 0_2

DCI format 1_2

⬇

DCI format 0_2 | Padding

DCI format 1_2

(b)

FIG. 10

Pcell–component
carrier 1

PDCCH (mDCI)

Scell 1–component
carrier 2

(a)

Pcell–component
carrier 1

Scell 1–component
carrier 2

PDCCH (mDCI)

(b)

Pcell–component
carrier 1

PDCCH (mDCI)

Scell 1–component
carrier 2

Scell 2–component
carrier 3

(c)

Scell 1–component
carrier 2

PDCCH (mDCI)

Scell 2–component
carrier 3

(d)

FIG. 11

```
┌─────────────┐                              ┌─────────────┐
│  Terminal   │                              │   Network   │
│   device    │                              │   device    │
└─────────────┘                              └─────────────┘
       │                                            │
       │    S110. First configuration information, for
       │◄──────  configuring first DCI and second DCI
       │                                            │
       │                                            │
       │         S120. Send at least one of the first
       │◄──────  DCI and the second DCI based on a  ──
       │          second monitoring bit length      │
       │                                            │
┌──────┴──────────┐                                 │
│ S130. Monitor the first                           │
│ DCI and the second DCI                            │
│ based on the second                               │
│ monitoring bit length                             │
└──────┬──────────┘                                 │
       │                                            │
       │                                            │
```

FIG. 12

```
┌─────────────┐                              ┌─────────────┐
│  Terminal   │                              │   Network   │
│   device    │                              │   device    │
└─────────────┘                              └─────────────┘
       │                                            │
       │    S210. First configuration information,
       │◄──────     for configuring first DCI    ──
       │                                            │
       │         S220. Send the first DCI based on a
       │◄──────  monitoring bit length of the first DCI  ──
       │                                            │
┌──────┴──────────┐                                 │
│ S230. Monitor the first                           │
│ DCI based on the                                  │
│ monitoring bit length of                          │
│ the first DCI                                     │
└──────┬──────────┘                                 │
       │                                            │
```

FIG. 13

Terminal device

Network device

S310. First configuration information, for configuring first DCI

S320. Send the first DCI

S330. Monitor the first DCI

FIG. 14

Apparatus 400

Communication unit 410

FIG. 15

Apparatus 500

Processor 510

Memory 530

Transceiver 520

FIG. 16

## INTERNATIONAL SEARCH REPORT

International application No.

**PCT/CN2022/090460**

**A. CLASSIFICATION OF SUBJECT MATTER**

H04W 72/12(2009.01)i; H04L 5/00(2006.01)i; H04L 1/00(2006.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNTXT; ENTXTC; WPABSC; VEN; ENTXT; CNKI; IEEE; 3GPP: 多, 一个, 载波, 调度, 配置, 下行控制信息, 对齐, 监听, 盲检, multiple, single, carrier, schedul+, config+, dci, alignment, monitoring, blind detect+

**C. DOCUMENTS CONSIDERED TO BE RELEVANT**

| Category* | Citation of document, with indication, where appropriate, of the relevant passages | Relevant to claim No. |
|---|---|---|
| Y | CN 111148230 A (HUAWEI TECHNOLOGIES CO., LTD.) 12 May 2020 (2020-05-12) description, paragraphs [0025]-[0029] and [0100]-[0397], and figures 2 and 3 | 1-36 |
| Y | ZTE. ""Discussion on Multi-cell PDSCH Scheduling Via A Single DCI"" *3GPP TSG RAN WG1 Meeting #104-e e-Meeting R1-2101789*, 25 January 2021 (2021-01-25), pp. 1-10 | 1-36 |
| A | CN 110870363 A (GUANGDONG OPPO MOBILE COMMUNICATIONS CO., LTD.) 06 March 2020 (2020-03-06) entire document | 1-36 |
| A | CN 113286372 A (VIVO COMMUNICATION TECHNOLOGY CO., LTD.) 20 August 2021 (2021-08-20) entire document | 1-36 |
| A | CN 111865512 A (DATANG MOBILE COMMUNICATIONS EQUIPMENT CO., LTD.) 30 October 2020 (2020-10-30) entire document | 1-36 |
| A | HUAWEI et al. ""On NR Carrier Aggregation"" *3GPP TSG RAN WG1 Meeting #90 R1-1712160*, 12 August 2017 (2017-08-12), entire document | 1-36 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 July 2022** | **20 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/090460**

| Patent document cited in search report | | | Publication date (day/month/year) | Patent family member(s) | | | Publication date (day/month/year) |
|---|---|---|---|---|---|---|---|
| CN | 111148230 | A | 12 May 2020 | None | | | |
| CN | 110870363 | A | 06 March 2020 | MX | 2019015668 | A | 26 February 2020 |
| | | | | EP | 3637897 | A1 | 15 April 2020 |
| | | | | RU | 2752659 | C1 | 29 July 2021 |
| | | | | AU | 2017427108 | A1 | 19 December 2019 |
| | | | | ZA | 201908110 | B | 28 April 2021 |
| | | | | CA | 3065845 | A1 | 14 February 2019 |
| | | | | US | 2020163061 | A1 | 21 May 2020 |
| | | | | BR | 112019028087 | A2 | 28 July 2020 |
| | | | | SG | 11201911475 T | A | 27 February 2020 |
| | | | | WO | 2019028890 | A1 | 14 February 2019 |
| | | | | KR | 20200035257 | A | 02 April 2020 |
| | | | | JP | 2020533830 | A | 19 November 2020 |
| CN | 113286372 | A | 20 August 2021 | None | | | |
| CN | 111865512 | A | 30 October 2020 | WO | 2020220998 | A1 | 05 November 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111010280